(19) Europäisches Patentamt
European Patent Office
Office européen des brevets

(11) **EP 4 131 961 A1**

(12) **EUROPEAN PATENT APPLICATION**
published in accordance with Art. 153(4) EPC

(43) Date of publication:
**08.02.2023 Bulletin 2023/06**

(21) Application number: **21788865.0**

(22) Date of filing: **06.04.2021**

(51) International Patent Classification (IPC):
**H04N 19/597** (2014.01)　　**H04N 19/70** (2014.01)
**H04N 19/42** (2014.01)　　**H04N 19/137** (2014.01)
**H04N 19/60** (2014.01)　　**G06T 9/40** (1995.01)
**H04N 19/423** (2014.01)　　**H04N 19/184** (2014.01)
**G06T 9/00** (1995.01)

(52) Cooperative Patent Classification (CPC):
**G06T 9/001; H04L 65/61; H04L 65/70;
H04L 65/762; H04N 21/2393; H04N 21/4728;
H04N 21/6587; H04N 21/816; H04N 21/85406**

(86) International application number:
**PCT/KR2021/004261**

(87) International publication number:
**WO 2021/210837 (21.10.2021 Gazette 2021/42)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.04.2020　KR 20200044881
23.06.2020　KR 20200076679**

(71) Applicant: **LG Electronics, Inc.
Yeongdeungpo-gu
Seoul 07336 (KR)**

(72) Inventor: **OH, Sejin
Seoul 06772 (KR)**

(74) Representative: **Mooser, Sebastian Thomas
Wuesthoff & Wuesthoff
Patentanwälte PartG mbB
Schweigerstraße 2
81541 München (DE)**

(54) **DEVICE FOR TRANSMITTING POINT CLOUD DATA, METHOD FOR TRANSMITTING POINT CLOUD DATA, DEVICE FOR RECEIVING POINT CLOUD DATA, AND METHOD FOR RECEIVING POINT CLOUD DATA**

(57)　　Disclosed herein is a point cloud data transmission method including encoding point cloud data, encapsulating the point cloud data, and transmitting point cloud data. Disclosed herein is a point cloud data reception method including receiving point cloud data, decapsulating the point cloud data, and decoding the point cloud data.

FIG. 1

**Description**

[Technical Field]

Embodiments relate to a method and apparatus for processing point cloud content.

[Background Art]

Point cloud content is content represented by a point cloud, which is a set of points belonging to a coordinate system representing a three-dimensional space. The point cloud content may express media configured in three dimensions, and is used to provide various services such as virtual reality (VR), augmented reality (AR), mixed reality (MR), XR (Extended Reality), and self-driving services. However, tens of thousands to hundreds of thousands of point data are required to represent point cloud content. Therefore, there is a need for a method for efficiently processing a large amount of point data.

[Disclosure]

[Technical Problem]

Embodiments provide an apparatus and method for efficiently processing point cloud data. Embodiments provide a point cloud data processing method and apparatus for addressing latency and encoding/decoding complexity.
Additional advantages, objects, and features of the disclosure will be set forth in part in the description which follows and in part will become apparent to those having ordinary skill in the art upon examination of the following or may be learned from practice of the disclosure. The objectives and other advantages of the disclosure may be realized and attained by the structure particularly pointed out in the written description and claims hereof as well as the appended drawings.

[Technical Solution]

To achieve these objects and other advantages and in accordance with the purpose of the disclosure, as embodied and broadly described herein, a method for transmitting point cloud data may include encoding point cloud data, encapsulating the point cloud data, and transmitting the point cloud data. In another aspect of the present disclosure, a method for receiving point cloud data may include receiving point cloud data, decapsulating the point cloud data, and decoding the point cloud data.

[Advantageous Effects]

A point cloud data transmission method, a point cloud data transmission device, a point cloud data reception method, and a point cloud data reception device according to embodiments may provide a good-quality point cloud service.
A point cloud data transmission method, a point cloud data transmission device, a point cloud data reception method, and a point cloud data reception device according to embodiments may achieve various video codec methods.
A point cloud data transmission method, a point cloud data transmission device, a point cloud data reception method, and a point cloud data reception device according to embodiments may provide universal point cloud content such as an autonomous driving service.

[Description of Drawings]

The accompanying drawings, which are included to provide a further understanding of the disclosure and are incorporated in and constitute a part of this application, illustrate embodiment(s) of the disclosure and together with the description serve to explain the principle of the disclosure. In the drawings:

FIG. 1 illustrates an exemplary point cloud content providing system according to embodiments;
FIG. 2 is a block diagram illustrating a point cloud content providing operation according to embodiments;
FIG. 3 illustrates an exemplary process of capturing a point cloud video according to embodiments;
FIG. 4 illustrates an exemplary block diagram of point cloud video encoder according to embodiments;
FIG. 5 illustrates an example of voxels in a 3D space according to embodiments;
FIG. 6 illustrates an example of octree and occupancy code according to embodiments;

FIG. 7 illustrates an example of a neighbor node pattern according to embodiments;

FIG. 8 illustrates an example of point configuration of a point cloud content for each LOD according to embodiments;

FIG. 9 illustrates an example of point configuration of a point cloud content for each LOD according to embodiments;

FIG. 10 illustrates an example of a block diagram of a point cloud video decoder according to embodiments;

FIG. 11 illustrates an example of a point cloud video decoder according to embodiments;

FIG. 12 illustrates a configuration for point cloud video encoding of a transmission device according to embodiments;

FIG. 13 illustrates a configuration for point cloud video decoding of a reception device according to embodiments;

FIG. 14 illustrates an architecture for storing and streaming of G-PCC-based point cloud data according to embodiments;

FIG. 15 illustrates an example of storage and transmission of point cloud data according to embodiments;

FIG. 16 illustrates an example of a reception device according to embodiments;

FIG. 17 illustrates an exemplary structure operatively connectable with a method/device for transmitting and receiving point cloud data according to embodiments;

FIG. 18 illustrates an operation of encapsulating a part of a G-PCC bitstream according to embodiments;

FIG. 19 shows a sequence parameter set according to embodiments;

FIG. 20 shows a tile inventory (tile parameter set) according to embodiments;

FIG. 21 shows a geometry parameter set according to embodiments;

FIG. 22 shows an attribute parameter set according to embodiments;

FIG. 23 shows a geometry slice header according to embodiments;

FIG. 24 shows an attribute slice according to embodiments;

FIG. 25 shows a structure of a G-PCC parameter set according to embodiments;

FIG. 26 shows a sample structure for single-track encapsulation according to embodiments;

FIG. 27 shows a multi-track container according to embodiments;

FIG. 28 shows a sample structure according to embodiments;

FIG. 29 shows a parameter set contained in a timed metadata track according to embodiments;

FIG. 30 shows a tile inventory according to embodiments;

FIG. 31 shows a G-PCC 3D tile information structure according to embodiments;

FIG. 32 shows a structure of G-PCC 3D tile inventory information according to embodiments;

FIG. 33 shows a G-PCC base track according to embodiments;

FIG. 34 illustrates a method of transmitting point cloud data according to embodiments; and

FIG. 35 illustrates a method of receiving point cloud data according to embodiments.

[Best Mode]

Preferred embodiments of the embodiments will be specifically described, examples of which are shown in the accompanying drawings. DETAILED DESCRIPTION OF THE PREFERRED EMBODIMENTS The detailed description below with reference to the accompanying drawings is intended to describe preferred embodiments of the embodiments rather than merely representing embodiments that may be implemented according to the embodiments of the embodiments. The following detailed description includes details to provide a thorough understanding of the embodiments. However, it will be apparent to one skilled in the art that embodiments may be practiced without these details.

Most of the terms used in the embodiments are widely used in the field. Although selected from the general ones, some terms are arbitrarily chosen by the applicant and their meanings are detailed in the following description as necessary. Therefore, the embodiments should be understood based on the intended meaning of the term rather than the simple name or meaning of the term.

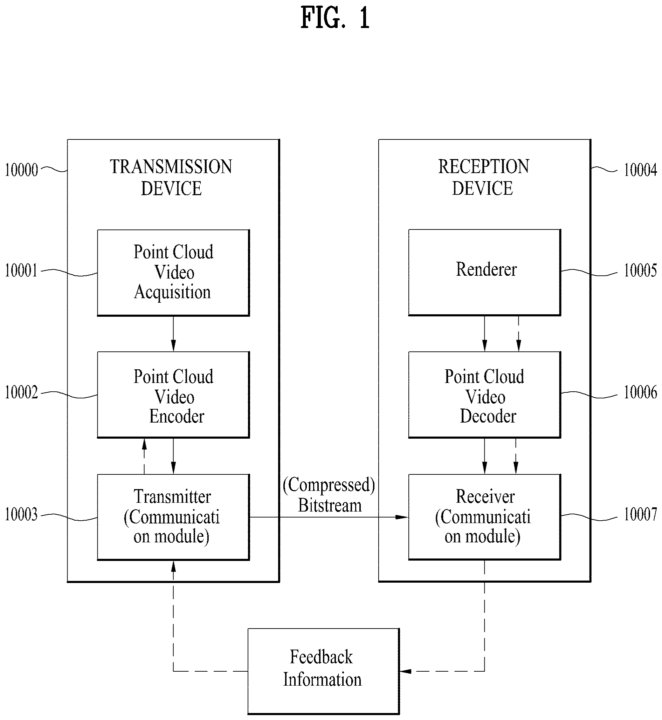

FIG. 1 shows an exemplary point cloud content providing system according to embodiments.

The point cloud content providing system illustrated in FIG. 1 may include a transmission device 10000 and a reception device 10004. The transmission device 10000 and the reception device 10004 are capable of wired or wireless communication to transmit and receive point cloud data.

The point cloud data transmission device 10000 according to the embodiments may secure and process point cloud video (or point cloud content) and transmit the same. According to embodiments, the transmission device 10000 may include a fixed station, a base transceiver system (BTS), a network, an artificial intelligence (AI) device and/or system, a robot, an AR/VR/XR device and/or server. According to embodiments, the transmission device 10000 may include a device, a robot, a vehicle, an AR/VR/XR device, a portable device, a home appliance, an Internet of Thing (IoT) device, and an AI device/server which are configured to perform communication with a base station and/or other wireless devices using a radio access technology (e.g., 5G New RAT (NR), Long Term Evolution (LTE)).

The transmission device 10000 according to the embodiments includes a point cloud video acquisition unit 10001, a point cloud video encoder 10002, and/or a transmitter (or communication module) 10003.

The point cloud video acquisition unit 10001 according to the embodiments acquires a point cloud video through a processing process such as capture, synthesis, or generation. The point cloud video is point cloud content represented by a point cloud, which is a set of points positioned in a 3D space, and may be referred to as point cloud video data. The point cloud video according to the embodiments may include one or more frames. One frame represents a still image/picture. Therefore, the point cloud video may include a point cloud image/frame/picture, and may be referred to as a point cloud image, frame, or picture.

The point cloud video encoder 10002 according to the embodiments encodes the acquired point cloud video data. The point cloud video encoder 10002 may encode the point cloud video data based on point cloud compression coding. The point cloud compression coding according to the embodiments may include geometry-based point cloud compression (G-PCC) coding and/or video-based point cloud compression (V-PCC) coding or next-generation coding. The point cloud compression coding according to the embodiments is not limited to the above-described embodiment. The point cloud video encoder 10002 may output a bitstream containing the encoded point cloud video data. The bitstream may contain not only the encoded point cloud video data, but also signaling information related to encoding of the point cloud video data.

The transmitter 10003 according to the embodiments transmits the bitstream containing the encoded point cloud video data. The bitstream according to the embodiments is encapsulated in a file or segment (for example, a streaming segment), and is transmitted over various networks such as a broadcasting network and/or a broadband network. Although not shown in the figure, the transmission device 10000 may include an encapsulator (or an encapsulation module) configured to perform an encapsulation operation. According to embodiments, the encapsulator may be included in the transmitter 10003. According to embodiments, the file or segment may be transmitted to the reception device 10004 over a network, or stored in a digital storage medium (e.g., USB, SD, CD, DVD, Blu-ray, HDD, SSD, etc.). The transmitter 10003 according to the embodiments is capable of wired/wireless communication with the reception device 10004 (or the receiver 10005) over a network of 4G, 5G, 6G, etc. In addition, the transmitter may perform a necessary data processing operation according to the network system (e.g., a 4G, 5G or 6G communication network system). The transmission device 10000 may transmit the encapsulated data in an on-demand manner.

The reception device 10004 according to the embodiments includes a receiver 10005, a point cloud video decoder 10006, and/or a renderer 10007. According to embodiments, the reception device 10004 may include a device, a robot, a vehicle, an AR/VR/XR device, a portable device, a home appliance, an Internet of Things (IoT) device, and an AI device/server which are configured to perform communication with a base station and/or other wireless devices using a radio access technology (e.g., 5G New RAT (NR), Long Term Evolution (LTE)).

The receiver 10005 according to the embodiments receives the bitstream containing the point cloud video data or the file/segment in which the bitstream is encapsulated from the network or storage medium. The receiver 10005 may perform necessary data processing according to the network system (for example, a communication network system of 4G, 5G, 6G, etc.). The receiver 10005 according to the embodiments may decapsulate the received file/segment and output a bitstream. According to embodiments, the receiver 10005 may include a decapsulator (or a decapsulation module) configured to perform a decapsulation operation. The decapsulator may be implemented as an element (or component) separate from the receiver 10005.

The point cloud video decoder 10006 decodes the bitstream containing the point cloud video data. The point cloud video decoder 10006 may decode the point cloud video data according to the method by which the point cloud video data is encoded (for example, in a reverse process of the operation of the point cloud video encoder 10002). Accordingly, the point cloud video decoder 10006 may decode the point cloud video data by performing point cloud decompression coding, which is the inverse process of the point cloud compression. The point cloud decompression coding includes G-PCC coding.

The renderer 10007 renders the decoded point cloud video data. The renderer 10007 may output point cloud content by rendering not only the point cloud video data but also audio data. According to embodiments, the renderer 10007 may include a display configured to display the point cloud content. According to embodiments, the display may be implemented as a separate device or component rather than being included in the renderer 10007.

The arrows indicated by dotted lines in the drawing represent a transmission path of feedback information acquired by the reception device 10004. The feedback information is information for reflecting interactivity with a user who consumes the point cloud content, and includes information about the user (e.g., head orientation information, viewport information, and the like). In particular, when the point cloud content is content for a service (e.g., self-driving service, etc.) that requires interaction with the user, the feedback information may be provided to the content transmitting side (e.g., the transmission device 10000) and/or the service provider. According to embodiments, the feedback information may be used in the reception device 10004 as well as the transmission device 10000, or may not be provided.

The head orientation information according to embodiments is information about the user's head position, orientation, angle, motion, and the like. The reception device 10004 according to the embodiments may calculate the viewport information based on the head orientation information. The viewport information may be information about a region of a point cloud video that the user is viewing. A viewpoint is a point through which the user is viewing the point cloud video, and may refer to a center point of the viewport region. That is, the viewport is a region centered on the viewpoint, and the size and shape of the region may be determined by a field of view (FOV). Accordingly, the reception device 10004 may extract the viewport information based on a vertical or horizontal FOV supported by the device in addition to the head orientation information. Also, the reception device 10004 performs gaze analysis or the like to check the way the user consumes a point cloud, a region that the user gazes at in the point cloud video, a gaze time, and the like. According to embodiments, the reception device 10004 may transmit feedback information including the result of the gaze analysis to the transmission device 10000. The feedback information according to the embodiments may be acquired in the rendering and/or display process. The feedback information according to the embodiments may be secured by one or more sensors included in the reception device 10004. According to embodiments, the feedback information may be secured by the renderer 10007 or a separate external element (or device, component, or the like). The dotted lines in FIG. 1 represent a process of transmitting the feedback information secured by the renderer 10007. The point cloud content providing system may process (encode/decode) point cloud data based on the feedback information. Accordingly, the point cloud video decoder 10006 may perform a decoding operation based on the feedback information. The reception device 10004 may transmit the feedback information to the transmission device 10000. The transmission device 10000 (or the point cloud video encoder 10002) may perform an encoding operation based on the feedback information. Accordingly, the point cloud content providing system may efficiently process necessary data (e.g., point cloud data corresponding to the user's head position) based on the feedback information rather than processing (encoding/decoding) the entire point cloud data, and provide point cloud content to the user.

According to embodiments, the transmission device 10000 may be called an encoder, a transmitting device, a transmitter, a transmission system, or the like, and the reception device 10004 may be called a decoder, a receiving device, a receiver, a reception system, or the like.

The point cloud data processed in the point cloud content providing system of FIG. 1 according to embodiments (through a series of processes of acquisition/encoding/transmission/decoding/rendering) may be referred to as point cloud content data or point cloud video data. According to embodiments, the point cloud content data may be used as a concept covering metadata or signaling information related to the point cloud data.

The elements of the point cloud content providing system illustrated in FIG. 1 may be implemented by hardware, software, a processor, and/or a combination thereof.

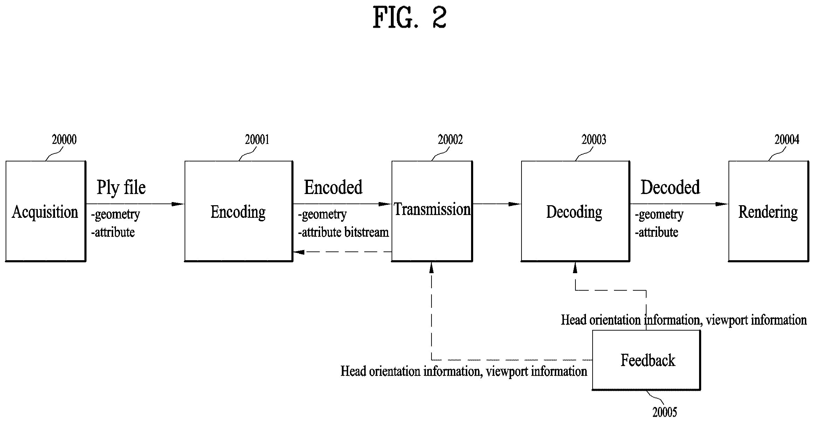

FIG. 2 is a block diagram illustrating a point cloud content providing operation according to embodiments.

The block diagram of FIG. 2 shows the operation of the point cloud content providing system described in FIG. 1. As described above, the point cloud content providing system may process point cloud data based on point cloud compression coding (e.g., G-PCC).

The point cloud content providing system according to the embodiments (for example, the point cloud transmission device 10000 or the point cloud video acquisition unit 10001) may acquire a point cloud video (20000). The point cloud video is represented by a point cloud belonging to a coordinate system for expressing a 3D space. The point cloud video according to the embodiments may include a Ply (Polygon File format or the Stanford Triangle format) file. When the point cloud video has one or more frames, the acquired point cloud video may include one or more Ply files. The Ply files contain point cloud data, such as point geometry and/or attributes. The geometry includes positions of points. The position of each point may be represented by parameters (for example, values of the X, Y, and Z axes) representing a three-dimensional coordinate system (e.g., a coordinate system composed of X, Y and Z axes). The attributes include attributes of points (e.g., information about texture, color (in YCbCr or RGB), reflectance r, transparency, etc. of each point). A point has one or more attributes. For example, a point may have an attribute that is a color, or two attributes that are color and reflectance. According to embodiments, the geometry may be called positions, geometry information, geometry data, or the like, and the attribute may be called attributes, attribute information, attribute data, or the like. The point cloud content providing system (for example, the point cloud transmission device 10000 or the point cloud video acquisition unit 10001) may secure point cloud data from information (e.g., depth information, color information, etc.) related to the acquisition process of the point cloud video.

The point cloud content providing system (for example, the transmission device 10000 or the point cloud video encoder 10002) according to the embodiments may encode the point cloud data (20001). The point cloud content providing system may encode the point cloud data based on point cloud compression coding. As described above, the point cloud data may include the geometry and attributes of a point. Accordingly, the point cloud content providing system may perform geometry encoding of encoding the geometry and output a geometry bitstream. The point cloud content providing system may perform attribute encoding of encoding attributes and output an attribute bitstream. According to embodiments, the point cloud content providing system may perform the attribute encoding based on the geometry encoding. The geometry bitstream and the attribute bitstream according to the embodiments may be multiplexed and output as one bitstream. The bitstream according to the embodiments may further contain signaling information related to the geometry encoding and attribute encoding.

The point cloud content providing system (for example, the transmission device 10000 or the transmitter 10003) according to the embodiments may transmit the encoded point cloud data (20002). As illustrated in FIG. 1, the encoded point cloud data may be represented by a geometry bitstream and an attribute bitstream. In addition, the encoded point cloud data may be transmitted in the form of a bitstream together with signaling information related to encoding of the point cloud data (for example, signaling information related to the geometry encoding and the attribute encoding). The point cloud content providing system may encapsulate a bitstream that carries the encoded point cloud data and transmit the same in the form of a file or segment.

The point cloud content providing system (for example, the reception device 10004 or the receiver 10005) according to the embodiments may receive the bitstream containing the encoded point cloud data. In addition, the point cloud content providing system (for example, the reception device 10004 or the receiver 10005) may demultiplex the bitstream.

The point cloud content providing system (e.g., the reception device 10004 or the point cloud video decoder 10005) may decode the encoded point cloud data (e.g., the geometry bitstream, the attribute bitstream) transmitted in the bitstream. The point cloud content providing system (for example, the reception device 10004 or the point cloud video decoder 10005) may decode the point cloud video data based on the signaling information related to encoding of the point cloud video data contained in the bitstream. The point cloud content providing system (for example, the reception device 10004 or the point cloud video decoder 10005) may decode the geometry bitstream to reconstruct the positions (geometry) of points. The point cloud content providing system may reconstruct the attributes of the points by decoding the attribute bitstream based on the reconstructed geometry. The point cloud content providing system (for example, the reception device 10004 or the point cloud video decoder 10005) may reconstruct the point cloud video based on the positions according to the reconstructed geometry and the decoded attributes.

The point cloud content providing system according to the embodiments (for example, the reception device 10004 or the renderer 10007) may render the decoded point cloud data (20004). The point cloud content providing system (for example, the reception device 10004 or the renderer 10007) may render the geometry and attributes decoded through the decoding process, using various rendering methods. Points in the point cloud content may be rendered to a vertex having a certain thickness, a cube having a specific minimum size centered on the corresponding vertex position, or a circle centered on the corresponding vertex position. All or part of the rendered point cloud content is provided to the user through a display (e.g., a VR/AR display, a general display, etc.).

The point cloud content providing system (for example, the reception device 10004) according to the embodiments may secure feedback information (20005). The point cloud content providing system may encode and/or decode point cloud data based on the feedback information. The feedback information and the operation of the point cloud content providing system according to the embodiments are the same as the feedback information and the operation described with reference to FIG. 1, and thus detailed description thereof is omitted.

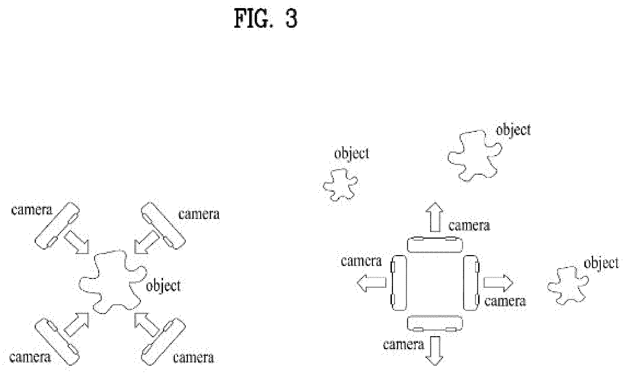

FIG. 3 illustrates an exemplary process of capturing a point cloud video according to embodiments.

FIG. 3 illustrates an exemplary point cloud video capture process of the point cloud content providing system described with reference to FIGS. 1 to 2.

Point cloud content includes a point cloud video (images and/or videos) representing an object and/or environment located in various 3D spaces (e.g., a 3D space representing a real environment, a 3D space representing a virtual environment, etc.). Accordingly, the point cloud content providing system according to the embodiments may capture a point cloud video using one or more cameras (e.g., an infrared camera capable of securing depth information, an RGB camera capable of extracting color information corresponding to the depth information, etc.), a projector (e.g., an infrared pattern projector to secure depth information), a LiDAR, or the like. The point cloud content providing system according to the embodiments may extract the shape of geometry composed of points in a 3D space from the depth information and extract the attributes of each point from the color information to secure point cloud data. An image and/or video according to the embodiments may be captured based on at least one of the inward-facing technique and the outward-facing technique.

The left part of FIG. 3 illustrates the inward-facing technique. The inward-facing technique refers to a technique of capturing images a central object with one or more cameras (or camera sensors) positioned around the central object. The inward-facing technique may be used to generate point cloud content providing a 360-degree image of a key object to the user (e.g., VR/AR content providing a 360-degree image of an object (e.g., a key object such as a character, player, object, or actor) to the user).

The right part of FIG. 3 illustrates the outward-facing technique. The outward-facing technique refers to a technique of capturing images an environment of a central object rather than the central object with one or more cameras (or camera sensors) positioned around the central object. The outward-facing technique may be used to generate point cloud content for providing a surrounding environment that appears from the user's point of view (e.g., content representing an external environment that may be provided to a user of a self-driving vehicle).

As shown in the figure, the point cloud content may be generated based on the capturing operation of one or more cameras. In this case, the coordinate system may differ among the cameras, and accordingly the point cloud content providing system may calibrate one or more cameras to set a global coordinate system before the capturing operation. In addition, the point cloud content providing system may generate point cloud content by synthesizing an arbitrary image and/or video with an image and/or video captured by the above-described capture technique. The point cloud content providing system may not perform the capturing operation described in FIG. 3 when it generates point cloud content representing a virtual space. The point cloud content providing system according to the embodiments may perform post-processing on the captured image and/or video. In other words, the point cloud content providing system may remove an unwanted area (for example, a background), recognize a space to which the captured images and/or videos are connected, and, when there is a spatial hole, perform an operation of filling the spatial hole.

The point cloud content providing system may generate one piece of point cloud content by performing coordinate transformation on points of the point cloud video secured from each camera. The point cloud content providing system may perform coordinate transformation on the points based on the coordinates of the position of each camera. Accordingly, the point cloud content providing system may generate content representing one wide range, or may generate point cloud content having a high density of points.

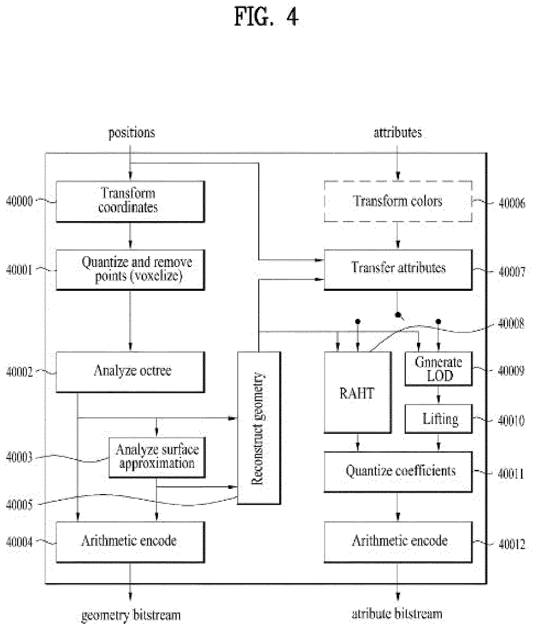

FIG. 4 illustrates an exemplary point cloud video encoder according to embodiments.

FIG. 4 shows an example of the point cloud video encoder 10002 of FIG. 1. The point cloud video encoder reconstructs and encodes point cloud data (e.g., positions and/or attributes of the points) to adjust the quality of the point cloud content (to, for example, lossless, lossy, or near-lossless) according to the network condition or applications. When the overall size of the point cloud content is large (e.g., point cloud content of 60 Gbps is given for 30 fps), the point cloud content providing system may fail to stream the content in real time. Accordingly, the point cloud content providing system may reconstruct the point cloud content based on the maximum target bitrate to provide the same in accordance with the network environment or the like.

As described with reference to FIGS. 1 to 2, the point cloud video encoder may perform geometry encoding and attribute encoding. The geometry encoding is performed before the attribute encoding.

The point cloud video encoder according to the embodiments includes a coordinate transformer (Transform coordinates) 40000, a quantizer (Quantize and remove points (voxelize)) 40001, an octree analyzer (Analyze octree) 40002, and a surface approximation analyzer (Analyze surface approximation) 40003, an arithmetic encoder (Arithmetic encode) 40004, a geometric reconstructor (Reconstruct geometry) 40005, a color transformer (Transform colors) 40006, an attribute transformer (Transform attributes) 40007, a RAHT transformer (RAHT) 40008, an LOD generator (Generate LOD) 40009, a lifting transformer (Lifting) 40010, a coefficient quantizer (Quantize coefficients) 40011, and/or an arithmetic encoder (Arithmetic encode) 40012.

The coordinate transformer 40000, the quantizer 40001, the octree analyzer 40002, the surface approximation analyzer 40003, the arithmetic encoder 40004, and the geometry reconstructor 40005 may perform geometry encoding. The geometry encoding according to the embodiments may include octree geometry coding, direct coding, trisoup geometry encoding, and entropy encoding. The direct coding and trisoup geometry encoding are applied selectively or in combination. The geometry encoding is not limited to the above-described example.

As shown in the figure, the coordinate transformer 40000 according to the embodiments receives positions and transforms the same into coordinates. For example, the positions may be transformed into position information in a three-dimensional space (for example, a three-dimensional space represented by an XYZ coordinate system). The position information in the three-dimensional space according to the embodiments may be referred to as geometry information.

The quantizer 40001 according to the embodiments quantizes the geometry. For example, the quantizer 40001 may quantize the points based on a minimum position value of all points (for example, a minimum value on each of the X, Y, and Z axes). The quantizer 40001 performs a quantization operation of multiplying the difference between the minimum position value and the position value of each point by a preset quantization scale value and then finding the nearest integer value by rounding the value obtained through the multiplication. Thus, one or more points may have the same quantized position (or position value). The quantizer 40001 according to the embodiments performs voxelization based on the quantized positions to reconstruct quantized points. The voxelization means a minimum unit representing position information in 3D spacePoints of point cloud content (or 3D point cloud video) according to the embodiments may be included in one or more voxels. The term voxel, which is a compound of volume and pixel, refers to a 3D cubic space generated when a 3D space is divided into units (unit=1.0) based on the axes representing the 3D space (e.g., X-axis, Y-axis, and Z-axis). The quantizer 40001 may match groups of points in the 3D space with voxels. According to embodiments, one voxel may include only one point. According to embodiments, one voxel may include one or more points. In order to express one voxel as one point, the position of the center point of a voxel may be set based on the positions of one or more points included in the voxel. In this case, attributes of all positions included in one voxel may be combined and assigned to the voxel.

The octree analyzer 40002 according to the embodiments performs octree geometry coding (or octree coding) to present voxels in an octree structure. The octree structure represents points matched with voxels, based on the octal tree structure.

The surface approximation analyzer 40003 according to the embodiments may analyze and approximate the octree. The octree analysis and approximation according to the embodiments is a process of analyzing a region containing a plurality of points to efficiently provide octree and voxelization.

The arithmetic encoder 40004 according to the embodiments performs entropy encoding on the octree and/or the approximated octree. For example, the encoding scheme includes arithmetic encoding. As a result of the encoding, a geometry bitstream is generated.

The color transformer 40006, the attribute transformer 40007, the RAHT transformer 40008, the LOD generator 40009, the lifting transformer 40010, the coefficient quantizer 40011, and/or the arithmetic encoder 40012 perform attribute encoding. As described above, one point may have one or more attributes. The attribute encoding according to the embodiments is equally applied to the attributes that one point has. However, when an attribute (e.g., color) includes one or more elements, attribute encoding is independently applied to each element. The attribute encoding according to the embodiments includes color transform coding, attribute transform coding, region adaptive hierarchical transform (RAHT) coding, interpolation-based hierarchical nearest-neighbor prediction (prediction transform) coding, and interpolation-based hierarchical nearest-neighbor prediction with an update/lifting step (lifting transform) coding. Depending on the point cloud content, the RAHT coding, the prediction transform coding and the lifting transform coding described above may be selectively used, or a combination of one or more of the coding schemes may be used. The attribute encoding according to the embodiments is not limited to the above-described example.

The color transformer 40006 according to the embodiments performs color transform coding of transforming color values (or textures) included in the attributes. For example, the color transformer 40006 may transform the format of color information (for example, from RGB to YCbCr). The operation of the color transformer 40006 according to embodiments may be optionally applied according to the color values included in the attributes.

The geometry reconstructor 40005 according to the embodiments reconstructs (decompresses) the octree and/or the approximated octree. The geometry reconstructor 40005 reconstructs the octree/voxels based on the result of analyzing the distribution of points. The reconstructed octree/voxels may be referred to as reconstructed geometry (restored geometry).

The attribute transformer 40007 according to the embodiments performs attribute transformation to transform the attributes based on the reconstructed geometry and/or the positions on which geometry encoding is not performed. As described above, since the attributes are dependent on the geometry, the attribute transformer 40007 may transform the attributes based on the reconstructed geometry information. For example, based on the position value of a point included in a voxel, the attribute transformer 40007 may transform the attribute of the point at the position. As described above, when the position of the center of a voxel is set based on the positions of one or more points included in the voxel, the attribute transformer 40007 transforms the attributes of the one or more points. When the trisoup geometry encoding is performed, the attribute transformer 40007 may transform the attributes based on the trisoup geometry encoding.

The attribute transformer 40007 may perform the attribute transformation by calculating the average of attributes or attribute values of neighboring points (e.g., color or reflectance of each point) within a specific position/radius from the position (or position value) of the center of each voxel. The attribute transformer 40007 may apply a weight according to the distance from the center to each point in calculating the average. Accordingly, each voxel has a position and a calculated attribute (or attribute value).

The attribute transformer 40007 may search for neighboring points existing within a specific position/radius from the position of the center of each voxel based on the K-D tree or the Morton code. The K-D tree is a binary search tree and supports a data structure capable of managing points based on the positions such that nearest neighbor search (NNS) can be performed quickly. The Morton code is generated by presenting coordinates (e.g., (x, y, z)) representing 3D positions of all points as bit values and mixing the bits. For example, when the coordinates representing the position of a point are (5, 9, 1), the bit values for the coordinates are (0101, 1001, 0001). Mixing the bit values according to the bit index in order of z, y, and x yields 010001000111. This value is expressed as a decimal number of 1095. That is, the Morton code value of the point having coordinates (5, 9, 1) is 1095. The attribute transformer 40007 may order the points based on the Morton code values and perform NNS through a depth-first traversal process. After the attribute transformation operation, the K-D tree or the Morton code is used when the NNS is needed in another transformation process for attribute coding.

As shown in the figure, the transformed attributes are input to the RAHT transformer 40008 and/or the LOD generator 40009.

The RAHT transformer 40008 according to the embodiments performs RAHT coding for predicting attribute information based on the reconstructed geometry information. For example, the RAHT transformer 40008 may predict attribute information of a node at a higher level in the octree based on the attribute information associated with a node at a lower level in the octree.

The LOD generator 40009 according to the embodiments generates a level of detail (LOD). The LOD according to the embodiments is a degree of detail of point cloud content. As the LOD value decrease, it indicates that the detail of the point cloud content is degraded. As the LOD value increases, it indicates that the detail of the point cloud content is enhanced. Points may be classified by the LOD.

The lifting transformer 40010 according to the embodiments performs lifting transform coding of transforming the attributes a point cloud based on weights. As described above, lifting transform coding may be optionally applied.

The coefficient quantizer 40011 according to the embodiments quantizes the attribute-coded attributes based on coefficients.

The arithmetic encoder 40012 according to the embodiments encodes the quantized attributes based on arithmetic coding.

Although not shown in the figure, the elements of the point cloud video encoder of FIG. 4 may be implemented by hardware including one or more processors or integrated circuits configured to communicate with one or more memories included in the point cloud content providing apparatus, software, firmware, or a combination thereof. The one or more processors may perform at least one of the operations and/or functions of the elements of the point cloud video encoder of FIG. 4 described above. Additionally, the one or more processors may operate or execute a set of software programs and/or instructions for performing the operations and/or functions of the elements of the point cloud video encoder of FIG. 4. The one or more memories according to the embodiments may include a high speed random access memory, or include a non-volatile memory (e.g., one or more magnetic disk storage devices, flash memory devices, or other non-volatile solid-state memory devices).

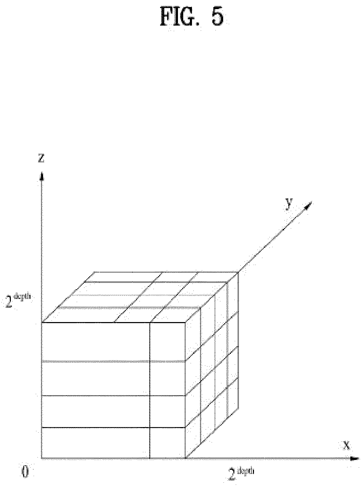

FIG. 5 shows an example of voxels according to embodiments.

FIG.5 shows voxels positioned in a 3D space represented by a coordinate system composed of three axes, which are the X-axis, the Y-axis, and the Z-axis. As described with reference to FIG. 4, the point cloud video encoder (e.g., the quantizer 40001) may perform voxelization. Voxel refers to a 3D cubic space generated when a 3D space is divided into units (unit=1.0) based on the axes representing the 3D space (e.g., X-axis, Y-axis, and Z-axis). FIG. 5 shows an example of voxels generated through an octree structure in which a cubical axis-aligned bounding box defined by two poles (0, 0, 0) and (2d, 2d, 2d) is recursively subdivided. One voxel includes at least one point. The spatial coordinates of a voxel may be estimated from the positional relationship with a voxel group. As described above, a voxel has an attribute (such as color or reflectance) like pixels of a 2D image/video. The details of the voxel are the same as those described with reference to FIG. 4, and therefore a description thereof is omitted.

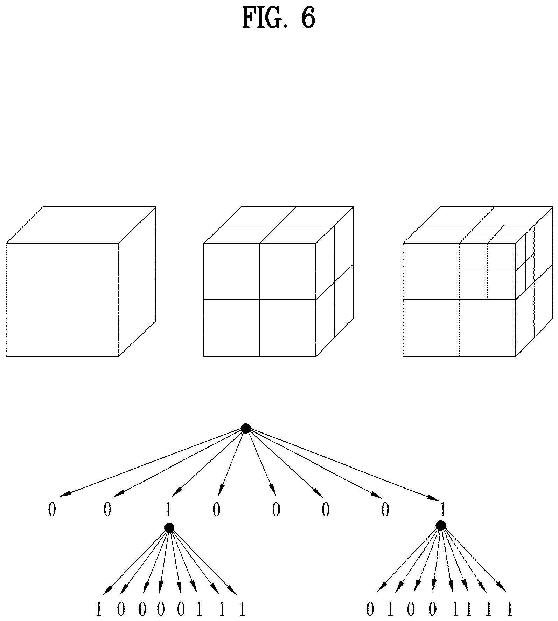

FIG. 6 shows an example of an octree and occupancy code according to embodiments.

As described with reference to FIGS. 1 to 4, the point cloud content providing system (point cloud video encoder 10002) or the octree analyzer 40002 of the point cloud video encoder performs octree geometry coding (or octree coding) based on an octree structure to efficiently manage the region and/or position of the voxel.

The upper part of FIG. 6 shows an octree structure. The 3D space of the point cloud content according to the embodiments is represented by axes (e.g., X-axis, Y-axis, and Z-axis) of the coordinate system. The octree structure is created by recursive subdividing of a cubical axis-aligned bounding box defined by two poles (0, 0, 0) and (2d, 2d, 2d). Here, 2d may be set to a value constituting the smallest bounding box surrounding all points of the point cloud content (or point cloud video). Here, d denotes the depth of the octree. The value of d is determined in Equation 1. In Equation 1, (xintn, yintn, zintn) denotes the positions (or position values) of quantized points.

[Equation 1]

$$\mathrm{d} = Ceil\left(Log2\left(Max\left(x_n^{int}, y_n^{int}, z_n^{int}, n = 1, \dots, N\right) + 1\right)\right)$$

As shown in the middle of the upper part of FIG. 6, the entire 3D space may be divided into eight spaces according to partition. Each divided space is represented by a cube with six faces. As shown in the upper right of FIG. 6, each of the eight spaces is divided again based on the axes of the coordinate system (e.g., X-axis, Y-axis, and Z-axis). Accordingly, each space is divided into eight smaller spaces. The divided smaller space is also represented by a cube with six faces. This partitioning scheme is applied until the leaf node of the octree becomes a voxel.

The lower part of FIG. 6 shows an octree occupancy code. The occupancy code of the octree is generated to indicate whether each of the eight divided spaces generated by dividing one space contains at least one point. Accordingly, a single occupancy code is represented by eight child nodes. Each child node represents the occupancy of a divided space, and the child node has a value in 1 bit. Accordingly, the occupancy code is represented as an 8-bit code. That is, when at least one point is contained in the space corresponding to a child node, the node is assigned a value of 1. When no point is contained in the space corresponding to the child node (the space is empty), the node is assigned a value of 0. Since the occupancy code shown in FIG. 6 is 00100001, it indicates that the spaces corresponding to the third child node and the eighth child node among the eight child nodes each contain at least one point. As shown in the figure, each of the third child node and the eighth child node has eight child nodes, and the child nodes are represented by an 8-bit occupancy code. The figure shows that the occupancy code of the third child node is 10000111, and the occupancy code of the eighth child node is 01001111. The point cloud video encoder (for example, the arithmetic encoder 40004) according to the embodiments may perform entropy encoding on the occupancy codes. In order to increase the compression efficiency, the point cloud video encoder may perform intra/inter-coding on the occupancy codes. The reception device (for example, the reception device 10004 or the point cloud video decoder 10006) according to the embodiments reconstructs the octree based on the occupancy codes.

The point cloud video encoder (for example, the octree analyzer 40002) according to the embodiments may perform voxelization and octree coding to store the positions of points. However, points are not always evenly distributed in the 3D space, and accordingly there may be a specific region in which fewer points are present. Accordingly, it is inefficient to perform voxelization for the entire 3D space. For example, when a specific region contains few points, voxelization does not need to be performed in the specific region.

Accordingly, for the above-described specific region (or a node other than the leaf node of the octree), the point cloud video encoder according to the embodiments may skip voxelization and perform direct coding to directly code the positions of points included in the specific region. The coordinates of a direct coding point according to the embodiments are referred to as direct coding mode (DCM). The point cloud video encoder according to the embodiments may also perform trisoup geometry encoding, which is to reconstruct the positions of the points in the specific region (or node) based on voxels, based on a surface model. The trisoup geometry encoding is geometry encoding that represents an object as a series of triangular meshes. Accordingly, the point cloud video decoder may generate a point cloud from the mesh surface. The direct coding and trisoup geometry encoding according to the embodiments may be selectively performed. In addition, the direct coding and trisoup geometry encoding according to the embodiments may be performed in combination with octree geometry coding (or octree coding).

To perform direct coding, the option to use the direct mode for applying direct coding should be activated. A node to which direct coding is to be applied is not a leaf node, and points less than a threshold should be present within a specific node. In addition, the total number of points to which direct coding is to be applied should not exceed a preset threshold. When the conditions above are satisfied, the point cloud video encoder (or the arithmetic encoder 40004) according to the embodiments may perform entropy coding on the positions (or position values) of the points.

The point cloud video encoder (for example, the surface approximation analyzer 40003) according to the embodiments may determine a specific level of the octree (a level less than the depth d of the octree), and the surface model may be used staring with that level to perform trisoup geometry encoding to reconstruct the positions of points in the region of the node based on voxels (Trisoup mode). The point cloud video encoder according to the embodiments may specify a level at which trisoup geometry encoding is to be applied. For example, when the specific level is equal to the depth of the octree, the point cloud video encoder does not operate in the trisoup mode. In other words, the point cloud video encoder according to the embodiments may operate in the trisoup mode only when the specified level is less than the value of depth of the octree. The 3D cube region of the nodes at the specified level according to the embodiments is called a block. One block may include one or more voxels. The block or voxel may correspond to a brick. Geometry is represented as a surface within each block. The surface according to embodiments may intersect with each edge of a block at most once.

One block has 12 edges, and accordingly there are at least 12 intersections in one block. Each intersection is called a vertex (or apex). A vertex present along an edge is detected when there is at least one occupied voxel adjacent to the edge among all blocks sharing the edge. The occupied voxel according to the embodiments refers to a voxel containing a point. The position of the vertex detected along the edge is the average position along the edge of all voxels adjacent to the edge among all blocks sharing the edge.

Once the vertex is detected, the point cloud video encoder according to the embodiments may perform entropy encoding on the starting point (x, y, z) of the edge, the direction vector ($\Delta$x, $\Delta$y, $\Delta$z) of the edge, and the vertex position value (relative position value within the edge). When the trisoup geometry encoding is applied, the point cloud video encoder according to the embodiments (for example, the geometry reconstructor 40005) may generate restored geometry (reconstructed geometry) by performing the triangle reconstruction, up-sampling, and voxelization processes.

The vertices positioned at the edge of the block determine a surface that passes through the block. The surface according to the embodiments is a non-planar polygon. In the triangle reconstruction process, a surface represented by a triangle is reconstructed based on the starting point of the edge, the direction vector of the edge, and the position values of the vertices. The triangle reconstruction process is performed according to Equation 2 by: i) calculating the centroid value of each vertex, ii) subtracting the center value from each vertex value, and iii) estimating the sum of the squares of the values obtained by the subtraction.

[Equation 2]

$$\text{①} \begin{bmatrix} \mu_x \\ \mu_y \\ \mu_z \end{bmatrix} - \frac{1}{n}\sum_{i-1}^{n}\begin{bmatrix} x_i \\ y_i \\ z_i \end{bmatrix} \quad \text{②} \begin{bmatrix} \bar{x}_i \\ \bar{y}_i \\ \bar{z}_i \end{bmatrix} - \begin{bmatrix} x_i \\ y_i \\ z_i \end{bmatrix} - \begin{bmatrix} \mu_x \\ \mu_y \\ \mu_z \end{bmatrix} \quad \text{③} \begin{bmatrix} \sigma_x^2 \\ \sigma_y^2 \\ \sigma_z^2 \end{bmatrix} - \sum_{i-1}^{n}\begin{bmatrix} \bar{x}_i^2 \\ \bar{y}_i^2 \\ \bar{z}_i^2 \end{bmatrix}$$

Then, the minimum value of the sum is estimated, and the projection process is performed according to the axis with the minimum value. For example, when the element x is the minimum, each vertex is projected on the x-axis with respect to the center of the block, and projected on the (y, z) plane. When the values obtained through projection on the (y, z) plane are (ai, bi), the value of θ is estimated through atan2(bi, ai), and the vertices are ordered based on the value of θ. The table 1 below shows a combination of vertices for creating a triangle according to the number of the vertices. The vertices are ordered from 1 to n. The table 1 below shows that for four vertices, two triangles may be constructed according to combinations of vertices. The first triangle may consist of vertices 1, 2, and 3 among the ordered vertices, and the second triangle may consist of vertices 3, 4, and 1 among the ordered vertices.

TABLE 1 Triangles formed from vertices ordered 1,...,n

| n | Triangles |
|---|-----------|
| 3 | (1,2,3) |
| 4 | (1,2,3), (3,4,1) |
| 5 | (1,2,3), (3,4,5), (5,1,3) |
| 6 | (1,2,3), (3,4,5), (5,6,1), (1,3,5) |
| 7 | (1,2,3), (3,4,5), (5,6,7), (7,1,3), (3,5,7) |
| 8 | (1,2,3), (3,4,5), (5,6,7), (7,8,1), (1,3,5), (5,7,1) |
| 9 | (1,2,3), (3,4,5), (5,6,7), (7,8,9), (9,1,3), (3,5,7), (7,9,3) |
| 10 | (1,2,3), (3,4,5), (5,6,7), (7,8,9), (9,10,1), (1,3,5), (5,7,9), (9,1,5) |
| 11 | (1,2,3), (3,4,5), (5,6,7), (7,8,9), (9,10,11), (11,1,3), (3,5,7), (7,9,11), (11,3,7) |
| 12 | (1,2,3), (3,4,5), (5,6,7), (7,8,9), (9,10,11), (11,12,1), (1,3,5), (5,7,9), 9,11,1), (1,5,9) |

The upsampling process is performed to add points in the middle along the edge of the triangle and perform voxelization. The added points are generated based on the upsampling factor and the width of the block. The added points are called refined vertices. The point cloud video encoder according to the embodiments may voxelize the refined vertices. In addition, the point cloud video encoder may perform attribute encoding based on the voxelized positions (or position values).

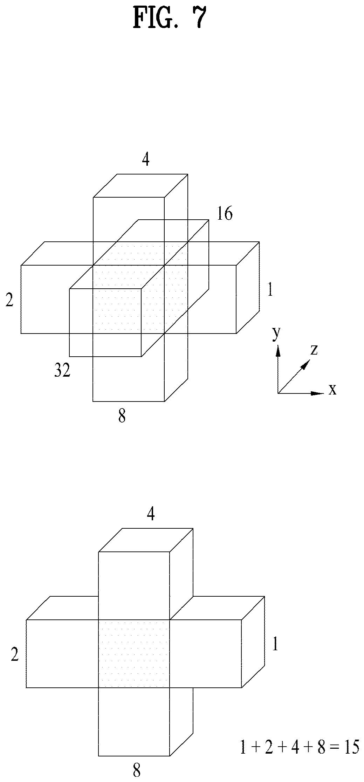

FIG. 7 shows an example of a neighbor node pattern according to embodiments.

In order to increase the compression efficiency of the point cloud video, the point cloud video encoder according to the embodiments may perform entropy coding based on context adaptive arithmetic coding.

As described with reference to FIGS. 1 to 6, the point cloud content providing system or the point cloud video encoder 10002 of FIG. 1, or the point cloud video encoder or arithmetic encoder 40004 of FIG. 4 may perform entropy coding on the occupancy code immediately. In addition, the point cloud content providing system or the point cloud video encoder may perform entropy encoding (intra encoding) based on the occupancy code of the current node and the occupancy of neighboring nodes, or perform entropy encoding (inter encoding) based on the occupancy code of the previous frame. A frame according to embodiments represents a set of point cloud videos generated at the same time. The compression efficiency of intra encoding/inter encoding according to the embodiments may depend on the number of neighboring nodes that are referenced. When the bits increase, the operation becomes complicated, but the encoding may be biased to one side, which may increase the compression efficiency. For example, when a 3-bit context is given, coding needs to be performed using $2^3 = 8$ methods. The part divided for coding affects the complexity of implementation. Accordingly, it is necessary to meet an appropriate level of compression efficiency and complexity.

FIG. 7 illustrates a process of obtaining an occupancy pattern based on the occupancy of neighbor nodes. The point cloud video encoder according to the embodiments determines occupancy of neighbor nodes of each node of the octree and obtains a value of a neighbor pattern. The neighbor node pattern is used to infer the occupancy pattern of the node. The up part of FIG. 7 shows a cube corresponding to a node (a cube positioned in the middle) and six cubes (neighbor nodes) sharing at least one face with the cube. The nodes shown in the figure are nodes of the same depth. The numbers shown in the figure represent weights (1, 2, 4, 8, 16, and 32) associated with the six nodes, respectively. The weights are assigned sequentially according to the positions of neighboring nodes.

The lower part of FIG. 7 shows neighbor node pattern values. A neighbor node pattern value is the sum of values multiplied by the weight of an occupied neighbor node (a neighbor node having a point). Accordingly, the neighbor node pattern values are 0 to 63. When the neighbor node pattern value is 0, it indicates that there is no node having a point (no occupied node) among the neighbor nodes of the node. When the neighbor node pattern value is 63, it indicates that all neighbor nodes are occupied nodes. As shown in the figure, since neighbor nodes to which weights 1, 2, 4, and 8 are assigned are occupied nodes, the neighbor node pattern value is 15, the sum of 1, 2, 4, and 8. The point cloud video encoder may perform coding according to the neighbor node pattern value (for example, when the neighbor node pattern value is 63, 64 kinds of coding may be performed). According to embodiments, the point cloud video encoder may reduce coding complexity by changing a neighbor node pattern value (for example, based on a table by which 64 is changed to 10 or 6).

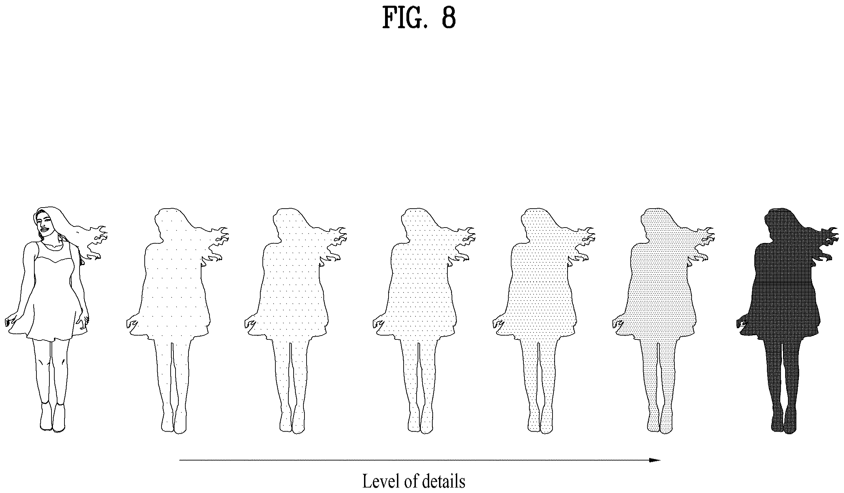

FIG. 8 illustrates an example of point configuration in each LOD according to embodiments.

As described with reference to FIGS. 1 to 7, encoded geometry is reconstructed (decompressed) before attribute encoding is performed. When direct coding is applied, the geometry reconstruction operation may include changing the placement of direct coded points (e.g., placing the direct coded points in front of the point cloud data). When trisoup geometry encoding is applied, the geometry reconstruction process is performed through triangle reconstruction, up-sampling, and voxelization. Since the attribute depends on the geometry, attribute encoding is performed based on the reconstructed geometry.

The point cloud video encoder (for example, the LOD generator 40009) may classify (reorganize) points by LOD. The figure shows the point cloud content corresponding to LODs. The leftmost picture in the figure represents original point cloud content. The second picture from the left of the figure represents distribution of the points in the lowest LOD, and the rightmost picture in the figure represents distribution of the points in the highest LOD. That is, the points in the lowest LOD are sparsely distributed, and the points in the highest LOD are densely distributed. That is, as the LOD rises in the direction pointed by the arrow indicated at the bottom of the figure, the space (or distance) between points is narrowed.

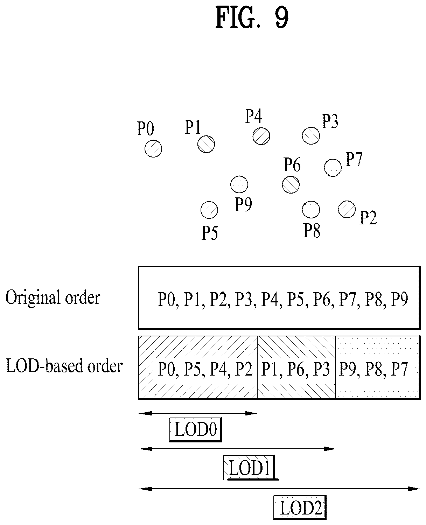

FIG. 9 illustrates an example of point configuration for each LOD according to embodiments.

As described with reference to FIGS. 1 to 8, the point cloud content providing system, or the point cloud video encoder (for example, the point cloud video encoder 10002 of FIG. 1, the point cloud video encoder of FIG. 4, or the LOD generator 40009) may generates an LOD. The LOD is generated by reorganizing the points into a set of refinement levels according to a set LOD distance value (or a set of Euclidean distances). The LOD generation process is performed not only by the point cloud video encoder, but also by the point cloud video decoder.

The upper part of FIG. 9 shows examples (P0 to P9) of points of the point cloud content distributed in a 3D space. In FIG. 9, the original order represents the order of points P0 to P9 before LOD generation. In FIG. 9, the LOD based order represents the order of points according to the LOD generation. Points are reorganized by LOD. Also, a high LOD contains the points belonging to lower LODs. As shown in FIG. 9, LOD0 contains P0, P5, P4 and P2. LOD1 contains the points of LOD0, P1, P6 and P3. LOD2 contains the points of LOD0, the points of LOD1, P9, P8 and P7.

As described with reference to FIG. 4, the point cloud video encoder according to the embodiments may perform prediction transform coding based on LOD, lifting transform coding based on LOD, and RAHT transform coding selectively or in combination.

The point cloud video encoder according to the embodiments may generate a predictor for points to perform prediction transform coding based on LOD for setting a predicted attribute (or predicted attribute value) of each point. That is, N predictors may be generated for N points. The predictor according to the embodiments may calculate a weight (=1/distance) based on the LOD value of each point, indexing information about neighboring points present within a set distance for each LOD, and a distance to the neighboring points.

The predicted attribute (or attribute value) according to the embodiments is set to the average of values obtained by multiplying the attributes (or attribute values) (e.g., color, reflectance, etc.) of neighbor points set in the predictor of each point by a weight (or weight value) calculated based on the distance to each neighbor point. The point cloud video encoder according to the embodiments (for example, the coefficient quantizer 40011) may quantize and inversely quantize the residual of each point (which may be called residual attribute, residual attribute value, attribute prediction residual value or prediction error attribute value and so on) obtained by subtracting a predicted attribute (or attribute value) each point from the attribute (i.e., original attribute value) of each point. The quantization process performed for a residual attribute value in a transmission device is configured as shown in table 2. The inverse quantization process performed for a residual attribute value in a reception device is configured as shown in table 3.

TABLE 2

```
int PCCQuantization(int value, int quantStep)
{
if( value >=0) {
return floor(value / quantStep + 1.0 / 3.0);
} else {
return -floor(-value / quantStep + 1.0 / 3.0);
}
}
```

TABLE 3

```
int PCCInverseQuantization(int value, int quantStep)
{
if( quantStep ==0) {
return value;
} else {
return value * quantStep;
}
}
```

When the predictor of each point has neighbor points, the point cloud video encoder (e.g., the arithmetic encoder 40012) according to the embodiments may perform entropy coding on the quantized and inversely quantized residual values as described above. When the predictor of each point has no neighbor point, the point cloud video encoder according to the embodiments (for example, the arithmetic encoder 40012) may perform entropy coding on the attributes of the corresponding point without performing the above-described operation.

The point cloud video encoder according to the embodiments (for example, the lifting transformer 40010) may generate a predictor of each point, set the calculated LOD and register neighbor points in the predictor, and set weights according to the distances to neighbor points to perform lifting transform coding. The lifting transform coding according to the embodiments is similar to the above-described prediction transform coding, but differs therefrom in that weights are cumulatively applied to attribute values. The process of cumulatively applying weights to the attribute values according to embodiments is configured as follows.

1) Create an array Quantization Weight (QW) for storing the weight value of each point. The initial value of all elements of QW is 1.0. Multiply the QW values of the predictor indexes of the neighbor nodes registered in the predictor by the weight of the predictor of the current point, and add the values obtained by the multiplication.

2) Lift prediction process: Subtract the value obtained by multiplying the attribute value of the point by the weight from the existing attribute value to calculate a predicted attribute value.

3) Create temporary arrays called updateweight and update and initialize the temporary arrays to zero.

4) Cumulatively add the weights calculated by multiplying the weights calculated for all predictors by a weight stored in the QW corresponding to a predictor index to the updateweight array as indexes of neighbor nodes. Cumulatively add, to the update array, a value obtained by multiplying the attribute value of the index of a neighbor node by the calculated weight.

5) Lift update process: Divide the attribute values of the update array for all predictors by the weight value of the updateweight array of the predictor index, and add the existing attribute value to the values obtained by the division.

6) Calculate predicted attributes by multiplying the attribute values updated through the lift update process by the weight updated through the lift prediction process (stored in the QW) for all predictors. The point cloud video encoder (e.g., coefficient quantizer 40011) according to the embodiments quantizes the predicted attribute values. In addition, the point cloud video encoder (e.g., the arithmetic encoder 40012) performs entropy coding on the quantized attribute values.

The point cloud video encoder (for example, the RAHT transformer 40008) according to the embodiments may perform RAHT transform coding in which attributes of nodes of a higher level are predicted using the attributes associated with nodes of a lower level in the octree. RAHT transform coding is an example of attribute intra coding through an octree backward scan. The point cloud video encoder according to the embodiments scans the entire region from the voxel and repeats the merging process of merging the voxels into a larger block at each step until the root node is reached. The merging process according to the embodiments is performed only on the occupied nodes. The merging process is not performed on the empty node. The merging process is performed on an upper node immediately above the empty node.

Equation 3 below represents a RAHT transformation matrix. In Equation 3, $g_{l x,y,z}$ denotes the average attribute value of voxels at level 1. $g_{l x,y,z}$ may be calculated based on $g_{l+1\ 2x,y,z}$ and $g_{1+1\ 2x+1,y,z}$. The weights for $gl_{2x,y,z}$ and $g_{l\ 2x+1,y,z}$ are w1 = $w_{1\ 2x,y,z}$ and $w2$ = $w_{l\ 2x+1,y,z}$.

[Equation 3]

$$\begin{bmatrix} g_{l-1\,x,y,z} \\ h_{l-1\,x,y,z} \end{bmatrix} - T_{w1\,w2} \begin{bmatrix} g_{l\,2x,y,z} \\ g_{l\,2x+1,y,z} \end{bmatrix} \quad T_{w1\,w2} - \frac{1}{\sqrt{w1+w2}} \begin{bmatrix} \sqrt{w1} & \sqrt{w2} \\ -\sqrt{w2} & \sqrt{w1} \end{bmatrix}$$

Here, $g_{l-1\,x,y,z}$ is a low-pass value and is used in the merging process at the next higher level. $h_{l-1x,y,z}$ denotes high-pass coefficients. The high-pass coefficients at each step are quantized and subjected to entropy coding (for example, encoding by the arithmetic encoder 400012). The weights are calculated as $w_{1-1x,y,z} = w_{1\,2x,y,z} + w_{12x-1,y,z}$. The root node is created through the $g_{1\,0,0,0}$ and $g_{1\,0,0,1}$ as Equation 4.

[Equation 4]

$$\begin{bmatrix} gDC \\ h_{0_{0,0,0}} \end{bmatrix} - T_{w1000\,w1001} \begin{bmatrix} g_{1_{0,0,0z}} \\ g_{1_{0,0,1}} \end{bmatrix}$$

The value of gDC is also quantized and subjected to entropy coding like the high-pass coefficients.

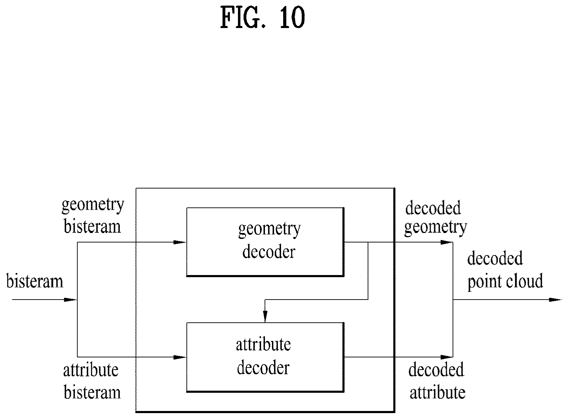

FIG. 10 illustrates a point cloud video decoder according to embodiments.

The point cloud video decoder illustrated in FIG. 10 is an example of the point cloud video decoder 10006 described in FIG. 1, and may perform the same or similar operations as the operations of the point cloud video decoder 10006 illustrated in FIG. 1. As shown in the figure, the point cloud video decoder may receive a geometry bitstream and an attribute bitstream contained in one or more bitstreams. The point cloud video decoder includes a geometry decoder and an attribute decoder. The geometry decoder performs geometry decoding on the geometry bitstream and outputs decoded geometry. The attribute decoder performs attribute decoding on the attribute bitstream based on the decoded geometry, and outputs decoded attributes. The decoded geometry and decoded attributes are used to reconstruct point cloud content (a decoded point cloud).

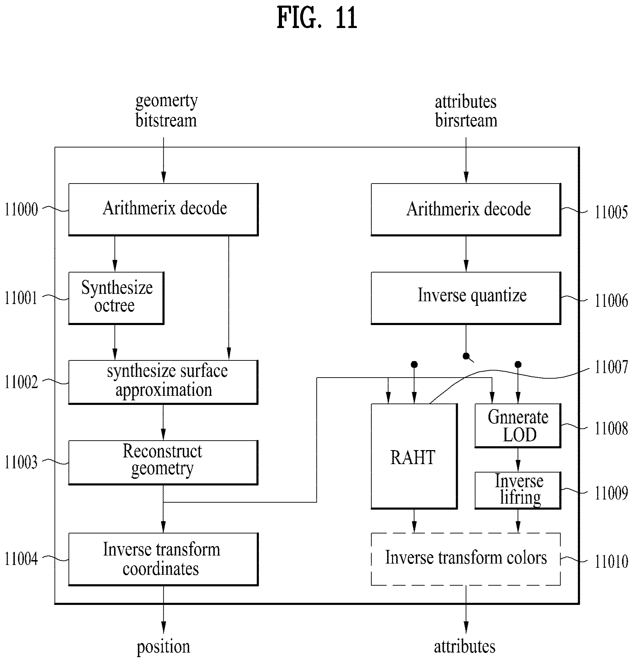

FIG. 11 illustrates a point cloud video decoder according to embodiments.

The point cloud video decoder illustrated in FIG. 11 is an example of the point cloud video decoder illustrated in FIG. 10, and may perform a decoding operation, which is an inverse process of the encoding operation of the point cloud video encoder illustrated in FIGS. 1 to 9.

As described with reference to FIGS. 1 and 10, the point cloud video decoder may perform geometry decoding and attribute decoding. The geometry decoding is performed before the attribute decoding.

The point cloud video decoder according to the embodiments includes an arithmetic decoder (Arithmetic decode) 11000, an octree synthesizer (Synthesize octree) 11001, a surface approximation synthesizer (Synthesize surface approximation) 11002, and a geometry reconstructor (Reconstruct geometry) 11003, a coordinate inverse transformer (Inverse transform coordinates) 11004, an arithmetic decoder (Arithmetic decode) 11005, an inverse quantizer (Inverse quantize) 11006, a RAHT transformer 11007, an LOD generator (Generate LOD) 11008, an inverse lifter (inverse lifting) 11009, and/or a color inverse transformer (Inverse transform colors) 11010.

The arithmetic decoder 11000, the octree synthesizer 11001, the surface approximation synthesizer 11002, and the geometry reconstructor 11003, and the coordinate inverse transformer 11004 may perform geometry decoding. The geometry decoding according to the embodiments may include direct decoding and trisoup geometry decoding. The direct decoding and trisoup geometry decoding are selectively applied. The geometry decoding is not limited to the above-described example, and is performed as an inverse process of the geometry encoding described with reference to FIGS. 1 to 9.

The arithmetic decoder 11000 according to the embodiments decodes the received geometry bitstream based on the arithmetic coding. The operation of the arithmetic decoder 11000 corresponds to the inverse process of the arithmetic encoder 40004.

The octree synthesizer 11001 according to the embodiments may generate an octree by acquiring an occupancy code from the decoded geometry bitstream (or information on the geometry secured as a result of decoding). The occupancy code is configured as described in detail with reference to FIGS. 1 to 9.

When the trisoup geometry encoding is applied, the surface approximation synthesizer 11002 according to the embodiments may synthesize a surface based on the decoded geometry and/or the generated octree.

The geometry reconstructor 11003 according to the embodiments may regenerate geometry based on the surface and/or the decoded geometry. As described with reference to FIGS. 1 to 9, direct coding and trisoup geometry encoding are selectively applied. Accordingly, the geometry reconstructor 11003 directly imports and adds position information about the points to which direct coding is applied. When the trisoup geometry encoding is applied, the geometry reconstructor 11003 may reconstruct the geometry by performing the reconstruction operations of the geometry reconstructor 40005, for example, triangle reconstruction, up-sampling, and voxelization. Details are the same as those described with reference to FIG. 6, and thus description thereof is omitted. The reconstructed geometry may include a point cloud picture or frame that does not contain attributes.

The coordinate inverse transformer 11004 according to the embodiments may acquire positions of the points by transforming the coordinates based on the reconstructed geometry.

The arithmetic decoder 11005, the inverse quantizer 11006, the RAHT transformer 11007, the LOD generator 11008, the inverse lifter 11009, and/or the color inverse transformer 11010 may perform the attribute decoding described with reference to FIG. 10. The attribute decoding according to the embodiments includes region adaptive hierarchical transform (RAHT) decoding, interpolation-based hierarchical nearest-neighbor prediction (prediction transform) decoding, and interpolation-based hierarchical nearest-neighbor prediction with an update/lifting step (lifting transform) decoding. The three decoding schemes described above may be used selectively, or a combination of one or more decoding schemes may be used. The attribute decoding according to the embodiments is not limited to the above-described example.

The arithmetic decoder 11005 according to the embodiments decodes the attribute bitstream by arithmetic coding.

The inverse quantizer 11006 according to the embodiments inversely quantizes the information about the decoded attribute bitstream or attributes secured as a result of the decoding, and outputs the inversely quantized attributes (or attribute values). The inverse quantization may be selectively applied based on the attribute encoding of the point cloud video encoder.

According to embodiments, the RAHT transformer 11007, the LOD generator 11008, and/or the inverse lifter 11009 may process the reconstructed geometry and the inversely quantized attributes. As described above, the RAHT transformer 11007, the LOD generator 11008, and/or the inverse lifter 11009 may selectively perform a decoding operation corresponding to the encoding of the point cloud video encoder.

The color inverse transformer 11010 according to the embodiments performs inverse transform coding to inversely transform a color value (or texture) included in the decoded attributes. The operation of the color inverse transformer 11010 may be selectively performed based on the operation of the color transformer 40006 of the point cloud video encoder.

Although not shown in the figure, the elements of the point cloud video decoder of FIG. 11 may be implemented by hardware including one or more processors or integrated circuits configured to communicate with one or more memories included in the point cloud content providing apparatus, software, firmware, or a combination thereof. The one or more processors may perform at least one or more of the operations and/or functions of the elements of the point cloud video decoder of FIG. 11 described above. Additionally, the one or more processors may operate or execute a set of software programs and/or instructions for performing the operations and/or functions of the elements of the point cloud video decoder of FIG. 11.

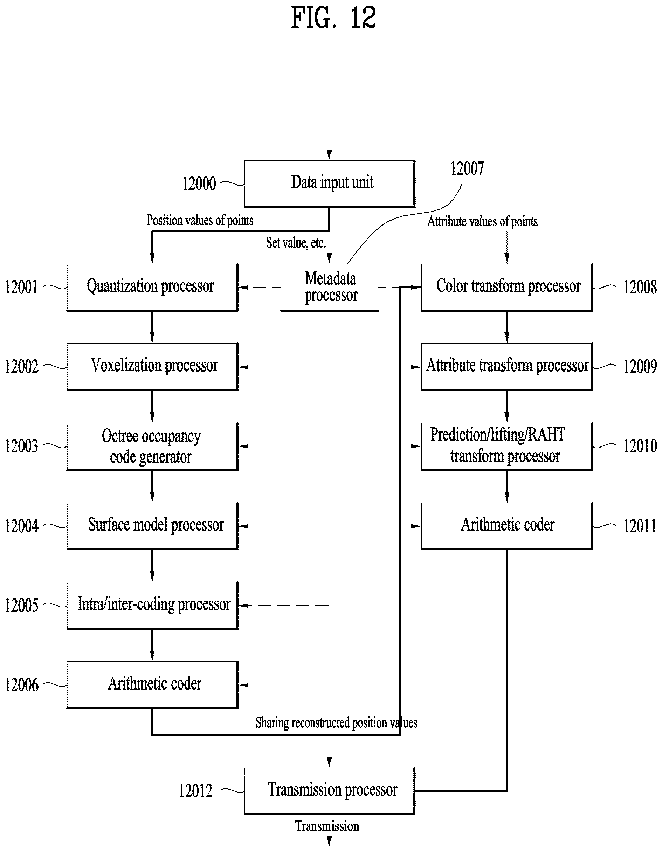

FIG. 12 illustrates a transmission device according to embodiments.

The transmission device shown in FIG. 12 is an example of the transmission device 10000 of FIG. 1 (or the point cloud video encoder of FIG. 4). The transmission device illustrated in FIG. 12 may perform one or more of the operations and methods the same as or similar to those of the point cloud video encoder described with reference to FIGS. 1 to 9. The transmission device according to the embodiments may include a data input unit 12000, a quantization processor 12001, a voxelization processor 12002, an octree occupancy code generator 12003, a surface model processor 12004, an intra/inter-coding processor 12005, an arithmetic coder 12006, a metadata processor 12007, a color transform processor 12008, an attribute transform processor 12009, a prediction/lifting/RAHT transform processor 12010, an arithmetic coder 12011 and/or a transmission processor 12012.

The data input unit 12000 according to the embodiments receives or acquires point cloud data. The data input unit 12000 may perform an operation and/or acquisition method the same as or similar to the operation and/or acquisition method of the point cloud video acquisition unit 10001 (or the acquisition process 20000 described with reference to FIG. 2).

The data input unit 12000, the quantization processor 12001, the voxelization processor 12002, the octree occupancy code generator 12003, the surface model processor 12004, the intra/inter-coding processor 12005, and the arithmetic coder 12006 perform geometry encoding. The geometry encoding according to the embodiments is the same as or similar to the geometry encoding described with reference to FIGS. 1 to 9, and thus a detailed description thereof is omitted.

The quantization processor 12001 according to the embodiments quantizes geometry (e.g., position values of points). The operation and/or quantization of the quantization processor 12001 is the same as or similar to the operation and/or quantization of the quantizer 40001 described with reference to FIG. 4. Details are the same as those described with reference to FIGS. 1 to 9.

The voxelization processor 12002 according to the embodiments voxelizes the quantized position values of the points. The voxelization processor 120002 may perform an operation and/or process the same or similar to the operation and/or the voxelization process of the quantizer 40001 described with reference to FIG. 4. Details are the same as those described with reference to FIGS. 1 to 9.

The octree occupancy code generator 12003 according to the embodiments performs octree coding on the voxelized positions of the points based on an octree structure. The octree occupancy code generator 12003 may generate an occupancy code. The octree occupancy code generator 12003 may perform an operation and/or method the same as or similar to the operation and/or method of the point cloud video encoder (or the octree analyzer 40002) described with reference to FIGS. 4 and 6. Details are the same as those described with reference to FIGS. 1 to 9.

The surface model processor 12004 according to the embodiments may perform trigsoup geometry encoding based on a surface model to reconstruct the positions of points in a specific region (or node) on a voxel basis. The surface model processor 12004 may perform an operation and/or method the same as or similar to the operation and/or method of the point cloud video encoder (for example, the surface approximation analyzer 40003) described with reference to FIG. 4. Details are the same as those described with reference to FIGS. 1 to 9.

The intra/inter-coding processor 12005 according to the embodiments may perform intra/inter-coding on point cloud data. The intra/inter-coding processor 12005 may perform coding the same as or similar to the intra/inter-coding described with reference to FIG. 7. Details are the same as those described with reference to FIG. 7. According to embodiments, the intra/inter-coding processor 12005 may be included in the arithmetic coder 12006.

The arithmetic coder 12006 according to the embodiments performs entropy encoding on an octree of the point cloud data and/or an approximated octree. For example, the encoding scheme includes arithmetic encoding. The arithmetic coder 12006 performs an operation and/or method the same as or similar to the operation and/or method of the arithmetic encoder 40004.

The metadata processor 12007 according to the embodiments processes metadata about the point cloud data, for example, a set value, and provides the same to a necessary processing process such as geometry encoding and/or attribute encoding. Also, the metadata processor 12007 according to the embodiments may generate and/or process signaling information related to the geometry encoding and/or the attribute encoding. The signaling information according to the embodiments may be encoded separately from the geometry encoding and/or the attribute encoding. The signaling information according to the embodiments may be interleaved.

The color transform processor 12008, the attribute transform processor 12009, the prediction/lifting/RAHT transform processor 12010, and the arithmetic coder 12011 perform the attribute encoding. The attribute encoding according to the embodiments is the same as or similar to the attribute encoding described with reference to FIGS. 1 to 9, and thus a detailed description thereof is omitted.

The color transform processor 12008 according to the embodiments performs color transform coding to transform color values included in attributes. The color transform processor 12008 may perform color transform coding based on the reconstructed geometry. The reconstructed geometry is the same as described with reference to FIGS. 1 to 9. Also, it performs an operation and/or method the same as or similar to the operation and/or method of the color transformer 40006 described with reference to FIG. 4 is performed. The detailed description thereof is omitted.

The attribute transform processor 12009 according to the embodiments performs attribute transformation to transform the attributes based on the reconstructed geometry and/or the positions on which geometry encoding is not performed. The attribute transform processor 12009 performs an operation and/or method the same as or similar to the operation and/or method of the attribute transformer 40007 described with reference to FIG. 4. The detailed description thereof is omitted. The prediction/lifting/RAHT transform processor 12010 according to the embodiments may code the transformed attributes by any one or a combination of RAHT coding, prediction transform coding, and lifting transform coding. The prediction/lifting/RAHT transform processor 12010 performs at least one of the operations the same as or similar to the operations of the RAHT transformer 40008, the LOD generator 40009, and the lifting transformer 40010 described with reference to FIG. 4. In addition, the prediction transform coding, the lifting transform coding, and the RAHT transform coding are the same as those described with reference to FIGS. 1 to 9, and thus a detailed description thereof is omitted.

The arithmetic coder 12011 according to the embodiments may encode the coded attributes based on the arithmetic coding. The arithmetic coder 12011 performs an operation and/or method the same as or similar to the operation and/or method of the arithmetic encoder 400012.

The transmission processor 12012 according to the embodiments may transmit each bitstream containing encoded geometry and/or encoded attributes and metadata information, or transmit one bitstream configured with the encoded geometry and/or the encoded attributes and the metadata information. When the encoded geometry and/or the encoded attributes and the metadata information according to the embodiments are configured into one bitstream, the bitstream may include one or more sub-bitstreams. The bitstream according to the embodiments may contain signaling information including a sequence parameter set (SPS) for signaling of a sequence level, a geometry parameter set (GPS) for signaling of geometry information coding, an attribute parameter set (APS) for signaling of attribute information coding, and a tile parameter set (TPS or tile inventory) for signaling of a tile level, and slice data. The slice data may include information about one or more slices. One slice according to embodiments may include one geometry bitstream Geom00 and one or more attribute bitstreams Attr00 and Attr10. The TPS according to the embodiments may include information about each tile (for example, coordinate information and height/size information about a bounding box) for one or more tiles. The geometry bitstream may contain a header and a payload. The header of the geometry bitstream according to the embodiments may contain a parameter set identifier (geom_parameter_set_id), a tile identifier (geom_tile_id) and a slice identifier (geom_slice_id) included in the GPS, and information about the data contained in the payload. As described above, the metadata processor 12007 according to the embodiments may generate and/or process the signaling information and transmit the same to the transmission processor 12012. According to embodiments, the elements to perform geometry encoding and the elements to perform attribute encoding may share data/information with each other as indicated by dotted lines. The transmission processor 12012 according to the embodiments may perform an operation and/or transmission method the same as or similar to the operation and/or transmission method of the transmitter 10003. Details are the same as those described with reference to FIGS. 1 and 2, and thus a description thereof is omitted.

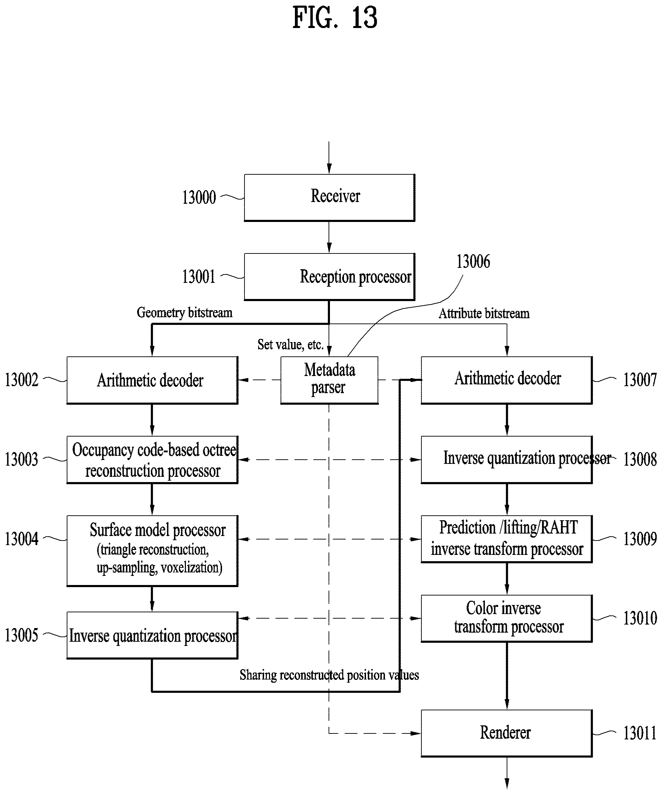

FIG. 13 illustrates a reception device according to embodiments.

The reception device illustrated in FIG. 13 is an example of the reception device 10004 of FIG. 1 (or the point cloud video decoder of FIGS. 10 and 11). The reception device illustrated in FIG. 13 may perform one or more of the operations and methods the same as or similar to those of the point cloud video decoder described with reference to FIGS. 1 to 11.

The reception device according to the embodiment includes a receiver 13000, a reception processor 13001, an arithmetic decoder 13002, an occupancy code-based octree reconstruction processor 13003, a surface model processor (triangle reconstruction, up-sampling, voxelization) 13004, an inverse quantization processor 13005, a metadata parser 13006, an arithmetic decoder 13007, an inverse quantization processor 13008, a prediction /lifting/RAHT inverse transform processor 13009, a color inverse transform processor 13010, and/or a renderer 13011. Each element for decoding according to the embodiments may perform an inverse process of the operation of a corresponding element for encoding according to the embodiments.

The receiver 13000 according to the embodiments receives point cloud data. The receiver 13000 may perform an operation and/or reception method the same as or similar to the operation and/or reception method of the receiver 10005 of FIG. 1. The detailed description thereof is omitted.

The reception processor 13001 according to the embodiments may acquire a geometry bitstream and/or an attribute bitstream from the received data. The reception processor 13001 may be included in the receiver 13000.

The arithmetic decoder 13002, the occupancy code-based octree reconstruction processor 13003, the surface model processor 13004, and the inverse quantization processor 1305 may perform geometry decoding. The geometry decoding according to embodiments is the same as or similar to the geometry decoding described with reference to FIGS. 1 to 10, and thus a detailed description thereof is omitted.

The arithmetic decoder 13002 according to the embodiments may decode the geometry bitstream based on arithmetic coding. The arithmetic decoder 13002 performs an operation and/or coding the same as or similar to the operation and/or coding of the arithmetic decoder 11000.

The occupancy code-based octree reconstruction processor 13003 according to the embodiments may reconstruct an octree by acquiring an occupancy code from the decoded geometry bitstream (or information about the geometry secured as a result of decoding). The occupancy code-based octree reconstruction processor 13003 performs an operation and/or method the same as or similar to the operation and/or octree generation method of the octree synthesizer 11001. When the trisoup geometry encoding is applied, the surface model processor 1302 according to the embodiments may perform trisoup geometry decoding and related geometry reconstruction (for example, triangle reconstruction, up-sampling, voxelization) based on the surface model method. The surface model processor 1302 performs an operation the same as or similar to that of the surface approximation synthesizer 11002 and/or the geometry reconstructor 11003.

The inverse quantization processor 1305 according to the embodiments may inversely quantize the decoded geometry.

The metadata parser 1306 according to the embodiments may parse metadata contained in the received point cloud data, for example, a set value. The metadata parser 1306 may pass the metadata to geometry decoding and/or attribute decoding. The metadata is the same as that described with reference to FIG. 12, and thus a detailed description thereof is omitted.

The arithmetic decoder 13007, the inverse quantization processor 13008, the prediction/lifting/RAHT inverse transform processor 13009 and the color inverse transform processor 13010 perform attribute decoding. The attribute decoding is the same as or similar to the attribute decoding described with reference to FIGS. 1 to 10, and thus a detailed description thereof is omitted.

The arithmetic decoder 13007 according to the embodiments may decode the attribute bitstream by arithmetic coding. The arithmetic decoder 13007 may decode the attribute bitstream based on the reconstructed geometry. The arithmetic decoder 13007 performs an operation and/or coding the same as or similar to the operation and/or coding of the arithmetic decoder 11005.

The inverse quantization processor 13008 according to the embodiments may inversely quantize the decoded attribute bitstream. The inverse quantization processor 13008 performs an operation and/or method the same as or similar to the operation and/or inverse quantization method of the inverse quantizer 11006.

The prediction/lifting/RAHT inverse transformer 13009 according to the embodiments may process the reconstructed geometry and the inversely quantized attributes. The prediction/lifting/RAHT inverse transform processor 1301 performs one or more of operations and/or decoding the same as or similar to the operations and/or decoding of the RAHT transformer 11007, the LOD generator 11008, and/or the inverse lifter 11009. The color inverse transform processor 13010 according to the embodiments performs inverse transform coding to inversely transform color values (or textures) included in the decoded attributes. The color inverse transform processor 13010 performs an operation and/or inverse transform coding the same as or similar to the operation and/or inverse transform coding of the color inverse transformer 11010. The renderer 13011 according to the embodiments may render the point cloud data.

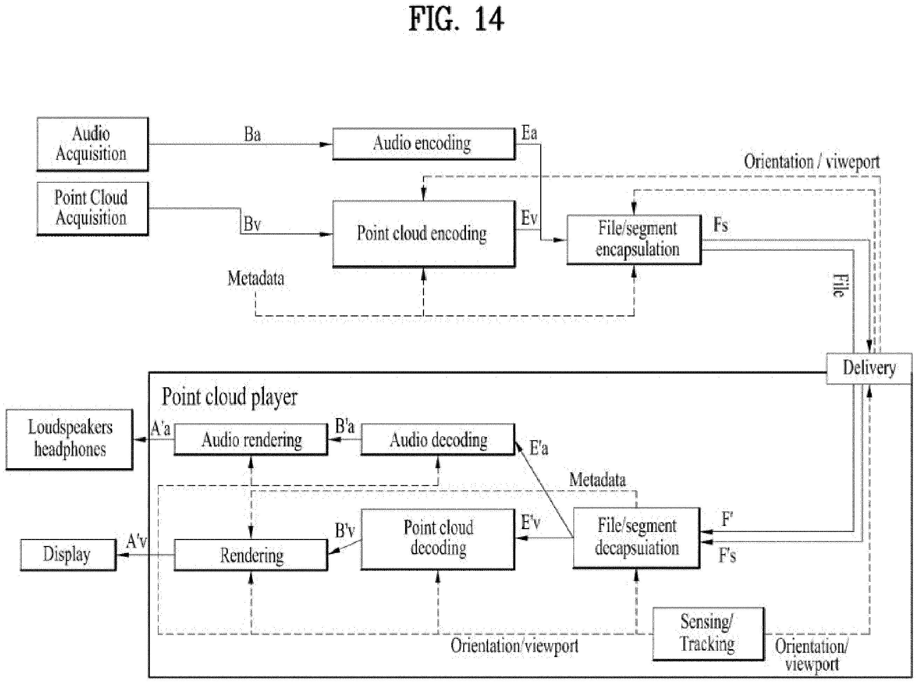

FIG. 14 illustrates an architecture for G-PCC-based point cloud content streaming according to embodiments.

The upper part of FIG. 14 shows a process of processing and transmitting point cloud content by the transmission device described in FIGS. 1 to 13 (for example, the transmission device 10000, the transmission device of FIG. 12, etc.).

As described with reference to FIGS. 1 to 13, the transmission device may acquire audio Ba of the point cloud content (Audio Acquisition), encode the acquired audio (Audio Encoding), and output an audio bitstream Ea. In addition, the transmission device may acquire a point cloud (or point cloud video) Bv of the point cloud content (Point Acquisition), and perform point cloud video encoding on the acquired point cloud to output a point cloud video bitstream Ev. The point cloud video encoding of the transmission device is the same as or similar to the point cloud video encoding described with reference to FIGS. 1 to 13 (for example, the encoding of the point cloud video encoder of FIG. 4), and thus a detailed description thereof will be omitted.

The transmission device may encapsulate the generated audio bitstream and video bitstream into a file and/or a segment (File/segment encapsulation). The encapsulated file and/or segment Fs, File may include a file in a file format such as ISOBMFF or a dynamic adaptive streaming over HTTP (DASH) segment. Point cloud-related metadata according to embodiments may be contained in the encapsulated file format and/or segment. The metadata may be contained in boxes of various levels on the ISO International Standards Organization Base Media File Format (ISOBMFF) file format, or may be contained in a separate track within the file. According to an embodiment, the transmission device may encapsulate the metadata into a separate file. The transmission device according to the embodiments may deliver the encapsulated file format and/or segment over a network. The processing method for encapsulation and transmission by the transmission device is the same as that described with reference to FIGS. 1 to 13 (for example, the transmitter 10003, the transmission step 20002 of FIG. 2, etc.), and thus a detailed description thereof will be omitted.

The lower part of FIG. 14 shows a process of processing and outputting point cloud content by the reception device (for example, the reception device 10004, the reception device of FIG. 13, etc.) described with reference to FIGS. 1 to 13.

According to embodiments, the reception device may include devices configured to output final audio data and final video data (e.g., loudspeakers, headphones, a display), and a point cloud player configured to process point cloud content (a point cloud player). The final data output devices and the point cloud player may be configured as separate physical devices. The point cloud player according to the embodiments may perform geometry-based point cloud compression (G-PCC) coding, video-based point cloud compression (V-PCC) coding and/or next-generation coding.

The reception device according to the embodiments may secure a file and/or segment F', Fs' contained in the received data (for example, a broadcast signal, a signal transmitted over a network, etc.) and decapsulate the same (File/segment decapsulation). The reception and decapsulation methods of the reception device is the same as those described with reference to FIGS. 1 to 13 (for example, the receiver 10005, the reception unit 13000, the reception processing unit 13001, etc.), and thus a detailed description thereof will be omitted.

The reception device according to the embodiments secures an audio bitstream E'a and a video bitstream E'v contained in the file and/or segment. As shown in the figure, the reception device outputs decoded audio data B'a by performing audio decoding on the audio bitstream, and renders the decoded audio data (audio rendering) to output final audio data A'a through loudspeakers or headphones.

Also, the reception device performs point cloud video decoding on the video bitstream E'v and outputs decoded video data B'v. The point cloud video decoding according to the embodiments is the same as or similar to the point cloud video decoding described with reference to FIGS. 1 to 13 (for example, decoding of the point cloud video decoder of FIG. 11), and thus a detailed description thereof will be omitted. The reception device may render the decoded video data and output final video data through the display.

The reception device according to the embodiments may perform at least one of decapsulation, audio decoding, audio rendering, point cloud video decoding, and point cloud video rendering based on the transmitted metadata. The details of the metadata are the same as those described with reference to FIGS. 12 to 13, and thus a description thereof will be omitted.

As indicated by a dotted line shown in the figure, the reception device according to the embodiments (for example, a point cloud player or a sensing/tracking unit in the point cloud player) may generate feedback information (orientation, viewport). According to embodiments, the feedback information may be used in a decapsulation process, a point cloud video decoding process and/or a rendering process of the reception device, or may be delivered to the transmission device. Details of the feedback information are the same as those described with reference to FIGS. 1 to 13, and thus a description thereof will be omitted.

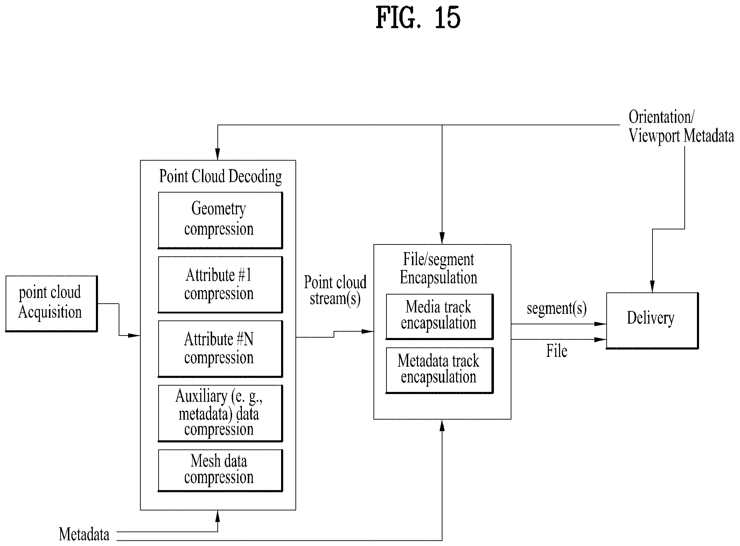

FIG. 15 shows an exemplary transmission device according to embodiments.

The transmission device of FIG. 15 is a device configured to transmit point cloud content, and corresponds to an example of the transmission device described with reference to FIGS. 1 to 14 (e.g., the transmission device 10000 of FIG. 1, the point cloud video encoder of FIG. 4, the transmission device of FIG. 12, the transmission device of FIG. 14). Accordingly, the transmission device of FIG. 15 performs an operation that is identical or similar to that of the transmission device described with reference to FIGS. 1 to 14.

The transmission device according to the embodiments may perform one or more of point cloud acquisition, point cloud video encoding, file/segment encapsulation and delivery.

Since the operation of point cloud acquisition and delivery illustrated in the figure is the same as the operation described with reference to FIGS. 1 to 14, a detailed description thereof will be omitted.

As described above with reference to FIGS. 1 to 14, the transmission device according to the embodiments may perform geometry encoding and attribute encoding. The geometry encoding may be referred to as geometry compression, and the attribute encoding may be referred to as attribute compression. As described above, one point may have one geometry and one or more attributes. Accordingly, the transmission device performs attribute encoding on each attribute. The figure illustrates that the transmission device performs one or more attribute compressions (attribute #1 compression,..., attribute #N compression). In addition, the transmission device according to the embodiments may perform auxiliary compression. The auxiliary compression is performed on the metadata. Details of the metadata are the same as those described with reference to FIGS. 1 to 14, and thus a description thereof will be omitted. The transmission device may also perform mesh data compression. The mesh data compression according to the embodiments may include the trisoup geometry encoding described with reference to FIGS. 1 to 14.

The transmission device according to the embodiments may encapsulate bitstreams (e.g., point cloud streams) output according to point cloud video encoding into a file and/or a segment. According to embodiments, the transmission device may perform media track encapsulation for carrying data (for example, media data) other than the metadata, and perform metadata track encapsulation for carrying metadata. According to embodiments, the metadata may be encapsulated into a media track.

As described with reference to FIGS. 1 to 14, the transmission device may receive feedback information (orientation/viewport metadata) from the reception device, and perform at least one of the point cloud video encoding, file/segment encapsulation, and delivery operations based on the received feedback information. Details are the same as those described with reference to FIGS. 1 to 14, and thus a description thereof will be omitted.

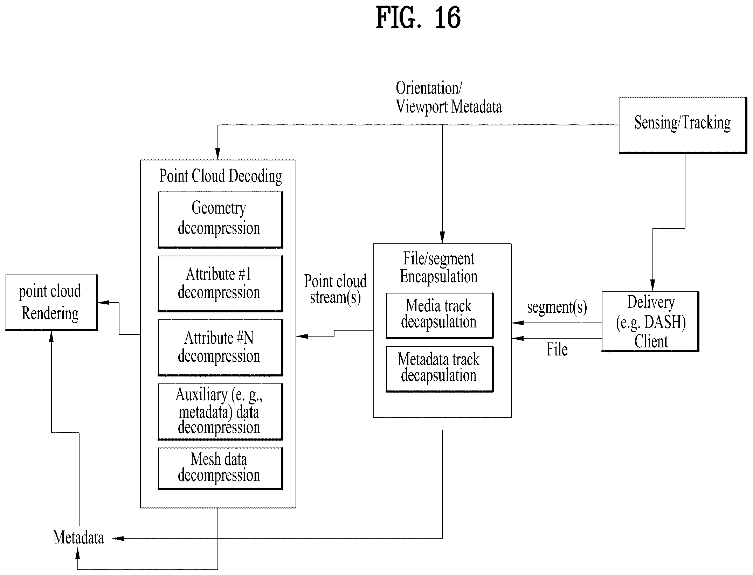

FIG. 16 shows an exemplary reception device according to embodiments.

The reception device of FIG. 16 is a device for receiving point cloud content, and corresponds to an example of the reception device described with reference to FIGS. 1 to 14 (for example, the reception device 10004 of FIG. 1, the point cloud video decoder of FIG. 11, and the reception device of FIG. 13, the reception device of FIG. 14). Accordingly, the reception device of FIG. 16 performs an operation that is identical or similar to that of the reception device described with reference to FIGS. 1 to 14. The reception device of FIG. 16 may receive a signal transmitted from the transmission device of FIG. 15, and perform a reverse process of the operation of the transmission device of FIG. 15.

The reception device according to the embodiments may perform at least one of delivery, file/segment decapsulation, point cloud video decoding, and point cloud rendering.

Since the point cloud reception and point cloud rendering operations illustrated in the figure are the same as those described with reference to FIGS. 1 to 14, a detailed description thereof will be omitted.

As described with reference to FIGS. 1 to 14, the reception device according to the embodiments decapsulate the file and/or segment acquired from a network or a storage device. According to embodiments, the reception device may perform media track decapsulation for carrying data (for example, media data) other than the metadata, and perform metadata track decapsulation for carrying metadata. According to embodiments, in the case where the metadata is encapsulated into a media track, the metadata track decapsulation is omitted.

As described with reference to FIGS. 1 to 14, the reception device may perform geometry decoding and attribute decoding on bitstreams (e.g., point cloud streams) secured through decapsulation. The geometry decoding may be referred to as geometry decompression, and the attribute decoding may be referred to as attribute decompression. As described above, one point may have one geometry and one or more attributes, each of which is encoded by the transmission device. Accordingly, the reception device performs attribute decoding on each attribute. The figure illustrates that the reception device performs one or more attribute decompressions (attribute #1 decompression, ..., attribute #N decompression). The reception device according to the embodiments may also perform auxiliary decompression. The auxiliary decompression is performed on the metadata. Details of the metadata are the same as those described with reference to FIGS. 1 to 14, and thus a disruption thereof will be omitted. The reception device may also perform mesh data decompression. The mesh data decompression according to the embodiments may include the trisoup geometry decoding described with reference to FIGS. 1 to 14. The reception device according to the embodiments may render the point cloud data that is output according to the point cloud video decoding.

As described with reference to FIGS. 1 to 14, the reception device may secure orientation/viewport metadata using a separate sensing/tracking element, and transmit feedback information including the same to a transmission device (for example, the transmission device of FIG. 15). In addition, the reception device may perform at least one of a reception operation, file/segment decapsulation, and point cloud video decoding based on the feedback information. Details are the same as those described with reference to FIGS. 1 to 14, and thus a description thereof will be omitted.

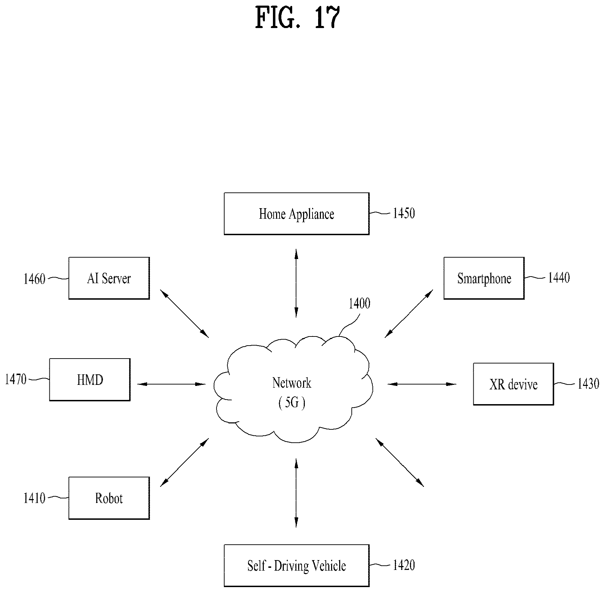

FIG. 17 shows an exemplary structure operatively connectable with a method/device for transmitting and receiving point cloud data according to embodiments.

The structure of FIG. 17 represents a configuration in which at least one of a server 1760, a robot 1710, a self-driving vehicle 1720, an XR device 1730, a smartphone 1740, a home appliance 1750, and/or a head-mount display (HMD) 1770 is connected to a cloud network 1710. The robot 1710, the self-driving vehicle 1720, the XR device 1730, the smartphone 1740, or the home appliance 1750 is referred to as a device. In addition, the XR device 1730 may correspond to a point cloud compressed data (PCC) device according to embodiments or may be operatively connected to the PCC device.

The cloud network 1700 may represent a network that constitutes part of the cloud computing infrastructure or is present in the cloud computing infrastructure. Here, the cloud network 1700 may be configured using a 3G network, 4G or Long Term Evolution (LTE) network, or a 5G network.

The server 1760 may be connected to at least one of the robot 1710, the self-driving vehicle 1720, the XR device 1730, the smartphone 1740, the home appliance 1750, and/or the HMD 1770 over the cloud network 1700 and may assist in at least a part of the processing of the connected devices 1710 to 1770.

The HMD 1770 represents one of the implementation types of the XR device and/or the PCC device according to the embodiments. The HMD type device according to the embodiments includes a communication unit, a control unit, a memory, an I/O unit, a sensor unit, and a power supply unit.

Hereinafter, various embodiments of the devices 1710 to 1750 to which the above-described technology is applied will be described. The devices 1710 to 1750 illustrated in FIG. 17 may be operatively connected/coupled to a point cloud data transmission device and reception according to the above-described embodiments.

<PCC+XR>

The XR/PCC device 1730 may employ PCC technology and/or XR (AR+VR) technology, and may be implemented as an HMD, a head-up display (HUD) provided in a vehicle, a television, a mobile phone, a smartphone, a computer, a wearable device, a home appliance, a digital signage, a vehicle, a stationary robot, or a mobile robot.

The XR/PCC device 1730 may analyze 3D point cloud data or image data acquired through various sensors or from an external device and generate position data and attribute data about 3D points. Thereby, the XR/PCC device 1730 may acquire information about the surrounding space or a real object, and render and output an XR object. For example, the XR/PCC device 1730 may match an XR object including auxiliary information about a recognized object with the recognized object and output the matched XR object.

<PCC+Self-driving+XR>

The self-driving vehicle 1720 may be implemented as a mobile robot, a vehicle, an unmanned aerial vehicle, or the like by applying the PCC technology and the XR technology.

The self-driving vehicle 1720 to which the XR/PCC technology is applied may represent a self-driving vehicle provided with means for providing an XR image, or a self-driving vehicle that is a target of control/interaction in the XR image. In particular, the self-driving vehicle 1720 which is a target of control/interaction in the XR image may be distinguished from the XR device 1730 and may be operatively connected thereto.

The self-driving vehicle 1720 having means for providing an XR/PCC image may acquire sensor information from sensors including a camera, and output the generated XR/PCC image based on the acquired sensor information. For example, the self-driving vehicle 1720 may have an HUD and output an XR/PCC image thereto, thereby providing an occupant with an XR/PCC object corresponding to a real object or an object present on the screen.

When the XR/PCC object is output to the HUD, at least a part of the XR/PCC object may be output to overlap the real object to which the occupant's eyes are directed. On the other hand, when the XR/PCC object is output on a display provided inside the self-driving vehicle, at least a part of the XR/PCC object may be output to overlap an object on the screen. For example, the self-driving vehicle 1720 may output XR/PCC objects corresponding to objects such as a road, another vehicle, a traffic light, a traffic sign, a two-wheeled vehicle, a pedestrian, and a building.

The virtual reality (VR) technology, the augmented reality (AR) technology, the mixed reality (MR) technology and/or the point cloud compression (PCC) technology according to the embodiments are applicable to various devices.

In other words, the VR technology is a display technology that provides only CG images of real-world objects, backgrounds, and the like. On the other hand, the AR technology refers to a technology that shows a virtually created CG image on the image of a real object. The MR technology is similar to the AR technology described above in that virtual objects to be shown are mixed and combined with the real world. However, the MR technology differs from the AR technology in that the AR technology makes a clear distinction between a real object and a virtual object created as a CG image and uses virtual objects as complementary objects for real objects, whereas the MR technology treats virtual objects as objects having equivalent characteristics as real objects. More specifically, an example of MR technology applications is a hologram service.

Recently, the VR, AR, and MR technologies are sometimes referred to as extended reality (XR) technology rather than being clearly distinguished from each other. Accordingly, embodiments of the present disclosure are applicable to any of the VR, AR, MR, and XR technologies. The encoding/decoding based on PCC, V-PCC, and G-PCC techniques is applicable to such technologies.

The PCC method/device according to the embodiments may be applied to a vehicle that provides a self-driving service.

A vehicle that provides the self-driving service is connected to a PCC device for wired/wireless communication.

When the point cloud compression data (PCC) transmission/reception device according to the embodiments is connected to a vehicle for wired/wireless communication, the device may receive/process content data related to an AR/VR/PCC service, which may be provided together with the self-driving service, and transmit the same to the vehicle. In the case where the PCC transmission/reception device is mounted on a vehicle, the PCC transmission/reception device may receive/process content data related to the AR/VR/PCC service according to a user input signal input through a user interface device and provide the same to the user. The vehicle or the user interface device according to the embodiments may receive a user input signal. The user input signal according to the embodiments may include a signal indicating the self-driving service.

The method/device according to the embodiments may refer to a point cloud data transmission/reception method/device, a point cloud data encoding/decoding method/device, a point cloud data processor, and the like.

The method/device according to the embodiments provides a method of storing and transmitting a G-PCC bitstream and related parameters.

The G-PCC bitstream according to the embodiments refers to a bitstream generated by the operations of the encoder 10002 of FIG. 1, the encoding 20001 of FIG. 2, the encoder of FIG. 4, the transmission device of FIG. 12, the audio encoding and point cloud encoding of FIG. 14, the device operation of FIG. 17.

The method/device according to the embodiments may provide a scheme for efficiently storing and transmitting a static or dynamic parameter set for a G-PCC bitstream. In addition, the method/device may efficiently store a G-PCC bitstream in a file and generate related signaling information.

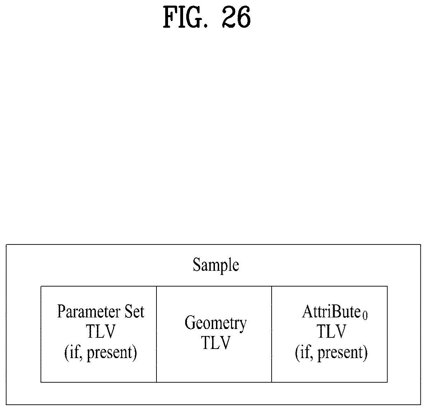

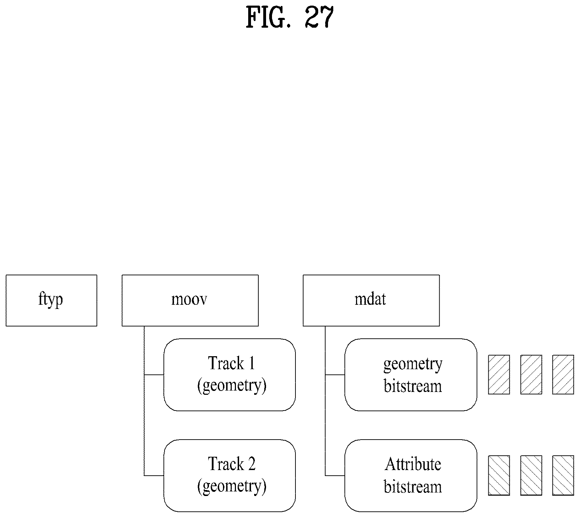

For the file according to the embodiments, refer to the description of FIGS. 26 and 27.

The method/device according to the embodiments may provide a point cloud content service for efficiently storing a G-PCC bitstream in a single track within a file and providing signaling for the same.

The method/device according to the embodiments may provide a file storage technique to support efficient access to the stored G-PCC bitstream, and may thus efficiently provide a point cloud content service.

The method/device according to the embodiments may efficiently store a G-PCC bitstream in a track of a file, propose a signaling scheme therefor, and support an efficient access to the stored G-PCC bitstream. In addition, a technique for dividing and storing the G-PCC bitstream into one or more tracks in the file is proposed.

The method/device according to the embodiments may generate parameter set information for effectively decoding and processing a G-PCC bitstream. A parameter set according to embodiments may be statically present in a sequence or may change over time. The method/device according to the embodiments may appropriately deliver the G-PCC parameter set in the file according to the degree of change of the parameter set.

A track may store a portion of a G-PCC bitstream containing one or more G-PCC components. The method/device according to the embodiments provides a scheme for track configuration and signaling related thereto.

According to the embodiments, the following terms are defined.

Point cloud frame: A set of 3D point(s) specified by Cartesian coordinates (x, y, z) and optionally a fixed set of corresponding attributes at a specific time instance.

Bounding box: A rectangular cuboid that contains a source point cloud frame.

Geometry: A set of Cartesian coordinates associated with a point cloud frame. This is the position information about points. According to embodiments, geometry may be referred to as geometry information, geometry data, or the like.

Attribute: A scalar or vector property associated with each point in a point cloud, such as color, reflectance and frame index. This is an attribute value of a point according to embodiments. According to embodiments, the attribute may be referred to as attribute information, attribute data, or the like.

Abbreviations used herein are as follows: APS (Attribute Parameter Set); ASH (Attribute Slice Header); GSH (Geometry Slice Header); GPS (Geometry Parameter Set); LSB (Least Significant Bit); RAHT (Region Adaptive Hierarchical Transform), SPS (Sequence Parameter Set), and TPS (Tile Parameter Set). The TPS is the same as the tile inventory.

Slice: A series of syntax elements representing partial or entire data of a coded point cloud frame.

3D tile: This may correspond to a rectangular cuboid in a bounding box. According to embodiments, it may be composed of a group of slices.

G-PCC tile track: A volumetric visual track that delivers a single G-PCC component or all G-PCC components corresponding to one or more G-PCC tiles.

G-PCC tile base track: A volumetric visual track that carries tile inventory and parameter sets corresponding to the G-PCC tile track.

Track (G-PCC track): A volumetric visual track that carries a coded geometry bitstream or a coded attribute bitstream, or both.

Tile: This may be a set of slices related to geometry included in the bounding box specified in the tile inventory. It may be referred to as a 3D tile or a tile according to embodiments.

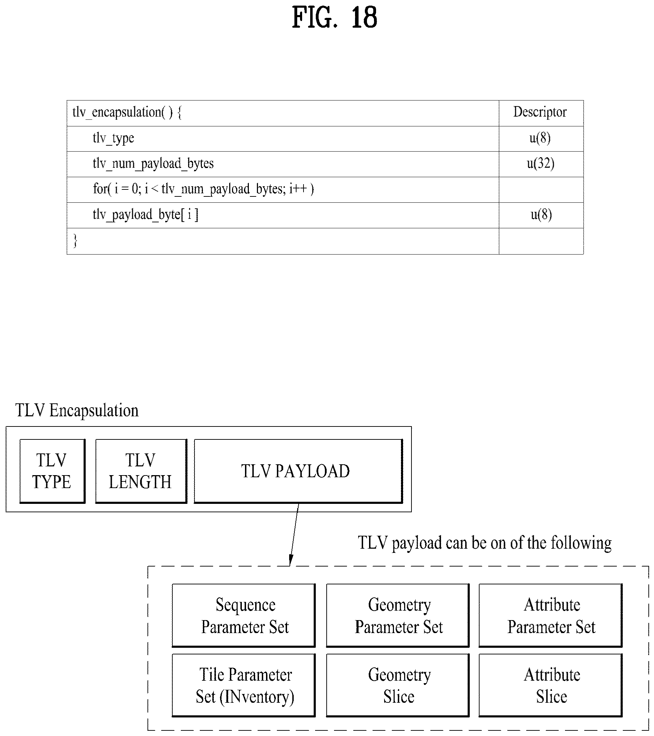

FIG. 18 illustrates an operation of encapsulating a part of a G-PCC bitstream according to embodiments.

FIG. 18 illustrates a method/device for transmitting point cloud data according to the embodiments related to the transmission operation of FIG. 2, and the operation of the file/segment encapsulator of FIGS. 14 and 15. It is related to reception of the point cloud data according to the transmission operation of FIG. 2, and the decapsulator operation for the G-PCC bitstream processed by the file/segment decapsulator operation of FIG. 16.

The method/device according to the embodiments may store a G-PCC parameter set in a sample entry, a sample group, a track group, or separate metadata in order to properly deliver a static or time-varying G-PCC parameter set in a file.

The method/device according to embodiments may store, in a track, a portion of a G-PCC bitstream including one or more G-PCC components. Signaling information (which may be referred to as metadata, parameters, or the like) related thereto may be stored in a sample entry or a sample group. Information indicating a new reference relationship between tracks may be further generated.

The method/device according to the embodiments may encode and transmit, and receive and decode point cloud data. For example, this scheme may be referred to as G-PCC. It refers to geometry-based point cloud compression data. The data represents volumemetric encoding of point clouds composed of a sequence of point cloud frames. Each point cloud frame may include point(s), position(s) thereof, and attribute(s) thereof, and may vary from one frame to another.

Source point cloud data may be partitioned into multiple slices and be encoded in a bitstream. A slice is a set of point(s) that can be encoded or decoded independently. Geometry and attribute information of each slice may be encoded or decoded independently. A tile may be a group of slice(s) with bounding box information.

The bounding box information of each tile may be specified in tile inventory. A tile may overlap another tile in the bounding box. Each slice may have an index, which may represent an identifier belonging to a tile.

The G-PCC bitstream may be composed of parameter sets, for example, a sequence parameter set, a geometry parameter set, and attribute parameter sets, geometry slice(s), and attribute slice(s).

The method/device according to the embodiments may encapsulate G-PCC data based on the type-length-value (TLV) scheme. A G-PCC TLV encapsulation structure according to embodiments will be described.

The byte stream format for use by application(s) may be composed of a sequence of type-length-value (TLV) encapsulation structures, each of which may represent a single coded syntax structure. Each TLV encapsulation structure may include a payload type, payload length, and payload bytes.

| tlv_encapsulation( ) {                                   | **Descriptor** |
|----------------------------------------------------------|----------------|
| **tlv_type**                                             | u(8)           |
| **tlv_num_payload_bytes**                                | u(32)          |
| for( i = 0; i < tlv_num_payload_bytes; i++ )             |                |
| **tly_payload_byte[ i ]**                                | u(8)           |
| }                                                        |                |

tlv_type may identify the syntax structure represented by tlv_payload_byte[ ].

| tlv_type | Syntax table | Description |
|---|---|---|
| 0 | 7.3.1.1 | Sequence parameter set |
| 1 | 7.3.1.2 | Geometry parameter set |
| 2 | 7.3.2.1 | Geometry payload |
| 3 | 7.3.1.3 | Attribute parameter set |
| 4 | 7.3.3.1 | Attribute payload |
| 5 | 7.3.2.2 | Tile inventory |
| 6 | 7.3.2.5 | Frame boundary marker |

The geometry payload may be referred to as a geometry data unit. The attribute payload may be referred to as an attribute data unit.

tlv_num_payload_bytes indicates the length in bytes of tlv_payload_byte[ ].
tlv_payload_byte[i] is the i-th byte of payload data.

As shown in FIG. 18, the transmission device 10000, the encoder 10002, the encoding 20001, the encoder of FIG. 4, the transmission device of FIG. 12, and the encoder of FIGS. 14 and 15 according to the embodiments may generate a G-PCC bitstream. In addition, the reception device 10004, the decoder 10006, the decoding 20003 of FIG. 2, the decoder of FIGS. 10 and 11, the reception device of FIG. 13, the decoding of FIG. 14, and the decoder of FIG. 16 may decode the G-PCC bitstream of FIG. 18.

The decoding process of the TLV payload according to the embodiments is performed as disclosed below. Input to this process is an ordered stream of bytes consisting of a sequence of TLV encapsulation structures. Output of this process is a sequence of syntax structures.

The decoder according to the embodiments repeatedly parses the TLV encapsulation structures until the end of the byte stream is reached. The last NAL unit in the byte stream is decoded.

After parsing each TLV, the following encapsulation structure is obtained.

The array PayloadBytes is set equal to tlv_payload_byte[ ]

The variable NumPayloadBytes is set equal to tlv_num_payload_bytes.

The parsing process corresponding to tlv_type is applied.

Hereinafter, syntax included in a bitstream according to embodiments will be described.

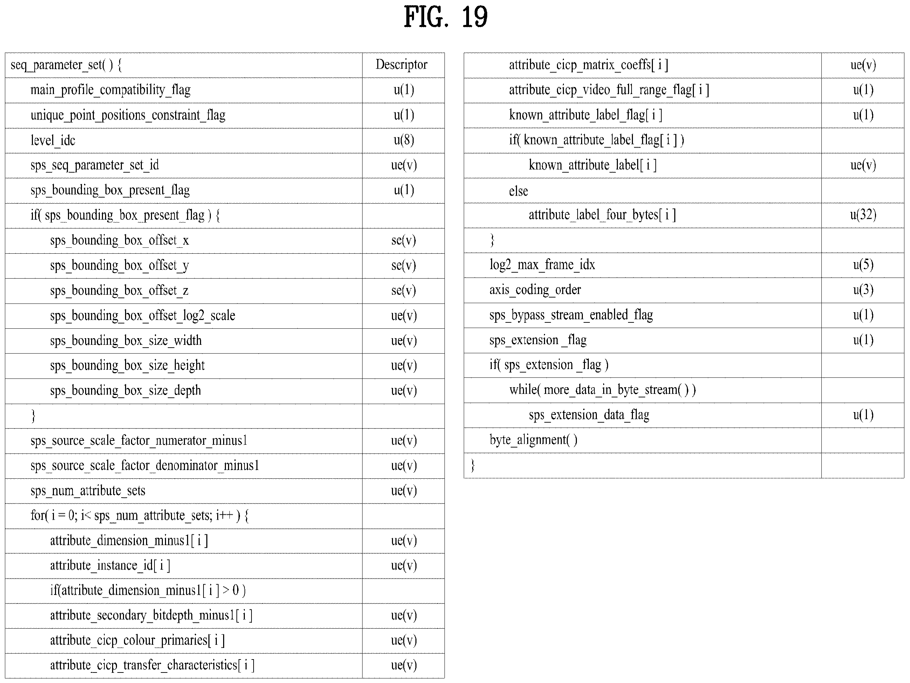

FIG. 19 shows a sequence parameter set according to embodiments.

FIG. 19 shows a detailed syntax of a sequence parameter set included in the bitstream of FIG. 18;

main_profile_compatibility_flag equal to 1 specifies that the bitstream conforms to the Main profile. main_profile_compatibility_flag equal to 0 specifies that the bitstream conforms to a profile other than the Main profile.

unique_point_positions_constraint_flag equal to 1 indicates that in each point cloud frame that refers to the current SPS, all output points have unique positions. unique_point_positions_constraint_flag_equal to 0 indicates that in any point cloud frame that refers to the current SPS, output points may have the same position.

level_idc indicates a level to which the bitstream conforms.

sps_seq_parameter_set_id may provide an identifier for the SPS for reference by other syntax elements.

sps_bounding_box_present flag equal to 1 indicates a bounding box. sps_bounding_box_present_flag equal to 0 indicates that the size of the bounding box is undefined.

sps_bounding_box_offset_x, sps_bounding_box_offset_y, and sps_boundingbox_offset_z indicate quantized x, y, and z offsets of the source bounding box in Cartesian coordinates.

sps_bounding_box_offset_log2_scale indicates the scaling factor to scale the quantized x, y, and z source bounding box offsets.

sps_bounding_box_size_width, sps_bounding_box_size_height, and sps_bounding_box_size_depth indicate the width, height, and depth of the source bounding box in Cartesian coordinates.

sps_source_scale_factor_numerator_minus1 plus 1 indicates the scale factor numerator of the source point cloud.

sps_source_scale_factor_denominator_minus1 plus 1 indicates the scale factor denominator of the source point cloud.

sps_num_attribute_sets indicates the number of coded attributes in the bitstream. The value of sps_num_attribute_sets may be in the range of 0 to 63.

attribute_dimension_minus1[i] plus 1 specifies the number of components of the i-th attribute.

attribute_instance_id[ i ] specifies the instance ID for the i-th attribute.

attribute_bitdepth_minus1[ i ] plus 1 specifies the bitdepth for the first component of the i-th attribute signal(s).

attribute_secondary_bitdepth_minus1[ i ] plus 1 specifies the bitdepth for the secondary component of the i-th attribute signal(s).

attribute_cicp_colour_primaries[ i ] indicates the chromaticity coordinates of the color attribute source primaries of the i-th attribute.

attribute_cicptransfer_characteristics[ i ] either indicates the reference opto-electronic transfer characteristic function of the color attribute as a function of a source input linear optical intensity Lc with a nominal real-valued range of 0 to 1 or indicates the inverse of the reference electro-optical transfer characteristic function as a function of an output linear optical intensity Lo with a nominal real-valued range of 0 to 1.

attribute_cicp_matrix_coeffs[ i ] describes the matrix coefficients used in deriving luma and chroma signals from the green, blue, and red, or Y, Z, and X primaries.

attribute_cicp_video_full_range_flag[ i ]

specifies the black level and range of the luma and chroma signals as derived from E'Y, E'PB, and E'PR or E'R, E'G, and E'B real-valued component signals.

known_attribute_label_flag[ i ] equal to 1 specifies that know_attribute_label is signaled for the i-th attribute. known_attribute_label_flag[ i ] equal to 0 specifies attribute_label_four_bytes is signaled for the i-th attribute.

known_attribute_label[ i ] equal to 0 specifies that the attribute is color. known_attribute_label[ i ] equal to 1 specifies that the attribute is reflectance. known_attribute_label[ i ] equal to 2 specifies the attribute is frame index.

attribute_label_four_bytes[ i ] indicates the known attribute type with the 4 byte code. A list of supported attributes and their relationship with attribute_label_four_bytes[ i ] is shown below.]

| attribute_label_four_bytes[ i ] | Attribute type |
|---|---|
| 0 | Colour |
| 1 | Reflectance |
| 2 | Frame index |
| 3 | Material ID |
| 4 | Transparency |
| 5 | Normals |
| 6...255 | Reserved |
| 256...0xffffffff | unspecified |

log2_max_frame_idx plus 1 specifies the number of bits used to signal the syntax variable frame_idx.

axis_coding_order specifies the correspondence between the X, Y, and Z output axis labels and the three position components of all points in the reconstructed point cloud RecPic[ pointIdx ][ axis ] with axis = 0 to 2.

| axis_coding_order | X | Y | Z |
|---|---|---|---|
| 0 | 2 | 1 | 0 |
| 1 | 0 | 1 | 2 |
| 2 | 0 | 2 | 1 |
| 3 | 2 | 0 | 1 |
| 4 | 2 | 1 | 0 |
| 5 | 1 | 2 | 0 |
| 6 | 1 | 0 | 2 |
| 7 | 0 | 1 | 2 |

sps_bypass_stream_enabled_flag equal to 1 specifies that the bypass coding mode may be used in reading the bitstream. sps_bypass_stream_enabled_flag equal to 0 specifies that the bypass coding mode is not used in reading the bitstream.

sps_extension_flag equal to 0 specifies that no sps_extension_data_flag syntax elements are present in the SPS syntax structure. sps_extension_flag may be equal to 0 in bitstreams conforming to the version according to the embodiments.

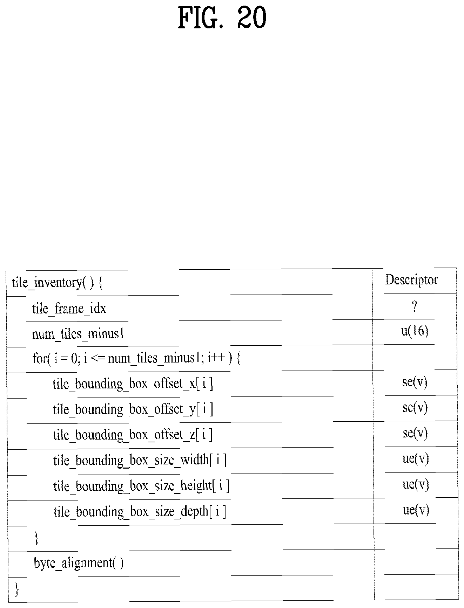

FIG. 20 shows a tile inventory (tile parameter set) according to embodiments

FIG. 20 shows syntax of a tile parameter set included in the bitstream of FIG. 18.

tile_frame_idx specifies the identifier of a cloud frame associated with the tile inventory.
num_tiles_minus1 plus 1 specifies the number of tile bounding boxes present in the tile inventory.
tile_bounding_box_offset_x[ i ], tile_bounding_box_offset_y[ i ], and tile_bounding_box_offset_z[ i ] indicate the x, y , and z offsets of the i-th tile in Cartesian coordinates.
tile_bounding_box_size_width[ i ], tile_bounding_box_size_height[ i ], and tile_bounding_box_size_depth[ i ] indicate the width, height, and depth of the i-th tile in the Cartesian coordinates.

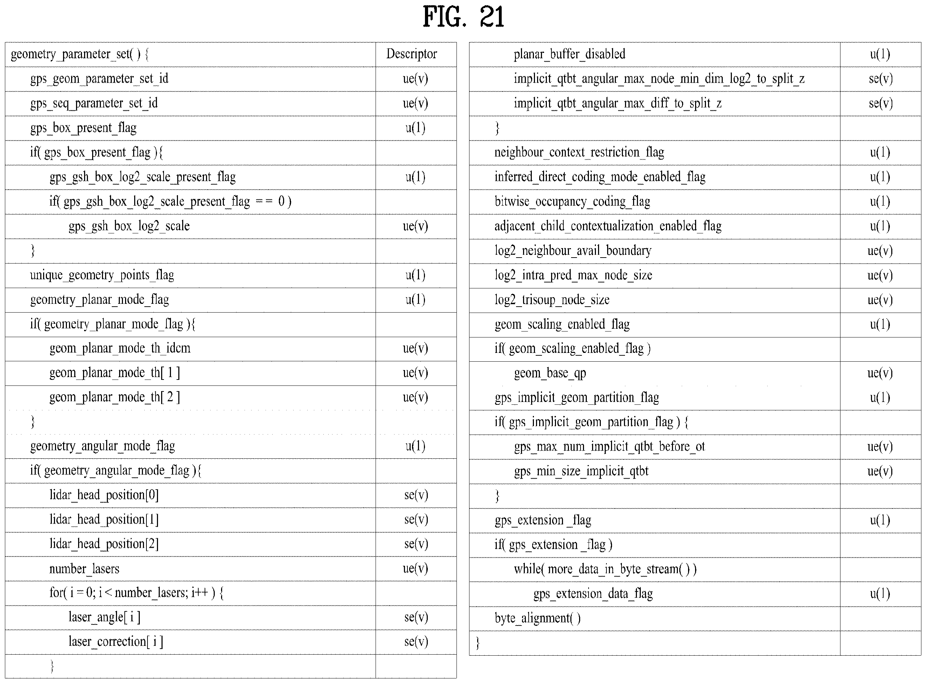

FIG. 21 shows a geometry parameter set according to embodiments.

FIG. 21 shows syntax of a geometry parameter set included in the bitstream of FIG. 18.

gps_geom_parameter_set_id specifies identification information about the GPS for reference by other syntax elements.
gps_seq_parameter_set_id specifies the value of sps_seq_parameter_set_id for the active SPS.
gps_box_present_flag equal to 1 specifies that an additional bounding box information is provided in a geometry header that references the current GPS. gps_bounding_box_present_flag equal to 0 specifies that additional bounding box information is not signaled in the geometry header.
gps_gsh_box_log2_scale_present_flag equal to 1 specifies that gsh_box_log2_scale is signaled in each geometry slice header that references the current GPS. gps_gsh_box_log2_scale_present_flag equal to 0 specifies that gsh_box_log2_scale is not signaled in each geometry slice header and common scale for all slices is signaled in gps_gsh_box_log2_scale of current GPS.
gps_gsh_box_log2_scale indicates the common scale factor of the bounding box origin for all slices that references the current GPS.
unique_geometry_points_flag equal to 1 indicates that in all slices that refer to the current GPS, all output points have unique positions within a slice. unique_geometry_points_flag equal to 0 indicates that in all slices that refer to the current GPS, two or more of the output points may have the same positions within a slice.
geometry_planar_mode_flag equal to 1 indicates that the planar coding mode is activated. geometry_planar_mode_flag equal to 0 indicates that the planar coding mode is not activated.
geom_planar_mode_th_idcm specifies the value of the threshold of activation for the direct coding mode. geom_planar_mode_th_idcm may be an integer in the range 0 to 127 inclusive.

For i in the range 0...2, geom_planar_mode_th[i] specifies the value of the threshold of activation for the planar coding mode along the i-th most probable direction for the efficient planar coding mode. geom_planar mode th[i] may be an integer in the range of 0 to 127.

geometry_angular_mode_flag equal to 1 indicates that the angular coding mode is activated. geometry_angular_mode_flag equal to 0 indicates that the angular coding mode is not activated.
lidar_head_position specifies the (X, Y, Z) coordinate of the lidar head in the coordinate system with internal axes.
number _lasers specifies the number of lasers used for the angular coding mode.

For i in the range of 1 to number_lasers, laser_angle[i] specifies the tangent of the elevation angle of the i-th laser relative to the horizontal plane defined by the 0-th and the 1-th internal axes.

laser_correction [i] specifies the correction, along the 2nd internal axis, of the i-th laser position relative to the lidar_head_position[2].
planar_buffer_disabled equal to 1 indicates that tracking the closest nodes using a buffer is not used in process of coding the planar mode flag and the plane position in the planar mode. planar_buffer_disabled equal to 0 indicates that tracking the closest nodes using a buffer is used. When not present, planar_buffer_disabled is inferred to 0.
implicit_qtbt_angular_max_node_min_dim_log2_to_split_z specifies the log2 value of a node size below which horizontal split of nodes is preferred over vertical split).
implicit_qtbt_angular_max_diff_to_split_z specifies the log2 value of the maximum vertical over horizontal node size ratio allowed to a node. When not present, implicit_qtbt_angular_max_node_min_dim_log2_to_split_z is inferred to 0.
neighbour_context_restriction_flag equal to 0 indicates that geometry node occupancy of the current node is coded with the contexts determined from neighboring nodes which are located inside the parent node of the current node.
neighbour_context_restriction _flag equal to 0 indicates that geometry node occupancy of the current node is coded with the contexts determined from neighboring nodes which is located inside or outside the parent node of the current node.

inferred_direct_coding_mode_enabled_flag equal to 1 indicates that direct_mode_flag may be present in the geometry node syntax. inferred_direct_coding_mode_enabled_flag equal to 0 indicates that direct_mode_flag is not present in the geometry node syntax.

bitwise_occupancy_coding_flag equal to 1 indicates that geometry node occupancy is encoded using bitwise contextualisation of the syntax element ocupancy_map. bitwise_occupancy_coding_flag equal to 0 indicates that geometry node occupancy is encoded using the dictionary encoded syntax element occypancy_byte.

adjacent_child_contextualization_enabled_flag equal to 1 indicates that the adjacent children of neighboring octree nodes are used for bitwise occupancy contextualization. adjacent_child_contextualization_enabled_flag equal to 0 indicates that the children of neighboring octree nodes are not used for the occupancy contextualization.

log2_neighbour_avail_boundary specifies the variable NeighbAvailabilityMask

When neighbour_context_restriction_flag is equal to 1, NeighbAvailabilityMask is set equal to 1. Otherwise, neighbour_context_restriction_flag equal to 0.

log2_intra_pred_max_node_size specifies the octree node size eligible for occupancy intra prediction.

log2_trisoup_node_size specifies the variable TrisoupNodeSize as the size of the triangle nodes.

geom_scaling_enabled_flag equal to 1 specifies that a scaling process for geometry positions is invoked during the geometry slice decoding process. geom_scaling_enabled_flagequal to 0 specifies that geometry positions do not require scaling.

geom base_qp specifies the base value of the geometry position quantization parameter.

gps_implicit_geom_partition_flag equal to 1 specifies that the implicit geometry partition is enabled for the sequence or slice. gps_implicit_geom_partition_flag equal to 0 specifies that the implicit geometry partition is disabled for the sequence or slice. When gps_implicit_geom_partition_flag is equal to 1, gps_max_num_implicit_qtbt_before_ot and gps_min_size_implicit qtbt are signaled.

gps_max_num_implicit qtbt_before_ot specifies the maximal number of implicit QT and BT partitions before OT partitions.

gps_min_size_implicit qtbtspecifies the minimal size of implicit QT and BT partitions.

gps_extension_flagequal to 0 specifies that no gps_extension_data_flag syntax elements are present in the GPS syntax structure.

gps_extension_data_flag may have any value. It may not affect the decoder of the decoder version according to the embodiments.

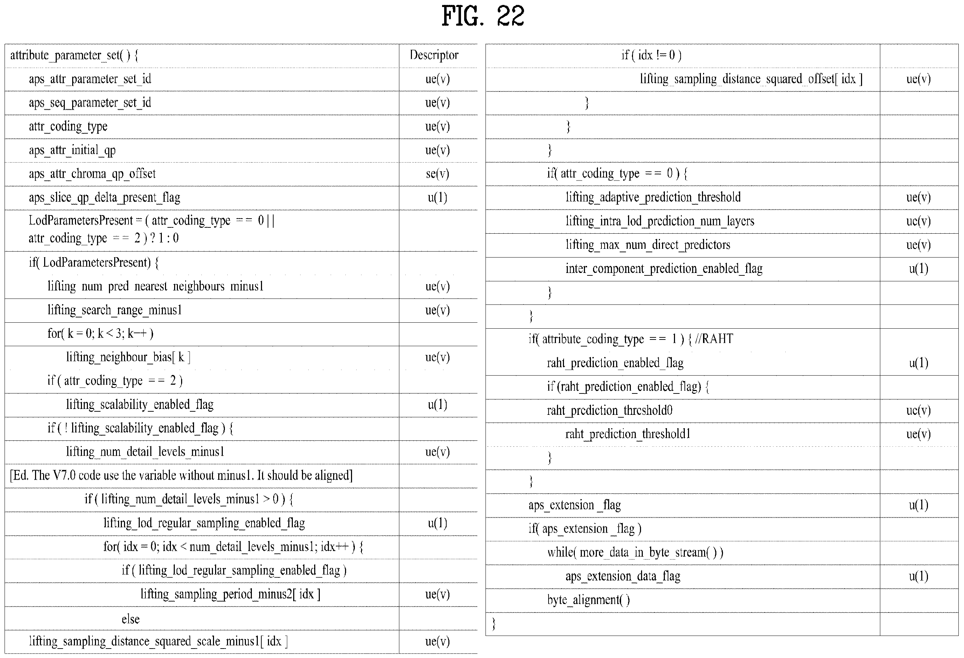

FIG. 22 shows an attribute parameter set according to embodiments.

FIG. 22 shows syntax of an attribute parameter set included in the bitstream of FIG. 18.

aps_attr_parameter_set_id provides an identifier for the APS for reference by other syntax elements.

aps_seq_parameter_set_id specifies the value of sps_seq_parameter_set_id for the active SPS.

attr_coding_type indicates the coding type for the attribute.

| attr_coding_type | coding type |
|---|---|
| 0 | Predicting Weight Lifting |
| 1 | Region Adaptive Hierarchical Transform (RAHT) |
| 2 | Fix W eight Lifting |

aps_attr_initial_qp specifies the initial value of the variable SliceQp for each slice referring to the APS. The value of aps_attr_initial_qp may be in the range of 4 to 51, inclusive.

aps_attr_chroma_qp_offset specifies an offset to the initial quantization parameter signaled by the syntax aps_attr_initial_qp.

aps_slice_qp_delta_present_flag equal to 1 specifies that the ash_attr_qp_delta_luma and ash_attr_qp_delta_chroma syntax elements are present in the ASH. aps_slice_qp_present_flag equal to 0 specifies that the ash_attr_qp_delta_luma and ash_attr_qp_delta chroma syntax elements are not present in the ASH.

lifting_num_pred_nearest_neighbours_minus1 plus 1 specifies the maximum number of nearest neighbors to be used for prediction.

The value of NumPredNearestNeighbours is set equal to lifting_num_pred_nearest_neighbours.

lifting_num_detail_levels_minus1 specifies the number of levels of detail for the attribute coding. The variable LevelDetailCount specifies the number of levels of detail as follows:

$$LevelDetailCount = lifting\_num\_detail\_levels\_minus1 + 1$$

lifting_neighbour_bias[ k ] specifies a bias used to weight the k-th components in the calculation of the Euclidean distance between two points as part of the nearest neighbor derivation process.

lifting_scalability_enabled_flag equal to 1 specifies that the attribute decoding process allows the pruned octree decode result for the input geometry points. lifting_scalability_enabled_flagequal to 0 specifies that the attribute decoding process requires the complete octree decode result for the input geometry points.

lifting_search_range_minus1 plus 1 specifies the search range used to determine the nearest neighbors to be used for prediction and to build distance-based levels of detail. LiftingSearchRange = lifting_search_range_minus1 + 1

lifting_lod_regular_sampling_enabled_flagequal to 1 specifies that levels of detail are built using a regular sampling strategy. lifting_lod_regular_sampling_enabled_flag equal to 0 specifies that a distance-based sampling strategy is used instead.

lifting_sampling_period_minus2[ idx ] plus 2 specifies the sampling period for the level of detail idx.

lifting_sampling_distance_squared_scale_minus1[ idx ] plus 1 specifies the scaling factor for derivation of the square of the sampling distance for the level of detail idx.

lifting_sampling_distance_squared_offset[ idx ] specifies the offset for derivation of the square of the sampling distance for the level of detail idx.

lifting_adaptive_prediction_threshold specifies the threshold to enable adaptive prediction.

The variable AdaptivePredictionThreshold specifying the threshold to switch to the adaptive predictor selection mode is set equal to lifting_adaptive_prediction_threshold.

lifting_intra_lod_prediction_num_layers specifies the number of LOD layers where decoded points in the same LOD layer may be referred to generate prediction value of a target point. lifting_intra_lod_prediction_num_layers equal to LevelDetailCount indicates that the target point may refer to decoded points in the same LOD layer for all LOD layers. lifting_intra_lod_prediction_num_layers equal to 0 indicates that the target point may not refer to decoded points in the same LOD layer for any LOD layers. lifting_intra_lod_prediction_num_layers may be in the range of 0 to LevelDetailCount.

lifting_max_num_direct_predictors specifies the maximum number of predictors to be used for direct prediction.

inter_component_prediction_enabled_flagequal to 1 specifies that the primary component of a multi component attribute is used to predict the reconstructed value of non-primary components. inter_component_prediction_enabled_flag equal to 0 specifies that all attribute components are reconstructed independently.

raht_prediction_enabled_flag equal to 1 specifies that the transform weight prediction from the neighbor points is enabled in the RAHT decoding process. raht_prediction_enabled_flag equal to 0 specifies that the transform weight prediction from the neighbor points is enabled in the RAHT decoding process.

raht_prediction_threshold0 specifies the threshold to terminate the transform weight prediction from neighbor points.

raht_prediction_threshold1 specifies the threshold to skip the transform weight prediction from neighbor points.

aps_extension_flag equal to 0 specifies that no aps_extension_data_flag syntax elements are present in the APS syntax structure.

aps_extension_data_flag may have any value. It may not affect the decoder conforming to the version according to the embodiments.

A frame contained in the bitstream of FIG. 18 according to embodiments may include a frame boundary marker. The frame boundary marker may mark the end of the current frame.

```
frame_boundary_marker( ) {
/* this syntax structure is intentionally empty */
}
```

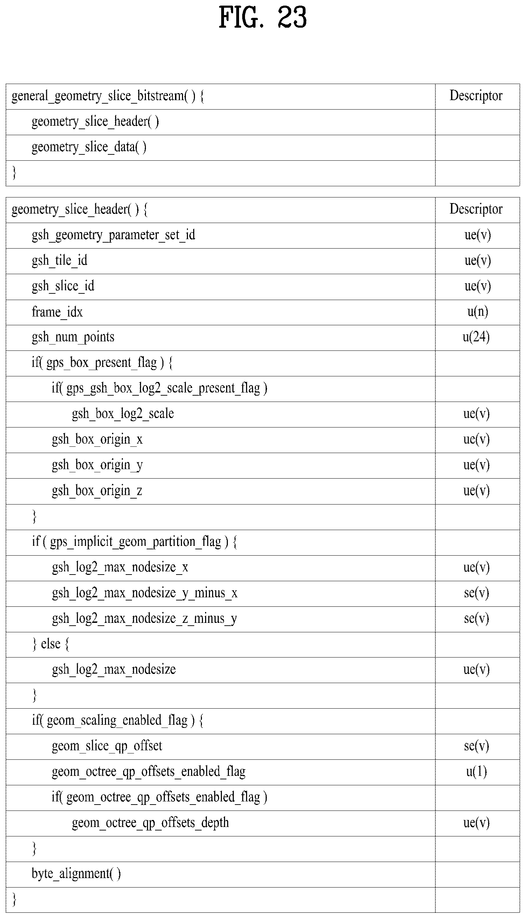

FIG. 23 shows a geometry slice header according to embodiments.

FIG. 23 shows syntax of a geometry slice header included in the bitstream of FIG. 18.

gsh_geometry_parameter_set_id specifies the value of gps_geom_parameter_set_id of the active GPS.
gsh_tile_id specifies the value of the tile id that is referred to by the GSH.
gsh_slice_id identifies the slice header for reference by other syntax elements.
frame_idx specifies the log2_max_frame_idx + 1 least significant bits of a frame number counter. Consecutive slices with different values of frame_idx form parts of different output point cloud frames. Consecutive slices with identical values of frame_idx without an intervening frame boundary marker data unit form parts of the same output point cloud frame.
gsh_num_points specifies the maximum number of coded points in the slice. gsh_num_points is greater than or equal to the number of decoded points in the slice.
gsh_box_log2_scale specifies the scaling factor of bounding box origin for the slice.
gsh_box_origin_x specifies the x value of the bounding box origin scaled by the value of gsh_box_log2_scale.
gsh_box_origin_y specifies the y value of the bounding box origin scaled by the value of gsh_box_log2_scale.
gsh_box_origin_z specifies the z value of the bounding box origin scaled by the value of gsh_box_log2_scale.

The variables slice_origin_x, slice_origin_y, and slice_originz may be derived as follows:

If gps_gsh_box_log2_scale_present_flag is equal to 0,

originScale is set equal to gsh_box_log2_scale

Otherwise ( gps_gsh_box_log2_scale_present_flag is equal to 1 ),

originScale is set equal to gps_gsh_box_log2_scale

If gps_box_present_flag is equal to 0,

the value of slice_origin_x and slice_origin_y and slice_origin_z are inferred to be 0.

Othersise (gps_box_present_flag is equal to 1), the following applies:

slice_origin_x = gsh_box_origin_x << originScale

slice_origin_y = gsh_box_origin_x << originScale

slice_origin_z = gsh_box_origin_x << originScale

gsh_log2_max_nodesize_x may specify the bounding box size in the x dimension, i.e., MaxNodesizeXLog2 that is used in the decoding process as follows: MaxNodeSizeXLog2 = gsh_log2_max_nodesize_x, MaxNodeSizeX = 1 << MaxNodeSizeXLog2.

gsh_log2_max_nodesize_y_minus_x may specify the bounding box size in the y dimension, i.e., MaxNodesizeYLog2 that is used in the decoding process as follows: MaxNodeSizeYLog2 = gsh_log2_max_nodesize_y_minus_x + MaxNodeSizeXLog2, MaxNodeSizeY = 1 << MaxNodeSizeYLog2.

gsh_log2_max_nodesize_z_minus_y may specify the bounding box size in the z dimension, i.e., MaxNodesizeZLog2 that is used in the decoding process as follows: MaxNodeSizeZLog2 = gsh_log2_max_nodesize_z_minus_y + MaxNodeSizeYLog2, MaxNodeSizeZ = 1 << MaxNodeSizeZLog2.

When gps_implicit_geom_partition_flag equals to 1, gsh_log2_max_nodesize may be derived as follows:

gsh_log2_max_nodesize = max{ MaxNodeSizeXLog2, MaxNodeSizeYLog2, MaxNodeSizeZLog2}.

gsh_log2_max_nodesize specifies the size of the root geometry octree node when gps_implicit_geom_partition_flag is equal to 0. The variables MaxNodeSize, and MaxGeometryOctreeDepth may be derived as follows: MaxNodeSize = 1 <<

gsh_log2_max_nodesize, MaxGeometryOctreeDepth = gsh_log2_max_nodesize − log2_trisoup_node_size.

geom_slice_qp_offset specifies an offset to the base geometry quantization parameter geom base_qp.
geom_octree_qp_offsets_enabled_flag equal to 1 specifies that geom_node_qp_offset_eq0_flag may be present in the geometry node syntax. geom_octree_qp_offsets_enabled_flag equal to 0 specifies that geom_node_qp_offset_eq0_flag is not present in the geometry node syntax.
geom_octree_qp_offsets_depth may specify, when present, the depth of the geometry octree when geom_node_qp_offset_eq0_flag is present in the geometry node syntax.
geometry_slice_data() may include geometry or geometry related data associated with a part or the entirety of point clouds.

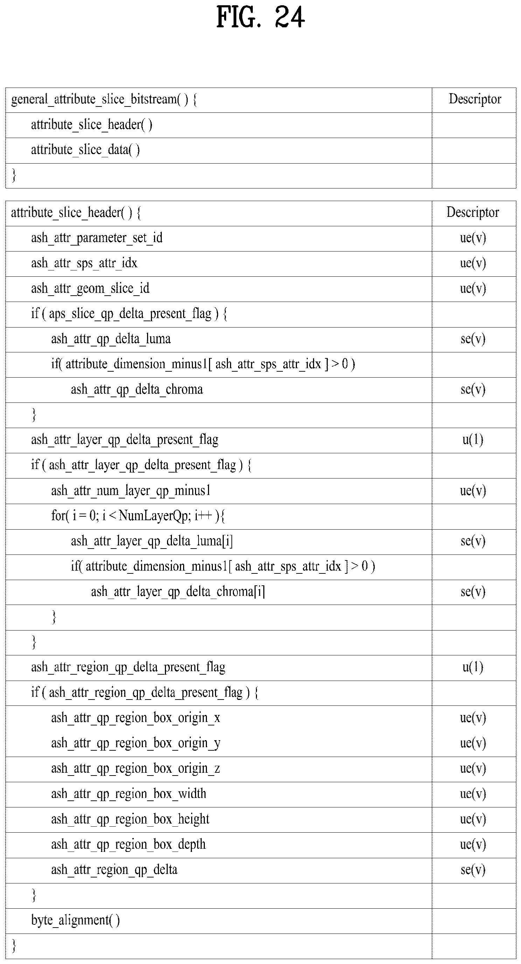

FIG. 24 shows an attribute slice according to embodiments.
FIG. 24 shows syntax of an attribute slice included in the bitstream of FIG. 18.

ash_attr_parameter_set_id specifies the value of aps_attr_parameter_set_id of the active APS.
ash_attr_sps_attr_idx specifies the order of attribute set in the active SPS.
ash_attr_geom_slice_id may specify the value of gsh_slice_id of the active geometry slice header.
ash_attr_layer_qp_delta_present_flag equal to 1 may specify that the ash_attr_layer_qp_delta_luma and ash_attr_layer_qp_delta_chroma syntax elements are present in current ASH. ash_attr_layer_qp_delta_present_flag equal to 0 may specify that the ash_attr_layer_qp_delta_luma and ash_attr_layer_qp_delta_chroma syntax elements are not present in current ASH.
ash_attr_num_layer_qp_minus1 plus 1 specifies the number of layers in which ash_attr_qp_delta_luma and ash_attr_qp_delta_chroma are signaled. When ash_attr_num_layer_qp is not signaled, the value of ash_attr_num_layer_qp may be inferred to be 0. The value of NumLayerQp may be derived as follows: NumLayerQp = num_layer_qp_minus1 + 1.
ash_attr_qp_delta_luma may specify the luma delta qp from the initial slice qp in the active attribute parameter set.
ash_attr_qp_delta_chroma may specifythe chroma delta qp from the initial slice qp in the active attribute parameter set.

The variables InitialSliceQpY and InitialSliceQpC may be derived as follows:

InitialSliceQpY = aps_attrattr_initial_qp + ash_attr_qp_delta_luma;

$$\text{InitialSliceQpC} \quad = \quad \text{aps\_attrattr\_initial\_qp} \quad +$$

$$\text{aps\_attr\_chroma\_qp\_offset} + \text{ash\_attr\_qp\_delta\_chroma}.$$

ash_attr_layer_qp_delta_luma may specify the luma delta qp from the InitialSliceQpY in each layer.
ash_attr_layer_qp_delta_chroma may specify the chroma delta qp from the InitialSliceQpC in each layer.

The variables SliceQpY[ i ] and SliceQpC[ i ] with i = 0,..., NumLayerQPNumQPLayer - 1 may be derived as follows:

```
for (i = 0; i < NumLayerQPNumQPLayer; i++) {
SliceQpY[ i ] = InitialSliceQpY + ash_attr_layer_qp_delta_luma[ i ]
SliceQpC[ i ] = InitialSliceQpC + ash_attr_layer_qp_delta_chroma[ i ]
}
```

ash_attr_region_qp_delta_present_flag equal to 1 may indicate the ash_attr_region_qp_delta and region bounding box origin and size are present in current ASH. ash_attr_region_qp_delta_present_flag equal to 0 may indicate the ash_attr_region_qp_delta and region bounding box origin and size are not present in current ASH.
ash_attr_qp_region_box_origin_x may indicate the x offset of the region bounding box relative to slice_origin_x.
ash_attr_qp_region_box_origin_y may indicate the y offset of the region bounding box relative to slice_origin_y.
ash_attr_qp_region_box_origin_z may indicate the z offset of the region bounding box relative to slice_origin_z.
ash_attr_qp_region_box_size_width may indicate the width of the region bounding box.
ash_attr_qp_region_box_size_height may indicate the height of the region bounding box.
sh_attr_qp_region_box_size_depth may indicate the depth of the region bounding box.
ash_attr_region_qp_delta may specify the delta qp from the SliceQpY[i] and SliceQpC[i] of the region specified by ash_attr_qp_region_box.

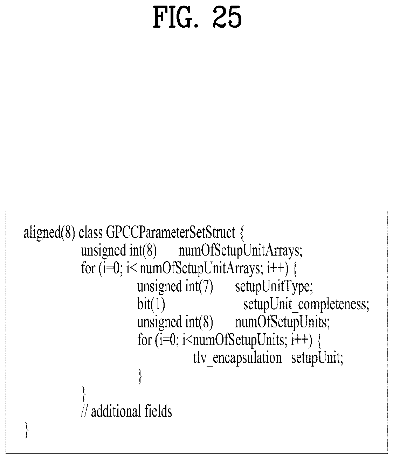

The variable RegionboxDeltaQp specifying the region box delta quantization parameter may be set equal to ash_attr_region_qp_delta.
attribute_slice_data( ) may contain the attribute or attribute related data associated with a part or the entirety of point clouds.
The method/device according to the embodiments, for example, the transmission device 10000, the encoding and transmission 20001 and 20002, the file/segment encapsulator of FIGS. 14 and 15), the device of FIG. 17, or the like may encapsulate a bitstream (see FIG. 18, etc.) encoded as in FIGS. 25 to 27 in a file (container) structure to efficiently transmit the same.
The reception device 10004, the transmission and decoding 20002 and 20003, the file/segment decapsulator of FIGS. 14 and 16, the device of FIG. 17, or the like may receive a file (container) structure such as the structure shown in FIGS. 25 to 27, parse and decode a bitstream such as the bitstream of FIG. 18 from the file, and render and provide point cloud data.
Hereinafter, such file structure transfer, or a G-PCC system, will be described.
The method/device according to the embodiments may encapsulate a G-PCC bitstream in a track in a file. The G-PCC bitstream may be composed of type-length-value encapsulation structures (FIG. 18) including parameter sets, a coded geometry bitstream, and zero or one or more coded attribute bitstreams.
The method/device according to the embodiments may store the G-PCC bitstream in a single track or multiple tracks.
The single track and/or multiple tracks of a file according to embodiments may include the following data.

Volumetric visual track

A volumetric visual track may be identified by the volumetric visual media handler type 'volv' in the HandlerBox of the MediaBox, and by a volumetric visual media header. Multiple volumetric visual tracks may be present in the file.

Volumetric visual media header
Box Type:       'vvhd'
Container:      MediaInformationBox
Mandatory:      Yes

(continued)

Volumetric visual media header

Quantity:      Exactly one

Volumetric visual tracks may use a VolumetricVisualMediaHeaderBox in the MediaInformationBox.

```
aligned(8) class VolumetricVisualMediaHeaderBox
  extends FullBox('vvhd', version = 0, 1) {

}
 "version" may be an integer that specifies the version of this box Volumetric
 visual sample entry
```

VolumetricVisualSampleEntr

Volumetric visual tracks may use VolumetricVisualSampleEntry.

```
 class VolumetricVisualSampleEntry(codingname)
 extends SampleEntry (codingname){
 unsigned int(8)[32] compressorname;
 // other boxes from derived specifications
 }
```

compressorname is a name, for informative purposes. It may be formatted in a fixed 32-byte field, with the first byte set to the number of bytes to be displayed, followed by the number of bytes of displayable data encoded using UTF-8, and then padded to complete 32 bytes (including the size byte). The field may be set to 0.

Volumetric visual samples

The format of a volumetric visual sample may be defined by the coding system.
A common data structure included in files and tracks according to embodiments are as follows.

G-PCC decoder configuration box

A G-PCC decoder configuration box may include the GPCCDecoderConfigurationRecord().

```
 class GPCCConfigurationBox extends Box('gpcC') {
 GPCCDecoderConfigurationRecord() GPCCConfig;
 }
```

G-PCC decoder configuration record may specify the G-PCC decoder configuration information for geometry-based point cloud content. This G-PCC decoder configuration record may contain a version field. Incompatible changes to the record may be indicated by a change of the version number. The decoder may not decode the record or stream if the version number is not recognized.
Compatible extensions to this record may extend the record and may not change the configuration version code. The decoder may ignore unrecognized data.
The values for profile_idc, profile_compatibility_flags, and level_idc are valid for all parameter sets that are activated when the stream described by this record is decoded (referred to as "all the parameter sets" in the following sentences in this paragraph). Specifically, the following restrictions apply:
The values for profile_idc, profile_compatibility_flags, and level_idc are valid for all parameter sets that are activated when the stream described by this record is decoded (referred to as "all the parameter sets" in the following sentences in this paragraph). Specifically, the following restrictions apply:
The profile indication profile_idc may indicate a profile to which the stream associated with this configuration record conforms.
Each bit in profile_compatibility_flags may be set when all the parameter sets are set.
The level indication level_idc may indicate a level of capability equal to or greater than the highest level indicated for the highest tier in all the parameter sets.
The setupUnit array may include G-PCC TLV encapsulation structures that are constant for the stream referred to by the sample entry in which the decoder configuration record is present.

The type of G-PCC encapsulation structures may indicate SPS, GPS, APS, or TPS.

```
aligned(8) class GPCCDecoderConfigurationRecord {
        unsigned int(8)        configurationVersion = 1;
        unsigned int(8)        profile_idc;
        unsigned int(24)       profile_compatibility_flags;
        unsigned int(8)        level_idc;
        unsigned int(8)        numOfSetupUnitArrays;
        for (i=0; i< numOfSetupUnitArrays; i++) {
                unsigned int(7)        setupUnitType;
                bit(1)          setupUnit_completeness;
                unsigned int(8)        numOfSetupUnits;
                for (i=0; i<numOfSetupUnits; i++) {
                        tlv_encapsulation        setupUnit;
                }
        }
        // additional fields
}
```

configuration Version is a version field. Incompatible changes to the record may be indicated by a change of version number.

profile_idc may indicate the profile code of G-PCC.

profile_compatibility_flags equal to 1 may indicate that the bitstream conforms to the profile indicated by profile_idc.

level_idc may indicate the level code of G-PCC.

numOfSetupUnitArrays may specify the number of arrays of G-PCC setup units of the indicated type by the setupUnitType field.

setupUnitType indicates the type of signaled G-PCC setup units. It may be one of values indicating SPS, GPS, APS, and TPS.

setupUnit_completeness equal to 1 may indicate that all setup units of the given type are in the following array and none are in the stream. setupUnit_completeness equal to 0 may indicate that additional setup units of the indicated type may be in the stream.

numOfSetupUnits may specify the number of G-PCC setup units of the type indicated by the setupUnitType field signaled in the record.

setupUnit is an instance of the TLV encapsulation structure carrying the setup unit of the indicated type, e.g., SPS, GPS, APS, or TPS.

A G-PCC decoder configuration record according to embodiments may be as follows.

```
aligned(8) class GPCCDecoderConfigurationRecord {
        unsigned int(8)        configurationVersion = 1;
        unsigned int(8)        profile_idc;
        unsigned int(24)       profile_compatibility_flags;
        unsigned int(8)        level_idc;
        GPCCParameterSetStruct();
        // additional fields
    }
```

FIG. 25 shows a structure of a G-PCC parameter set according to embodiments.
FIG. 25 shows a structure of a G-PCC parameter set including parameter sets included in the bitstream of FIG. 18.
The structure information of FIG. 25 may include G-PCC TLV encapsulation structures that carry G-PCC parameter sets such as a sequence parameter set (SPS), a geometry parameter set (GPS), an attribute parameter set (APS), and a tile parameter set (TPS).
numOfSetupUnitArrays may specify the number of arrays of G-PCC setup units of the type indicated by the setupUnitType field.
setupUnitType indicates the type of signaled G-PCC setup units. It may be one of values indicating SPS, GPS, APS, and TPS.
setupUnit_completeness equal to 1 may indicate that all setup units of the given type are in the following array and none are in the stream. setupUnit_completeness equal to 0 may indicate that additional setup units of the indicated type may be in the stream.
numOfSetupUnits may specify the number of G-PCC setup units of the type indicated by setupUnitType field signaled in the structure.
setupUnit is an instance of the TLV encapsulation structure carrying the setup unit of the indicated type, e.g., SPS, GPS, APS, or TPS.

The GPCCParameterSetBox may contain GPCCParameterSetStruct().

```
class GPCCParameterSetBox extends Box('gpsb') {
        GPCCParameterSetStruct();
}
G-PCC entry information structure
class GPCCEntryInfoBox extends Box('gpsb') {
        GPCCEntryInfoStruct ();
}


aligned(8) class GPCCEntryInfoStruct {
        unsigned int (1)      main_entry_flag;
        unsigned int(1)       dependent_on;
        if (dependent_on) {       //non-entry
                unsigned int(16)      dependency_id;
        }
}
```

main_entry may indicate an entry point for decoding the G-PCC bitstream or not.
dependent on may indicate whether decoding is dependent on others. When it is present in the sample entry, decoding of samples in the track may depend on other tracks.
dendency_id indicates the identifier of tracks to decode the associated data. When it is present in the sample entry, it may indicate the identifier of a track carrying a G-PCC sub-bitstream which decoding of samples in the track is dependent on. When it is present in the sample group, it may indicate the identifier of samples carrying a G-PCC sub-bitstream which decoding of associated samples is dependent on.

```
        (G-PCC component information structure)
        aligned(8) class GPCCComponentTypeStruct {
                unsigned int(8)      numOfComponents;
                for (i=0; i< numOfComponents; i++) {

                        unsigned int(8)      gpcc_type;
                        if(gpcc_type == 4)
                        unsigned int(8)       AttrIdx;
                }
                // additional fields
        }
```

numOfComponents indicates the number of component type signaled in this structure.
gpcc_type indicates the type of G-PCC component as specified in the table below.

| gpcc_type value | Description |
|---|---|
| 1 | Reserved |
| 2 | Geometry component |
| 3 | Reserved |
| 4 | Attribute component |
| 5..31 | Reserved. |

AttrIdx indicates the identifier of the attribute signaled in SPS().

This box may contain GPCCComponentTypeStruct. When this box is present in a sample entry of tracks carrying a part or all of G-PCC bitstreams, it may indicate one or more G-PCC components types carried by the respective track.

```
ligned(8) class GPCCComponentTypeBox extends FullBox('gtyp', version
= , 0) {
GPCCComponentTypeStruct();
}
```

A file or track according to embodiments may include a sample group.

Sample Group

G-PCC parameter set sample group

The method/device according to the embodiments may group one or more samples to which the same G-PCC parameter set can be applied, and signal a parameter set related to the sample group as follows.

The 'gpsg' grouping_type for sample grouping may represent the assignment of samples in tracks carrying a part or all of G-PCC bitstreams to G-PCC parameter sets (e.g., SPS, GPS, APS, TPS) carried in this sample group. When a SampleToGroupBox with grouping_type equal to 'gpsg' is present, an accompanying SampleGroupDescriptionBox with the same grouping type may be present, and contain the ID of this group which the samples belong to.

```
aligned(8) class GPCCParameterSetSampleGroupDescriptionEntry()
 [00631] extends SampleGroupDescriptionEntry('gpsg') {
 GPCCParameterSetStruct ();
}
```

GPCCParameterSetStruct () may contain G-PCC parameter sets (e.g., SPS, GPS, APS, TPS) that are applied to samples of this sample group.

G-PCC entry information sample group

One or more samples to which the same entry information may be applied may be grouped, and entry information related to the sample group may be signaled as follows.

The 'gpei' grouping_type for sample grouping may represent the assignment of samples in the track to the entry information (e.g., whether the associated samples are entry point or not) carried in this sample group. When a SampleToGroupBox with grouping_type equal to 'gpei' is present, an accompanying SampleGroupDescriptionBox with the same grouping type may be present, and contain the ID of this group to which the samples belong.

```
aligned(8) class GPCCParameterSetSampleGroupDescriptionEntry()
extends SampleGroupDescriptionEntry('gpei') {
GPCCEntryInfoStruct ();
}
```

GPCCEntryInfoStruct may contain the entry information (e.g., whether the associated samples are entry point or not) that is applied to samples of this sample group.

G-PCC component type sample group

The method/device according to the embodiments may group one or more samples to which the same component type information may be applied, and signal component type information related to the sample group as follows.

The 'gpct' grouping_type for sample grouping may represents the assignment of samples in the track to the component type information in this sample group. When a SampleToGroupBox with grouping_type equal to 'gpct' is present, an accompanying SampleGroupDescriptionBox with the same grouping type may be present, and contain the ID of this group to which the samples belong to.

```
aligned(8) class GPCCParameterSetSampleGroupDescriptionEntry()
extends SampleGroupDescriptionEntry('gpct') {
GPCCComponentTypeStruct ();
}
```

GPCCComponentTypeStruct may contain the component type information that is applied to samples of this sample group. When multiple types are present in this structure, the order of signaled component type indicates the order of the associated sub-sample in each sample of associated samples of this sample group.

Track Grouping

The method/device according to the embodiments may group tracks.

G-PCC parameter set track group

The method/device according to the embodiments may group one or more tracks to which the same G-PCC parameter set may be applied and signal G-PCC parameter set information related to the track group as follows.

TrackGroupTypeBox with track_group_type equal to 'gptg' may indicate that this track belongs to a group of tracks that are associated with G-PCC parameter sets (e.g., SPS, GPS, APS, TPS).

Tracks belonging to the same G-PCC parameter sets (e.g., SPS, GPS, APS, TPS) may have the same value of track_group_id for track_group_type 'gptg', and the track_group_id of tracks from one G-PCC parameter sets (e.g., SPS, GPS, APS, TPS) may differ from the track_group_id of tracks from any other G-PCC parameter sets.

```
aligned(8) class GPCCParameterSetGroupBox extends
TrackGroupTypeBox('gptg') {
GPCCParameterSetStruct ();
}
```

GPCCParameterSetStruct may contain the G-PCC parameter sets (e.g., SPS, GPS, APS, TPS) that are applied to tracks of this group. When timed metadata tracks carrying dynamically changed G-PCC parameter sets or the sample group carrying G-PCC parameter sets presents, the signaled GPCCParameterSetStruct ()may indicate the initial G-PCC parameter sets.

FIG. 26 shows a sample structure for single-track encapsulation according to embodiments.

The method/device according to the embodiments may encapsulate and decapsulate the G-PCC bitstream based on a single track (see FIG. 26) and/or multiple tracks (see FIG. 27). For example, this operation may be performed by the transmission device 10000, the reception device 10004, the encoding and transmission 20001 and 20002, the transmission and decoding 20002 and 20003, the file/segment encapsulator and file/segment decapsulator of FIGS. 14 to 16.

Single-track Encapsulation of G-PCC Data in ISOBMFF

When the G-PCC bitstream is carried in a single track, it requires the G-PCC encoded bitstream to be represented by a single-track declaration. Single-track encapsulation of G-PCC data could may utilize the simple ISOBMFF encapsulation by storing the G-PCC bitstream in a single track without further processing.

Each sample in this G-PCC bitstream track may contain one or more G-PCC components. That is, each sample may be compose of one or more TLV encapsulation structures. The sample structure may be configured as shown in FIG. 26 when the G-PCC bitstream is stored in a single track.

Hereinafter, a data structure included in a single track will be described.

Sample entry

Sample Entry Type:     'gpe1', 'gpeg'
Container:             SampleDescriptionBox
Mandatory:             A 'gpe1' or 'gpeg' sample entry is mandatory
Quantity:              One or more sample entries may be present

The G-PCC bitstream track may use VolumetricVisualSampleEntry with a sample entry type of 'gpe1' or 'gpeg'.

GPCC Configuration Box

A G-PCC bitstream track sample entry may contain GPCCConfigurationBox. The setupUnit array may include TLV encapsulation structures containing one SPS.
Under the 'gpe1' sample entry, all parameter sets, such as SPS, GPS, and APS, and tile inventory, may be in the setupUnit array.
Under the 'gpeg' sample entry, the parameter sets may be present in this array, or in the stream.

```
aligned(8)          class          GPCCSampleEntry()          extends
VolumetricVisualSampleEntry ('gpe1') {
           GPCCConfigurationBox config; //mandatory


      }
```

A sample format of the single track according to embodiments may be as follows.

Sample format

Each G-PCC bitstream sample may correspond to a single point cloud frame and may be comprised of one or more TLV encapsulation structures which belong to the same presentation time.
Each TLV encapsulation structure may contain a single type of G-PCC payload (e.g., geometry slice, attribute slice). A sample may be self-contained (e.g., a sync sample).

```
aligned(8) class GPCCSample
{
      unsigned int GPCCLength = sample_size; //Size of Sample
      for (i=0; i< GPCCLength; )          // to end of the sample
      {
            tlv_encapsulation      gpcc_unit;
            i += (1+4)+ gpcc_unit.tlv_num_payload_bytes;
      }
}
```

gpcc_unit may contain an instance of G-PCC TLV encapsulation structure containing a single G-PCC component. The G-PCC component may be referred to as a G-PCC data unit.

A track according to the embodiments may include a sub-sample.

Sub-sample

G-PCC sub-sample may contain only one G-PCC TLV encapsulation structure. SubSampleInformation may be present in SampleTableBox, or in the TrackFragmentBox of each of MovieFragmentBoxes.

When the 8-bit type value of TLV encapsulation structure, if present, and the TLV encapsulation structure contains attribute payload, the 6-bit value of attribute index may be included in the 32-bit codec_specific_parameters field of the sub-sample entry in the SubSampleInformationBox. The type of each sub-sample may be identified by parsing the codec_specific_parameters field of the sub-sample entry in SubSampleInformationBox. The codec_specific_parameters field of the SubsampleInformationBox may be defined as follows:

```
unsigned int(8) PayloadType;
if (PayloadType == 4) { // attribute payload
unsigned int(6) AttrIdx;
bit(18) reserved = 0;
}
else
    bit(24) reserved = 0;
```

PayloadType may indicate the tlv_type of the TLV encapsulation structure in the sub-sample.

AttrIdx may indicate the ash_attr_sps_attr_idx of the TLV encapsulation structure containing attribute payload in the sub-sample.

FIG. 27 shows a multi-track container according to embodiments.

FIG. 27 shows a multi-track structure in which the bitstream of FIG. 18 is encapsulated.

For example, the operations may be performed by the transmission device 10000, the reception device 10004, the encoding and transmission 20001 and 20002, the transmission and decoding 20002 and 20003, the file/segment encapsulator and file/segment decapsulator of FIGS. 14 to 16, and the like.

Different G-PCC components are examples of a multi-track container of a G-PCC bitstream carried in an individual track, as shown in FIG. 27.

Multi Track Container of G-PCC Bitstream

When the G-PCC bitstream is carried in multiple tracks, each geometry or attribute sub-bitstream may be mapped to individual tracks. There may be two types of G-PCC component tracks: a geometry track and an attribute track. The geometry track may carry a geometry sub-stream, and the attribute track may carry a single type of the attribute sub-stream. Each sample in the track may contain at least one TLV encapsulation structure carrying a single G-PCC component (not both geometry and attribute data, or multiplexing of different attribute data). The general layout of a multi-track ISOBMFF G-PCC container is shown in FIG. 27.

Multi-track encapsulation of the G-PCC bitstream may enable the G-PCC player (10004, etc.) to effectively access the components. For example, the geometry should be decoded first, and the attributes may depend on the decoded geometry. The player according to the embodiments may access the track carrying the geometry bitstream before the attribute bitstream. G-PCC component tracks may be created as follows:

In the sample entry, a new box may be added to indicate the role of the stream contained in this track.

One track carrying the geometry sub-bitstream may be an entry point.

The method/device according to the embodiments may generate and transmit a sample entry as follows.

Sample entry

| | |
|---|---|
| Sample Entry Type: | 'gpc1' or 'gpcg' |
| Container: | SampleDescriptionBox ('stsd') |
| Mandatory: | 'gpc1', 'gpcg' sample entry is mandatory |
| Quantity: | One or more sample entries may be present |

G-PCC geometry or attribute tracks may use VolumetricVisualSampleEntry with a sample entry type of 'gpc1' or 'gpcg'.

The sample entry may contain a GPCCConfigurationBox and a GPCCComponentTypeBox.

Multiple sample entries may be used to indicate sections of G-PCC data that use different configurations and parameter sets, according to the ISO Base Media File Format.

```
aligned(8) class GPCCSampleEntry() extends
VolumetricVisualSampleEntry ('gpc1') {
GPCCConfigurationBox config;
GPCCComponentTypeBox();
[GPCCEntryInfoBox();
    }
```

GPCCEntryInfoBox may present the entry information of this track, such as, for example, whether this track is an entry point for G-PCC bistream decoding.

config may include G-PCC decoder configuration record information.

GPCCComponentTypeBox may indicate one or more G-PCC component types carried in this track. When multiple types of G-PCC component data may be multiplexed in one track. For example, G-PCC geometry and one G-PCC attribute sub-bitstream may be multiplexed in the track. GPCCComponentTypeBox may contain multiple G-PCC component data carried by the respective tracks.

When multiple component types are indicated and no component type sample group is present, the order of signaled component type in GPCCComponentTypeBox may indicate the order of associated sub-sample in each sample in the track.

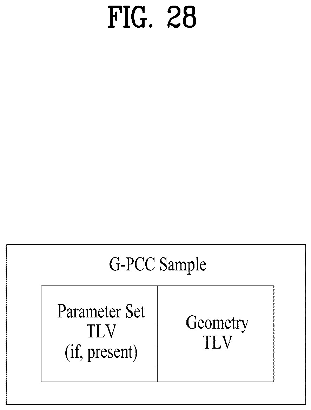

FIG. 28 shows a sample structure according to embodiments.

FIG. 28 shows a sample contained in a track of a file according to embodiments.

The method/device according to the embodiments may generate the following sample.

Sample format

Each sample may contain one or more TLV structures. An example of the sample structure of a track carrying one geometry sub-bitstream is shown in FIG. 28.

```
aligned(8) class GPCCSample

{

        unsigned int GPCCLength = sample_size; //Size of Sample

        for (i=0; i< GPCCLength; )            // to end of the sample

        {

                tlv_encapsulation      gpcc_unit;

                i += (1+4)+ gpcc_unit.tlv_num_payload_bytes;

        }

}
```

gpcc_unit may contain an instance of the G-PCC TLV encapsulation structure containing a single G-PCC component

When multiple types of G-PCC component data is multiplexed in one track, e.g., when G-PCC geometry and one G-PCC attribute sub-bitstream are multiplexed in the track, one or more sub-samples may be present in each sample. One SubSampleInformation may be in SampleTableBox, or in the TrackFragmentBox of each of MovieFragmentBoxes.

When the 8-bit type value of TLV encapsulation structure, if present, and the TLV encapsulation structure contains attribute payload, the 6-bit value of attribute index may be included in the 32-bit codec_specific_parameters field of the sub-sample entry in the SubSampleInformationBox. The type of each sub-sample may be identified by parsing the codec_specific_parameters field of the sub-sample entry in SubSampleInformationBox. The codec_specific_parameters field of the SubsampleInformationBox may be defined as follows:

```
unsigned int(8) PayloadType;
if (PayloadType == 4) { // attribute payload
unsigned int(6) AttrIdx;
bit(18) reserved = 0;
}
else
    bit(24) reserved = 0;
```

PayloadType may indicate the TLV type of the TLV encapsulation structure in the sub-sample.

AttrIdx may indicate the ash_attr_sps_attr_idx of the TLV encapsulation structure containing attribute payload in the sub-sample.

When no SubSampleInformation is present, the order of sub-samples in the sample may follow the order of component types signaled in either the sample entry or sample group

The method/device according to the embodiments may provide referencing for G-PCC component tracks as follows.

Referencing G-PCC component tracks

To link a G-PCC geometry track to other tracks, the track reference tool of ISOBMFF may be used. One TrackReferenceTypeBoxes may be added to a TrackReferenceBox within the TrackBox of the G-PCC geometry track. The TrackReferenceTypeBox may contain an array of track _IDs designating the tracks which the G-PCC geometry track references.

The reference_type of TrackReferenceTypeBox may identify the attribute tracks. The 4CCs of these track reference types are:

'gpca' : the referenced track(s) may contain the coded bitstream of G-PCC attribute data

When multiple tracks are present and each track includes a multiplexed G-PCC sub-bitstream, a new track reference may be suggested. One TrackReferenceTypeBoxes may be added to a TrackReferenceBox within the Track-Box of the track which is indicated as the entry point. The TrackReferenceTypeBox may contain an array of track_IDs designating the tracks which the G-PCC track references.

The 4CCs of these track reference types are:

'gpcs': the referenced track(s) may contain the other part of the coded G-PCC bitstream.

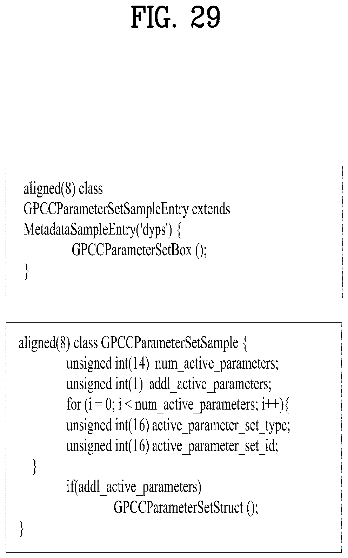

FIG. 29 shows a parameter set contained in a timed metadata track according to embodiments.

The method/device according to the embodiments may create a timed metadata track in a file, and the timed metadata track may carry a parameter set.

Timed Metadata Track

G-PCC parameter set timed metadata track

The dynamic G-PCC parameter set timed metadata track may indicate that G-PCC parameter sets (SPS, GPS, APS, TPS) may be dynamically changing over time.

The timed metadata track may be linked to the respective tracks carrying the part or all of G-PCC bitstreams by utilizing the 'cdsc' track reference. This timed metadata track may be linked to the respective track groups associated with the same G-PCC parameter sets by utilizing the 'cdsc' track reference.

The sample entry of the timed metadata track may contain GPCCParameterSetBox that includes the default G-PCC parameter sets that apply to the corresponding G-PCC content.

The sample format of the timed metadata track is shown in FIG. 29.

num_active_parameters specifies the number of active G-PCC parameter sets signaled in the sample entry. num_active_parameters equal to 0 indicates that no G-PCC parameter sets from the sample entry are active.

addl_active_ parameters equal to 1 may specify that additional active G-PCC parameter sets signaled in the sample directly in GPCCParameterSetStruct(). addl_active_parametersets equal to 0 may specify that no additional active G-PCC parameter sets are signaled in the sample directly.

active_parameter_set_type may indicate the type of the active G-PCC parameter set.

active_parameter_set_id indicates the identifier of the active G-PCC parameter set of the indicated parameter set type.

GPCCParameterSetStruct () may contain additional G-PCC parameter sets (e.g., SPS, GPS, APS, TPS) in the sample directly.

The method/device according to the embodiments may process point cloud data at the transmitting side or the encoder side as follows. In the point cloud data reception method/device according to the embodiments, a process reverse to that of the transmission method/device may be carried out.

The file encapsulation, the file encapsulator, the transmission device or the encoder (10000, 10002, FIGS. 12, 14 to 15, and 17) according to the embodiments generate and store tracks in a file according to the degree of change of the parameter set in the G-PCC bitstream, and store related signaling information.

In addition, the file encapsulation, the file encapsulator, the transmission device or the encoder (10000, 10002, FIGS. 12, 14 to 15, and 17) according to the embodiments may add signaling information according to embodiments in one or more tracks in the file. The track according to the embodiments may be a media track including part or all of the G-PCC bitstream, or a metadata track associated with the G-PCC bitstream.

The file decapsulator, reception device, or decoder (10004, 10006, FIGS. 13 to 17) according to embodiments may obtain information such as signaling and parameter sets included in the tracks in the file, and may effectively extract, decode, and post-process the track data in the file based thereon.

The point cloud data transmission/reception method/device according to the embodiments may provide the following effects due to operations of the file encapsulator and file decapsulator (G-PCC system) according to the embodiments.

A transmitter or receiver for providing a point cloud content service according to the scheme proposed in the present disclosure constructs a G-PCC bitstream and stores a file as described above. Also, a G-PCC sample is defined and stored in the file. In addition, a sub-sample may be stored in the G-PCC bitstream file. Thus, the transmitter or receiver for providing the point cloud content service may support efficient access to the stored G-PCC bitstream.

It may enable effective multiplexing of G-PCC bitstreams. Efficient access to the bitstream may be supported on a G-PCC accee unit basis.

Metadata for data processing and rendering in the G-PCC bitstream may be transmitted in the bitstream.

Parameter sets for decoding and processing of partial streams and entire streams of the G-PCC bitstreams may be effectively stored and transmitted in a file. In addition, by storing and carrying parameter sets in a track of the file, the G-PCC decoder/player may be allowed to operate properly in decoding a partial or entire G-PCC bitstream or parsing and processing a partial or entire G-PCC bitstream that is necessary in the track.

The data representation method according to the embodiments may support efficient access to the point cloud bitstream.

The transmitter or receiver according to the embodiments may efficiently store and transmit the file of a point cloud bitstream through a technique for dividing and storing the G-PCC bitstream into one or more tracks in the file and signaling therefor, and signaling for the relationship between tracks of the stored G-PCC bitstream.

The method/device according to the embodiments may be described in combination with the G-PCC data transmission method and device described below.

Data of the G-PCC and the G-PCC system may be generated by the encapsulator (which may be referred to as a generator) of the transmission device according to the embodiments, and be transmitted by the transmitter of the transmission device. In addition, the data of the G-PCC and the G-PCC system described above may be received by the receiver of the reception device according to the embodiments, and be acquired by the decapsulator (which may be referred to as a parser) of the reception device. The decoder, renderer, and the like of the reception device may provide proper point cloud data to a user based on the data of the G-PCC and the G-PCC system according to the embodiments.

The method/device according to the embodiments may process point cloud data and generate related signaling information based on a media format for supporting partial access to the G-PCC data.

The method/device according to the embodiments may store 3D tile configuration information of point cloud data and generate signaling information.

The method/device according to the embodiments may store point cloud data associated with a 3D tile in a track, and group tracks associated with the same 3D spatial region.

The method/device according to the embodiments may store static or dynamic 3D tile information of point cloud data.

The method/device according to the embodiments may generate signaling information related to association between tracks when G-PCC data is transmitted based on multiple tracks.

The method/device according to the embodiments may process point cloud data based on user viewport, and use only a part of the point cloud data. To this end, a method of extracting only necessary point cloud data from the entire point cloud data in a file and decoding the same is needed. The method/device according to the embodiments may support such an operation.

Point cloud data may be composed of one or more 3D tiles. The transmitter may transmit 3D tile configuration information of the point cloud data, thereby allowing the receiver or player to extract only point cloud data present in the required region from the file. Accordingly, the 3D tile information of the point cloud data included in a track according to embodiments may be carried in a sample entry, a sample group, or a separate metadata track.

When point cloud data associated with a specific 3D tile area is transmitted in one or more tracks, track grouping signaling allowing the receiver to acquire point cloud data from an associated track when a point cloud of the area is used may be provided. With the signaling configuration according to the embodiments, spatial information of a dynamic 3D tile associated with a corresponding track group may be transmitted in a metadata track or the like.

A method for transmitting point cloud data in accordance with embodiments includes encoding point cloud data, encapsulating point cloud data, transmitting point cloud data.

Point cloud data in accordance with embodiments is encapsulated based on a file, a file includes a track for parameter sets for point cloud data, parameter sets includes sequence parameter sets, geometry parameter sets, attribute parameter sets, tile parameter sets.

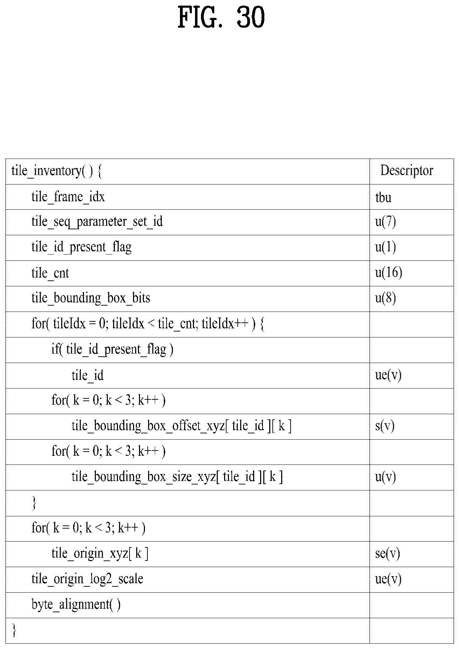

FIG. 30 shows a tile inventory according to embodiments.

The tile inventory of FIG. 30 may correspond to the tile inventory of FIG. 20.

tile_frame_idx may contain an identifying number that may be used to identify the purpose of the tile inventory.

tile_seq_parameter_set_id specifies the value of the ID of the SPS sequence parameter set for the active SPS.

tile_id_present flag equal to 1 specifies that tiles are identified according to the value of the tile_id syntax element. tile_id_present_flag equal to 0 specifies that tiles are identified according to their position in the tile inventory.

tile_cnt specifies the number of tile bounding boxes present in the tile inventory.

tile_bounding_box_bits specifies the bitdepth to represent the bounding box information for the tile inventory.

tile_id identifies a particular tile within the tile_inventory. When not present, the value of tile_id may be inferred to be the index of the tile within the tile inventory as given by the loop variable tileIdx. All values of tile_id may be unique within a tile inventory.

tile_bounding_box_offset_xyz[ tileId ][ k ] and tile_bounding_box_size_xyz[ tileId ][ k ] specify a bounding box encompassing slices identified by gsh_tile_id equal to tileId. tile_bounding_box_offset_xyz[ tileId ][ k ] is the k-th component of the ( x, y, z ) origin co-ordinate of the tile bounding box relative to TileOrigin[ k ].

tile_bounding_box_size_xyz[ tileId ][ k ] is the k-th component of the tile bounding box with a width, height, and depth.

tile_origin_xyz[ k ] specifies the k-th component of the tile origin in Cartesian coordinates. The value of tile_origin_xyz[ k ] may be equal to sps_bounding_box_offset[ k ].

tile_origin_log2_scale specifies a scaling factor to scale components of tile_origin_xyz. The value of tile_origin_log2_scale may be equal to sps_bounding_box_offset_log2_scale. The array TileOrigin with elements TileOrigin[ k ] for k = 0,..., 2, may be derived as follows:

TileOrigin[ k ] = tile_origin_xyz[ k ] << tile_origin_log2_scale.

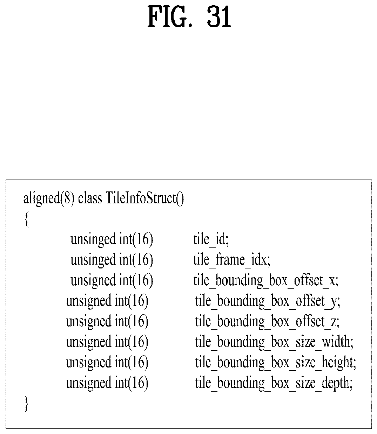

FIG. 31 shows a G-PCC 3D tile information structure according to embodiments.

FIG. 31 shows syntax of G-PCC 3D tile information included in the file of FIGS. 26 and 27.

tile_id is an identifier of the 3D tile.

tile_frame_idx specifies the identifier of an associated point cloud frame associated with the 3D tile.

tile_bounding_box_offset_x, tile_bounding_box_offset_y], and tile_bounding_box_offset_z indicate the x, y, and z offsets of the 3D tile in Cartesian coordinates.

tile_bounding_box_size_width, tile_bounding_box_size_height, and tile_bounding_box_size_depth indicate the width, height, and depth of the 3D tile in the Cartesian coordinates.

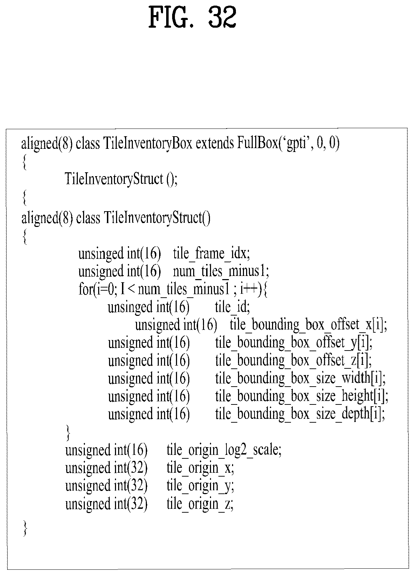

FIG. 32 shows a structure of G-PCC 3D tile inventory information according to embodiments.

FIG. 32 shows syntax of G-PCC 3D tile inventory information included in the file of FIGS. 26 and 27.

tile_frame_idx specifies the identifier of an associated point cloud frame associated with the tile inventory structure.

num_tiles_minus1 plus 1 specifies the number of tile bounding boxes present in the tile inventory.

tile_id is an identifier of the i-th tile.

tile_bounding_box_offset_x[ i ], tile_bounding_box_offset_y[ i ], and tile_bounding_box_offset_z[ i ] indicate the x, y, and z offsets of the i-th tile in Cartesian coordinates.

tile_bounding_box_size_width[ i ], tile_bounding_box_size_height[ i ], and tile_bounding_box_size_depth[ i ] indicate the width, height, and depth of the i-th tile in the Cartesian coordinates.

tile_origin_x, tile_orign_y, and tile_originz specify the x, y, z values of the tile origin in Cartesian coordinates

tile_origin_log2_scale specifies a scaling factor to scale the components tile_origin_x, tile_orign_y, and tile_origin_z.

A file and tracks according to the embodiments may group and carry samples as follows.

Sample Group

3D tile sample group

The method/device according to the embodiments may group one or more samples associated with the same 3D tile, and generate and signal 3D tile information related to the group as follows.

The '3tsg' grouping_type for sample grouping represents the assignment of samples in tracks to the spatial region (including cubic region) information carried in this sample group.

When a SampleToGroupBox with grouping_type equal to 'srsg' is present, SampleGroupDescriptionBox with the same grouping type may be present, and may contain the ID of this group to which the samples belong.

```
aligned(8) class GPCC3DTileSampleGroupDescriptionEntry()
extends SampleGroupDescriptionEntry('3tsg') {
TileInfoSturct ();
}
```

TileInfoSturct may contain the 3D tile information that is applied to samples of the sample group.

The method/device according to the embodiments may group 3D tile inventory samples of a file or a track.

3D tile inventory sample group

The method/device according to the embodiments may group one or more samples related to the same tile inventory information, and store and signal tile inventory information related to the group as follows.

The 'tisg' grouping_type for sample grouping may represent the assignment of samples in tracks to the tile inventory information carried in the sample group. When a SampleToGroupBox with grouping_type equal to 'tisg' is present, SampleGroupDescriptionBox with the same grouping type may be present, and contain the ID of the group to which the samples belong.

```
aligned(8) class GPCCCubicRegionSampleGroupDescriptionEntry()
extends SampleGroupDescriptionEntry('tisg') {
TileInventoryStruct ();
}
```

TileInventoryStruct may contain the tile inventory information that is applied to samples of this sample group.

Parameter set sample group

The method/device according to the embodiments may group one or more samples associated with the same G-PCC parameter set (which may include SPS, GPS, APS, tile inventory, etc.) and generate and signal a G-PCC parameter set associated with the group as follows.

The 'pasg' grouping_type for sample grouping may represent the assignment of samples in tracks to G-PCC parameter sets (e.g., SPS, GPS, APS, tile inventory) carried in this sample group. When a SampleToGroupBox with grouping_type equal to 'pasg' is present, SampleGroupDescriptionBox with the same grouping type may be present, and contain the ID of the group to which the samples belong.

```
aligned(8) class GPCCParameterSetSampleGroupDescriptionEntry()

extends SampleGroupDescriptionEntry('pasg') {

                    unsigned int(8)        numOfSetupUnitArrays;

                    for (i=0; i< numOfSetupUnitArrays; i++) {

                    unsigned int(7)        setupUnitType;

                    unsigned int(8)        numOfSetupUnits;

                    for (i=0; i<numOfSetupUnits; i++) {

                              tlv_encapsulation      setupUnit;

                    }

              }

        }
```

numOfSetupUnitArrays specifies the number of arrays of G-PCC setup units of the type indicated by setupUnitTye field.

setupUnitTye indicates the type of signaled G-PCC setup units. It may be one of values indicating SPS, GPS, APS, and tile inventory.

numOfSetupUnits specifies the number of G-PCC setup units of the type indicated by setupUnitType field signaled in the record.

setupUnit is an instance of TLV encapsulation structure carrying the setup unit of the indicated type, e.g., SPS, GPS, APS, or tile inventory.

Track Grouping

GPCC 3D tile track grouping

The method/device according to the embodiments may group one or more tracks carrying data belonging to the same 3D tile of point cloud data, and generate and signal the same as follows.

TrackGroupTypeBox with track_group_type equal to '3dtg' may indicate that this track belongs to a group of tracks that are associated with same spatial region.

Tracks belonging to the same spatial region may have the same value of track_group id for track_group_type '3dtg', and the track_group_id of tracks from one 3D tile may differ from the track_group_id of tracks from other 3D tiles.

```
aligned(8) class GPCC3DTileTrackGroupBox extends
TrackGroupTypeBox('3dtg') {
TileInfoStruct ();
}
```

TileInfoStruct may contain the 3D tile information that is applied to tracks of this group. When timed metadata tracks carrying associated 3D tile information or spatial region information is present, the initial 3D tile information may be indicated.

Each track may belong to one or more 3D tile track groups.

GPCC tile inventory track grouping

The method/device according to the embodiments may group one or more tracks to which the same tile inventory of point cloud data is applied, and generate and signal information as follows.

TrackGroupTypeBox with track_group_type equal to 'titg' indicates that this track belongs to a group of tracks to which the same tile inventory information is applied.

Tracks belonging to the same tile inventory may have the same value of track_group_id for track_group_type 'titg', and the track_group_id of tracks from one tile inventory may differ from the track_group_id of tracks from another tile inventory.

```
aligned(8) class GPCCTileInventoryTrackGroupBox extends
TrackGroupTypeBox('titg') {
TileInventoryStruct ();
}
```

TileInventoryStruct may contain the tile inventory information that is applied to tracks of this group. When timed metadata tracks carrying associated tile inventory information or spatial region information is present, the initial tile inventory information may be indicated.
Each track may belong to one or more tile inventory track groups.

GPCC tile inventory track grouping

The method/device according to the embodiments may group one or more tracks to which the same G-PCC parameter set (which may include SPS, GPS, APS, and tile inventory) is applied, and generate the following information.
TrackGroupTypeBox with track_group_type equal to 'patg' may indicate that this track belongs to a group of tracks to which the same parameter sets are applied.
Tracks belonging to the same tile inventory may have the same value of track_group_id for track_group_type 'patg', and the track_group id of tracks from one tile inventory differs from the track_group_id of tracks from another tile inventory.

```
aligned(8)        class        GPCCParameterSetTrackGroupBox        extends
TrackGroupTypeBox('patg') {
        unsigned int(8)        numOfSetupUnitArrays;
            for (i=0; i< numOfSetupUnitArrays; i++) {
            unsigned int(7)        setupUnitType;
            unsigned int(8)        numOfSetupUnits;
            for (i=0; i<numOfSetupUnits; i++) {
                    tlv_encapsulation        setupUnit;
            }
        }
    }
```

numOfSetupUnitArrays specifies the number of arrays of G-PCC setup units of the type indicated by setupUnitTye field.
setupUnitTye indicates the type of signaled G-PCC setup units. It may be one of values indicating SPS, GPS, APS, and tile inventory.
numOfSetupUnits specifies the number of G-PCC setup units of the type indicated by setupUnitType field signaled in the record.
setupUnit is an instance of the TLV encapsulation structure carrying the setup unit of the indicated type, e.g., SPS, GPS, APS, or tile inventory.

Encapsulation of G-PCC Data in ISOBMFF

The method/device according to the embodiments, for example, a transmission device, an encapsulator of an encoder, a reception device, or a decapsulator of a decoder, may encapsulate the data of an encoded G-PCC bitstream into a single track and/or multiple tracks and decapsulate the same based on ISOBMFF (see FIGS. 26 to 28).
Referring to FIG. 28, when a G-PCC bitstream is carried in multiple tracks, a track that carrying the G-PCC geometry bitstream may be an entry point.

In the sample entry, a new box may be added which indicates the role of the stream contained in this track.

A track reference may be introduced from the track carrying only the G-PCC geometry bitstream to tracks carrying the G-PCC attribute bitstream.

Sample entry
Sample Entry Type: 'gpe1', 'gpeg', 'gpc1'or 'gpcg'
Container: SampleDescriptionBox
Mandatory: A 'gpe1' , 'gpeg', 'gpc1'or 'gpcg' sample entry is mandatory
Quantity: One or more sample entries may be present
G-PCC tracks may use VolumetricVisualSampleEntry with a sample entry type of 'gpe1' , 'gpeg', 'gpc1'or 'gpcg'.
A G-PCC sample entry may contain a GPCCConfigurationBox and optionally a GPCCComponentTypeBox

Under the 'gpe1' sample entry, all parameter sets (as defined in ISO/IEC 23090-9 [GPCC]) may be in the setupUnit array. Under the 'gpeg' sample entry, the parameter sets may be present in this array. Under the 'gpe1' or the 'gpeg' sample entry, GPCCComponentTypeBox may not be present. Under the 'gpc1' sample entry, all SPS, GPS , and tile inventory (as defined in ISO/IEC 23090-9 [GPCC]) may be in the SetupUnit array of tracks carrying the G-PCC geometry bitstream. All associated APS may be in the SetupUnit array of tracks carrying the G-PCC attribute bitstream. Under the 'gpcg' sample entry, SPS, GPS, APS, or tile inventory may be present in this array. Under the 'gpc1'or the 'gpcg' sample entry, GPCCComponentTypeBox may be present.

When parameter sets are used and parameter sets updating is needed, parameter sets may be included in the samples of the stream.

```
aligned(8) class GPCCSampleEntryU
extends VolumetricVisualSampleEntry (codingname) {
GPCCConfigurationBox config; //mandatory
GPCCComponentTypeBox type; // optional
TileInventoryBox();
}
```

compressorname in the base class VolumetricVisualSampleEntry indicates the name of the compressor used with the value "\013GPCC Coding"; the first byte is a count of the remaining bytes, represented by \013, which (being octal 13) is 11 (decimal), the number of bytes in the rest of the string.
"config" may include G-PCC decoder configuration record information.
"type" indicates the type of G-PCC component carried in the respective track.

TileInventoryBox indicates the tile inventory information of point cloud data carried in samples in the track.

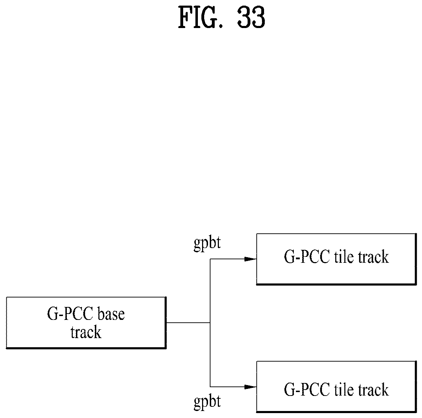

FIG. 33 shows a G-PCC base track according to embodiments.

FIG. 33 shows syntax of the G-PCC base track included in the file and track according to FIGS. 26 to 28 and the like.

In embodiments, the transmission device 10000, the reception device 10004, the encoding and transmission 20001 and 20002, the transmission and decoding 20002 and 20003, the file/segment encapsulator and the file/segment decapsulator of FIGS. 14 to 16, and the like may generate, transmit and receive, and parse the G-PCC base track.

G-PCC base track

The G-PCC base track may include a common parameter set that may be applied to one or more G-PCC tracks. This may use a 'gpcb' sample entry. The GPCCConfigurationBox may contain a parameter set (SPS, GPS, APS, tile inventory, etc.) to be applied to one or more G-PCC tracks.

It may also contain a parameter set (SPS, GPS, APS, tile inventory, etc.) to be applied to one or more G-PCC tracks that may change over time in a sample of the corresponding track.

```
aligned(8) class GPCCSampleEntryU
extends VolumetricVisualSampleEntry ('gpcb") {
GPCCConfigurationBox config; //mandatory
}
```

One or more parameter sets may be present in each sample of the track.

The method/device according to the embodiments may additionally generate a subsample for the sample.

Sub-sample

In G-PCC base track, a G-PCC sub-sample may contain only one G-PCC TLV encapsulation structure. one SubSampleInformation may be in SampleTableBox, or in the TrackFragmentBox of each of MovieFragmentBoxes.

When the 8-bit type value of TLV encapsulation structure, if present, and the TLV encapsulation structure contains attribute payload, the 6-bit value of attribute index may be included in the 32-bit codec_specific_parameters field of the sub-sample entry in the SubSampleInformationBox. The type of each sub-sample may be identified by parsing the codec_specific_parameters field of the sub-sample entry in SubSampleInformationBox. The codec_specific_parameters field of the SubsampleInformationBox may be defined as follows:

$$\text{unsigned int(8) PayloadType;}$$

$$\text{if (PayloadType == 4) \{ // attribute payload}$$

$$\text{unsigned int(6) AttrIdx;}$$

$$\text{bit(18) reserved = 0;}$$

$$\}$$

$$\text{else}$$

$$\text{bit(24) reserved = 0;}$$

PayloadType may indicate the TLV type of the TLV encapsulation structure in the sub-sample.

| tlv_type | Description |
|---|---|
| 0 | Sequence parameter set |
| 1 | Geometry parameter set |
| 3 | Attribute parameter set |
| 5 | Tile inventory |
| 6 | Frame boundary marker |

The method/device according to the embodiments may generate a G-PCC tile track in a track of a file.

G-PCC tile track

| | |
|---|---|
| Sample Entry Type: | 'get1' |
| Container: | SampleDescriptionBox |
| Mandatory: | Yes |
| Quantity: | One or more sample entries may be present |

A G-PCC tile track may use AtlasTileSampleEntry which extends VolumetricVisualSampleEntry with a sample entry type of 'v3t1'.

The G-PCC tile track may contain G-PCC data associated with one or more G-PCC tiles. When GPCCComponentTypeBox is included in a sample entry, only data associated with one G-PCC component may be contained in the G-PCC tile track, and may refer to the G-PCC component type included in the track. When the GPCCComponentTypeBox is not included in the sample entry, a plurality of G-PCC component data may be contained in the track, and the data may be associated with a tile signaled in the sample entry.

```
aligned(8) class GPCCTileSampleEntry()
                        extends VolumetricVisualSampleEntry ('get1') {
            unsigned int(8)         configurationVersion = 1;
            unsigned int(1)         multiplexed_flag;
            unsigned int(16)        num_tiles;
                for(i=0; i < num_tiles; i++){
                        unsigned int(16) tile_id;
                }
            if(multiplexed_flag == 0)
            GPCCComponentTypeBox    type;    // optional


                }
```

configuration Version is a version field. Incompatible changes to the sample entry may be indicated by a change of version number.

The multiplexed_flag may indicate whether one or more G-PCC component data are contained in the track. multiplexed_flag equal to 0 may indicate that only one G-PCC component data is contained. In this case, the type value may be included in the sample entry.

num_tiles indicates the number of tiles contained in the track.
tile_id specifies the identifier of the tile present in this track.
"type" indicates the type of a G-PCC component carried in the respective track.

A 3D tile sample group may be present in the track. Thereby, tile information related to samples contained in the track may be signaled.

The method/device according to the embodiments may process referencing between G-PCC tracks as follows.

Referencing between G-PCC tracks

To link between tracks when a G-PCC bitstream is carried in multiple tracks, a track reference tool is used. One TrackReferenceTypeBoxes may be added to a TrackReferenceBox within the TrackBox of the G-PCC track. The TrackReferenceTypeBox may contain an array of track _IDs designating the tracks which the G-PCC track references.

To link the G-PCC base track to the G-PCC tile track carrying a coded bitstream associated with one or more G-PCC tiles, reference_type of a TrackReferenceTypeBox in the G-PCC base track may identify the G-PCC tile track. The 4CC of these track reference types may be 'gpbt'

To link the G-PCC tile track carrying a coded bitstream associated with one or more G-PCC tiles to the G-PCC base track, reference_type of a TrackReferenceTypeBox in the G-PCC tile track may identify the G-PCC base track. The 4CC of these track reference types may be 'gptb'.

To link the G-PCC base track to the G-PCC track carrying a coded G-PCC bitstream, reference_type of a TrackReferenceTypeBox in the G-PCC base track may identify the G-PCC track. The 4CC of these track reference types may be 'gpbc'.

To link the G-PCC track carrying a coded G-PCC bitstream to the G-PCC base track, reference_type of a TrackReferenceTypeBox in the G-PCC tile track may identify the G-PCC base track. The 4CC of these track reference types may be 'gpcb'.

To link the G-PCC geometry track to the G-PCC attribute track, reference_type of a TrackReferenceTypeBox in the G-PCC geometry track may identify the associated attribute tracks. The 4CC of these track reference types is:
'gpca' : the referenced track(s) may contain a coded bitstream of G-PCC attribute data

The method/device according to the embodiments may add a timed metadata track to a file or track.

Timed Metadata Track

3D tile timed metadata track

The dynamic 3D tile timed metadata track may indicate 3D tile, and tile inventory information may be dynamically changing over time. The timed metadata track may be linked to the respective tracks carrying an associated G-PCC point cloud bitstream by utilizing the 'cdsc' track reference. This timed metadata track may be linked to the respective track groups carrying the associated G-PCC point cloud bitstream by utilizing the 'cdtg' track reference.

```
aligned(8) class GPCCTileInventorySampleEntry extends
MetadataSampleEntry('dyti') {
TileInventoryBox ();
}
```

The sample entry of this timed metadata track may contain 3D tile information or tile inventory information that includes the default 3D tile information that apply to the associated point cloud data.
The sample format of the timed metadata track may be as follows.

```
aligned(8) class GPCCSpatialRegionSample {
TileInventoryStruct ();
}
```

TileInventoryStruct may indicate the dynamically changed 3D tile or tile inventory information of associated point cloud data.
The file encapsulation or file encapsulator of the transmission/reception device according to the embodiments (see FIGS. 14 to 16) may generate and store tracks in a file according to the degree of change of the parameter set present in the G-PCC bitstream, and store related signaling information (see FIGS. 18 to 33). The file encapsulation or the file encapsulator may add signaling information according to the embodiments to one or more tracks in the file in generating the file. For example, it may process a media track including a part or all of a G-PCC bitstream, a metadata track related to the G-PCC bitstream, and the like.
The file decapsulation or file decapsulator according to the embodiments may acquire information such as signaling and parameter sets included in the tracks in the file, and effectively extract, decode, and post-process the track data in the file based thereon.
The method/device for transmitting and receiving point cloud data according to the embodiments may provide the following effects due to operations of the file encapsulator, the file decapsulator, and the like according to the embodiments.
The method/device according to the embodiments enables the point cloud video to be effectively played. Furthermore, it may allow the user to interact with the point cloud video. In addition, it may allow the user to change the playback parameters.
The method/device according to the embodiments may allow the user to select a track or item containing point cloud data in the file according to the user viewport, or to partially parse, decode, or render the data in the track or item. By reducing unnecessary data, that is, unnecessary calculations on point cloud data not related to the user viewport, parsing of point cloud data and decoding/rendering of the point cloud data in the file may be effectively performed.
A file in accordance with embodiments further may include one or more tiles for a tile for point cloud data, a track may include a sample entry including tile number information for a number of tiles for point cloud data and tile identification information for the tile.
A track for a tile and a track for parameter sets may be linked based on a track reference.
Due to a file structure in accordance with embodiments, for example, based on a base track, a tile track, referencing, a method/an apparatus for receiving point cloud data may acquire point cloud data that a receiver side wants, and decode it, and provide it with a user efficiently. Operations and data structures in accordance with embodiments may make a receiver/s partial access of point cloud data possible.
A track in accordance with embodiments may be a base track, a base track may include common parameter sets that are applied to one or more tracks for point cloud data.
Furthermore, a file may further include a track for a tile for point cloud data, a track may be a tile track, a tile track may carry point cloud data associated with a track.

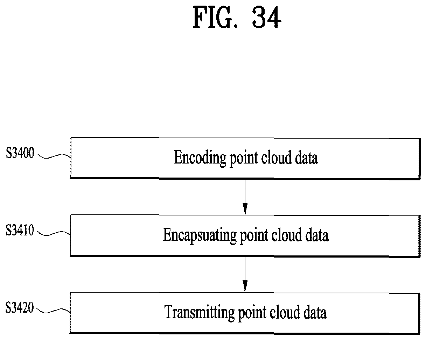

FIG. 34 illustrates a method of transmitting point cloud data according to embodiments.
S3400: The point cloud data transmission method according to the embodiments may include encoding the point cloud data.

The encoding operation according to the embodiments may include operations of the transmission device 10000 and the encoder 10002 of FIG. 1, the encoding 20001 of FIG. 2, the encoding of FIG. 4, the transmission device of FIG. 12, the point cloud encoding of FIGS. 14 and 15, the process of the device of FIG. 17, encoding of the bitstream of FIGS. 18 to 24, and the like.

S3410: The point cloud data transmission method according to the embodiments may further include encapsulating the point cloud data.

The encapsulation operation according to the embodiments may include operations of the transmission device 10000 of FIG. 1, the encoding and transmission 20001 and 20002 of FIG. 2, the file/segment encapsulation of FIGS. 14 and 15, the process of the device of FIG. 17, encapsulation of a bitstream such as the bitstream of FIGS. 18-24 into a file container such as the file container of FIGS. 25 to 33.

S3420: The point cloud data transmission method according to the embodiments may further include transmitting the point cloud data.

The transmission operation according to the embodiments may include operations of the transmission device 10000 and the transmitter 10003 of FIG. 1, the transmission 20002 of FIG. 2, the delivery of FIGS. 14 and 15, the process of the device of FIG. 17, transmission of a file container such as the file container of FIGS. 25 to 33, and the like.

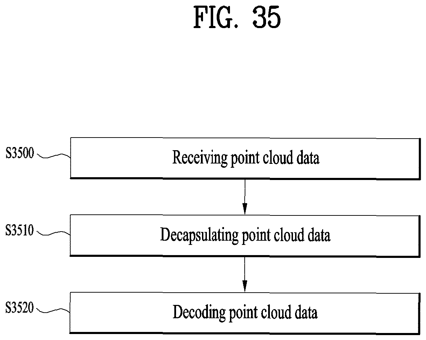

FIG. 35 illustrates a method of receiving point cloud data according to embodiments.

S3500: The point cloud data reception method according to the embodiments may include receiving point cloud data.

The receiving operation according to the embodiments include operations of the reception device 10004 and the receiver 10005 of FIG. 1, the transmission 20002 of FIG. 2, the reception device of FIG. 13, the delivery reception of FIGS. 14 to 16, the process of the device of FIG. 17, reception of a bitstream such as the bitstream of FIGS. 18 to 24 and a file container such as the file container of FIGS. 25-33.

S3510: The point cloud data reception method according to the embodiments may further include decapsulating the point cloud data.

The decapsulation operation according to the embodiments may include operations of the reception device 10004 of FIG. 1, the transmission and decoding 20002 and 20003 of FIG. 2, the file/segment decapsulation of FIGS. 14 to 16, the process of the device of FIG. 17, and decapsulation of the bitstream of FIGS. 18 to 24 from the files of FIGS. 25 to 33.

S3520: The point cloud data reception method according to the embodiments may further include decoding the point cloud data.

The decoding operation according to the embodiments may include operations of the reception device 10004 and the decoder 10006 of FIG. 1, the decoding 20003 of FIG. 2, the decoding of FIGS. 10 and 11, the decoding of the reception device of FIG. 13, and the decoding of FIGS. 14 to 17, and decoding of the bitstream of FIGS. 18 to 24.

The embodiments have been described in terms of a method and/or a device. The description of the method and the description of the device may complement each other.

Although embodiments have been described with reference to each of the accompanying drawings for simplicity, it is possible to design new embodiments by merging the embodiments illustrated in the accompanying drawings. If a recording medium readable by a computer, in which programs for executing the embodiments mentioned in the foregoing description are recorded, is designed by those skilled in the art, it may also fall within the scope of the appended claims and their equivalents. The devices and methods may not be limited by the configurations and methods of the embodiments described above. The embodiments described above may be configured by being selectively combined with one another entirely or in part to enable various modifications. Although preferred embodiments have been described with reference to the drawings, those skilled in the art will appreciate that various modifications and variations may be made in the embodiments without departing from the spirit or scope of the disclosure described in the appended claims. Such modifications are not to be understood individually from the technical idea or perspective of the embodiments.

Various elements of the devices of the embodiments may be implemented by hardware, software, firmware, or a combination thereof. Various elements in the embodiments may be implemented by a single chip, for example, a single hardware circuit. According to embodiments, the components according to the embodiments may be implemented as separate chips, respectively. According to embodiments, at least one or more of the components of the device according to the embodiments may include one or more processors capable of executing one or more programs. The one or more programs may perform any one or more of the operations/methods according to the embodiments or include instructions for performing the same. Executable instructions for performing the method/operations of the device according to the embodiments may be stored in a non-transitory CRM or other computer program products configured to be executed by one or more processors, or may be stored in a transitory CRM or other computer program products configured to be executed by one or more processors. In addition, the memory according to the embodiments may be used as a concept covering not only volatile memories (e.g., RAM) but also nonvolatile memories, flash memories, and PROMs. In addition, it may also be implemented in the form of a carrier wave, such as transmission over the Internet. In addition, the processor-readable recording medium may be distributed to computer systems connected over a network such that the processor-readable code may be stored and executed in a distributed fashion.

In this document, the term "/" and "," should be interpreted as indicating "and/or." For instance, the expression "A/B" may mean "A and/or B." Further, "A, B" may mean "A and/or B." Further, "A/B/C" may mean "at least one of A, B, and/or C." "A, B, C" may also mean "at least one of A, B, and/or C." Further, in the document, the term "or" should be interpreted as "and/or." For instance, the expression "A or B" may mean 1) only A, 2) only B, and/or 3) both A and B. In other words, the term "or" in this document should be interpreted as "additionally or alternatively."

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signal unless context clearly dictates otherwise.

The terminology used to describe the embodiments is used for the purpose of describing particular embodiments only and is not intended to be limiting of the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components. As used herein, conditional expressions such as "if" and "when" are not limited to an optional case and are intended to be interpreted, when a specific condition is satisfied, to perform the related operation or interpret the related definition according to the specific condition.

Operations according to the embodiments described in this specification may be performed by a transmission/reception device including a memory and/or a processor according to embodiments. The memory may store programs for processing/controlling the operations according to the embodiments, and the processor may control various operations described in this specification. The processor may be referred to as a controller or the like. In embodiments, operations may be performed by firmware, software, and/or combinations thereof. The firmware, software, and/or combinations thereof may be stored in the processor or the memory.

[Mode for Disclosure]

As described above, related contents have been described in the best mode for carrying out the embodiments.

[Industrial Applicability]

As described above, the embodiments may be fully or partially applied to the point cloud data transmission/reception device and system.

It will be apparent to those skilled in the art that variously changes or modifications can be made to the embodiments within the scope of the embodiments.

Thus, it is intended that the embodiments cover the modifications and variations of this disclosure provided they come within the scope of the appended claims and their equivalents.

**Claims**

1. A method for transmitting point cloud data, the method comprising:

   encoding point cloud data;
   encapsulating the point cloud data; and
   transmitting the point cloud data.

2. The method of claim 1,

   wherein the point cloud data is encapsulated based on a file,
   wherein the file includes a track for parameter sets for the point cloud data,
   wherein the parameter sets include a sequence parameter set, a geometry parameter set, an attribute parameter set, and a tile parameter set.

**3.** The method of claim 1,

wherein the file further includes one or more tracks for a tile for the point cloud data,
wherein the track includes a sample entry including tile number information for a number of tiles for the point cloud data and tile identifier information for the tile.

**4.** The method of claim 3,
wherein the track for the tile and the track for parameter sets are linked based on a track reference.

**5.** The method of claim 1,

wherein the a track is a base track,
wherein the base track includes common parameter set for one or more tracks for the point cloud data,
wherein the file further includes a track for a tile for the point cloud data,
wherein the track is a tile track,
wherein the tile track includes point cloud data related to the track.

**6.** Am apparatus for transmitting point cloud data, the apparatus comprising:

an encoder configured to encode point cloud data;
an encapsulator configured to encapsulate the point cloud data; and
a transmitter configured to transmit the point cloud data.

**7.** The apparatus of claim 6,

wherein the point cloud data is encapsulated based on a file,
wherein the file includes a track for parameter sets for the point cloud data,
wherein the parameter sets include a sequence parameter set, a geometry parameter set, an attribute parameter set, and a tile parameter set.

**8.** The apparatus of claim 6,

wherein the file further includes one or more tracks for a tile for the point cloud data,
wherein the track includes a sample entry including tile number information for a number of tiles for the point cloud data and tile identifier information for the tile.

**9.** The apparatus of claim 8,
wherein the track for the tile and the track for parameter sets are linked based on a track reference.

**10.** The apparatus of claim 6,

wherein the a track is a base track,
wherein the base track includes common parameter set for one or more tracks for the point cloud data,
wherein the file further includes a track for a tile for the point cloud data,
wherein the track is a tile track,
wherein the tile track includes point cloud data related to the track.

**11.** A method for receiving point cloud data, the method comprising:

receiving point cloud data;
decapsulating the point cloud data; and
decoding the point cloud data.

**12.** The method of claim 11,

wherein the point cloud data is decapsulated from a file including the point cloud data,
wherein the file includes a track for parameter sets for the point cloud data,
wherein the parameter sets include a sequence parameter set, a geometry parameter set, an attribute parameter set, and a tile parameter set.

**13.** The method for claim 11,

wherein the file further includes one or more tracks for a tile for the point cloud data,
wherein the track includes a sample entry including tile number information for a number of tiles for the point cloud data and tile identifier information for the tile.

**14.** The method for claim 13,
wherein the track for the tile and the track for parameter sets are linked based on a track reference.

**15.** The method of claim 11,

wherein the a track is a base track,
wherein the base track includes common parameter set for one or more tracks for the point cloud data,
wherein the file further includes a track for a tile for the point cloud data,
wherein the track is a tile track,
wherein the tile track includes point cloud data related to the track.

**16.** An apparatus for receiving point cloud data, the apparatus comprising:

a processor;
a memory connected to the processor;
wherein the processor is configured to:

receive point cloud data;
decapsulate the point cloud data; and
decode the point cloud data.

**17.** The apparatus of claim 16,

wherein the point cloud data is decapsulated from a file including the point cloud data,
wherein the file includes a track for parameter sets for the point cloud data,
wherein the parameter sets include a sequence parameter set, a geometry parameter set, an attribute parameter set, and a tile parameter set.

**18.** The apparatus for claim 16,

wherein the file further includes one or more tracks for a tile for the point cloud data,
wherein the track includes a sample entry including tile number information for a number of tiles for the point cloud data and tile identifier information for the tile.

**19.** The apparatus for claim 18,
wherein the track for the tile and the track for parameter sets are linked based on a track reference.

**20.** The apparatus of claim 16,

wherein the a track is a base track,
wherein the base track includes common parameter set for one or more tracks for the point cloud data,
wherein the file further includes a track for a tile for the point cloud data,
wherein the track is a tile track,
wherein the tile track includes point cloud data related to the track.

# FIG. 1

TRANSMISSION DEVICE

Point Cloud Video Acquisition

Point Cloud Video Encoder

Transmitter (Communication module)

RECEPTION DEVICE

Renderer

Point Cloud Video Decoder

Receiver (Communication module)

(Compressed) Bitstream

Feedback Information

# FIG. 2

FIG. 3

# FIG. 4

positions

attributes

40000 — Transform coordinates

Transform colors — 40006

40001 — Quantize and remove points (voxelize)

Transfer attributes — 40007

40008

40002 — Analyze octree

Reconstruct geometry

RAHT

Gnnerate LOD — 40009

40003 — Analyze surface approximation

Lifting — 40010

40005

Quantize coefficients — 40011

40004 — Arithmetic encode

Arithmetic encode — 40012

geometry bitstream

atribute bitstream

FIG. 5

# FIG. 6

# FIG. 7

$1 + 2 + 4 + 8 = 15$

FIG. 8

Level of details

# FIG. 9

P0  P1  P4  P3

P6  P7

P9

P5  P8  P2

Original order | P0, P1, P2, P3, P4, P5, P6, P7, P8, P9

LOD-based order | P0, P5, P4, P2 | P1, P6, P3 | P9, P8, P7

LOD0

LOD1

LOD2

# FIG. 10

# FIG. 11

geomerty
bitstream

attributes
birsrteam

| Arithmerix decode | 11000 | | Arithmerix decode | 11005 |

11000 — Arithmerix decode

11001 — Synthesize octree

11002 — synthesize surface approximation

11003 — Reconstruct geometry

11004 — Inverse transform coordinates

11005 — Arithmerix decode

11006 — Inverse quantize

11007

RAHT

Gnnerate LOD — 11008

Inverse lifring — 11009

Inverse transform colors — 11010

position

attributes

# FIG. 12

# FIG. 13

13000 — Receiver

13001 — Reception processor

13006

Geometry bitstream

Attribute bitstream

Set value, etc.

13002 — Arithmetic decoder

Metadata parser

Arithmetic decoder — 13007

13003 — Occupancy code-based octree reconstruction processor

Inverse quantization processor — 13008

13004 — Surface model processor (triangle reconstruction, up-sampling, voxelization)

Prediction /lifting/RAHT inverse transform processor — 13009

13005 — Inverse quantization processor

Color inverse transform processor — 13010

Sharing reconstructed position values

Renderer — 13011

# FIG. 14

EP 4 131 961 A1

# FIG. 15

Point Cloud Decoding

- Geometry compression
- Attribute #1 compression
- Attribute #N compression
- Auxiliary (e. g., metadata) data compression
- Mesh data compression

point cloud Acquisition

Point cloud stream(s)

File/segment Encapsulation

- Media track encapsulation
- Metadata track encapsulation

segment(s)

File

Orientation/ Viewport Metadata

Delivery

Metadata

# FIG. 16

# FIG. 17

# FIG. 18

| tlv_encapsulation( ) { | Descriptor |
|---|---|
| tlv_type | u(8) |
| tlv_num_payload_bytes | u(32) |
| for( i = 0; i < tlv_num_payload_bytes; i++ ) | |
| tlv_payload_byte[ i ] | u(8) |
| } | |

TLV Encapsulation

| TLV TYPE | TLV LENGTH | TLV PAYLOAD |
|---|---|---|

TLV payload can be on of the following

| Sequence Parameter Set | Geometry Parameter Set | Attribute Parameter Set |
|---|---|---|
| Tile Parameter Set (INventory) | Geometry Slice | Attribute Slice |

# FIG. 19

| seq_parameter_set( ) { | Descriptor |
|---|---|
| main_profile_compatibility_flag | u(1) |
| unique_point_positions_constraint_flag | u(1) |
| level_idc | u(8) |
| sps_seq_parameter_set_id | ue(v) |
| sps_bounding_box_present_flag | u(1) |
| if( sps_bounding_box_present_flag ) { | |
| sps_bounding_box_offset_x | se(v) |
| sps_bounding_box_offset_y | se(v) |
| sps_bounding_box_offset_z | se(v) |
| sps_bounding_box_offset_log2_scale | ue(v) |
| sps_bounding_box_size_width | ue(v) |
| sps_bounding_box_size_height | ue(v) |
| sps_bounding_box_size_depth | ue(v) |
| } | |
| sps_source_scale_factor_numerator_minus1 | ue(v) |
| sps_source_scale_factor_denominator_minus1 | ue(v) |
| sps_num_attribute_sets | ue(v) |
| for( i = 0; i< sps_num_attribute_sets; i++ ) { | |
| attribute_dimension_minus1[ i ] | ue(v) |
| attribute_instance_id[ i ] | ue(v) |
| if(attribute_dimension_minus1[ i ] > 0 ) | |
| attribute_secondary_bitdepth_minus1[ i ] | ue(v) |
| attribute_cicp_colour_primaries[ i ] | ue(v) |
| attribute_cicp_transfer_characteristics[ i ] | ue(v) |

| | |
|---|---|
| attribute_cicp_matrix_coeffs[ i ] | ue(v) |
| attribute_cicp_video_full_range_flag[ i ] | u(1) |
| known_attribute_label_flag[ i ] | u(1) |
| if( known_attribute_label_flag[ i ] ) | |
| known_attribute_label[ i ] | ue(v) |
| else | |
| attribute_label_four_bytes[ i ] | u(32) |
| } | |
| log2_max_frame_idx | u(5) |
| axis_coding_order | u(3) |
| sps_bypass_stream_enabled_flag | u(1) |
| sps_extension_flag | u(1) |
| if( sps_extension_flag ) | |
| while( more_data_in_byte_stream( ) ) | |
| sps_extension_data_flag | u(1) |
| byte_alignment( ) | |
| } | |

EP 4 131 961 A1

# FIG. 20

| tile_inventory( ) { | Descriptor |
|---|---|
|    tile_frame_idx | ? |
|    num_tiles_minus1 | u(16) |
|    for( i = 0; i <= num_tiles_minus1; i++ ) { | |
|       tile_bounding_box_offset_x[ i ] | se(v) |
|       tile_bounding_box_offset_y[ i ] | se(v) |
|       tile_bounding_box_offset_z[ i ] | se(v) |
|       tile_bounding_box_size_width[ i ] | ue(v) |
|       tile_bounding_box_size_height[ i ] | ue(v) |
|       tile_bounding_box_size_depth[ i ] | ue(v) |
|    } | |
|    byte_alignment( ) | |
| } | |

# FIG. 21

| geometry_parameter_set( ) { | Descriptor |
|---|---|
| gps_geom_parameter_set_id | ue(v) |
| gps_seq_parameter_set_id | ue(v) |
| gps_box_present_flag | u(1) |
| if( gps_box_present_flag ){ | |
| gps_gsh_box_log2_scale_present_flag | u(1) |
| if( gps_gsh_box_log2_scale_present_flag == 0 ) | |
| gps_gsh_box_log2_scale | ue(v) |
| } | |
| unique_geometry_points_flag | u(1) |
| geometry_planar_mode_flag | u(1) |
| if( geometry_planar_mode_flag ){ | |
| geom_planar_mode_th_idcm | ue(v) |
| geom_planar_mode_th[ 1 ] | ue(v) |
| geom_planar_mode_th[ 2 ] | ue(v) |
| } | |
| geometry_angular_mode_flag | u(1) |
| if( geometry_angular_mode_flag ){ | |
| lidar_head_position[0] | se(v) |
| lidar_head_position[1] | se(v) |
| lidar_head_position[2] | se(v) |
| number_lasers | ue(v) |
| for( i = 0; i < number_lasers; i++ ) { | |
| laser_angle[ i ] | se(v) |
| laser_correction[ i ] | se(v) |
| } | |

| | Descriptor |
|---|---|
| planar_buffer_disabled | u(1) |
| implicit_qtbt_angular_max_node_min_dim_log2_to_split_z | se(v) |
| implicit_qtbt_angular_max_diff_to_split_z | se(v) |
| } | |
| neighbour_context_restriction_flag | u(1) |
| inferred_direct_coding_mode_enabled_flag | u(1) |
| bitwise_occupancy_coding_flag | u(1) |
| adjacent_child_contextualization_enabled_flag | u(1) |
| log2_neighbour_avail_boundary | ue(v) |
| log2_intra_pred_max_node_size | ue(v) |
| log2_trisoup_node_size | ue(v) |
| geom_scaling_enabled_flag | u(1) |
| if( geom_scaling_enabled_flag ) | |
| geom_base_qp | ue(v) |
| gps_implicit_geom_partition_flag | u(1) |
| if( gps_implicit_geom_partition_flag ) { | |
| gps_max_num_implicit_qtbt_before_ot | ue(v) |
| gps_min_size_implicit_qtbt | ue(v) |
| } | |
| gps_extension _flag | u(1) |
| if( gps_extension _flag ) | |
| while( more_data_in_byte_stream( ) ) | |
| gps_extension_data_flag | u(1) |
| byte_alignment( ) | |
| } | |

EP 4 131 961 A1

# FIG. 22

| attribute_parameter_set( ) { | Descriptor |
|---|---|
| aps_attr_parameter_set_id | ue(v) |
| aps_seq_parameter_set_id | ue(v) |
| attr_coding_type | ue(v) |
| aps_attr_initial_qp | ue(v) |
| aps_attr_chroma_qp_offset | se(v) |
| aps_slice_qp_delta_present_flag | u(1) |
| LodParametersPresent = ( attr_coding_type == 0 \|\| attr_coding_type == 2 ) ? 1 : 0 | |
| if( LodParametersPresent) { | |
| lifting_num_pred_nearest_neighbours_minus1 | ue(v) |
| lifting_search_range_minus1 | ue(v) |
| for( k = 0; k < 3; k++ ) | |
| lifting_neighbour_bias[ k ] | ue(v) |
| if ( attr_coding_type == 2 ) | |
| lifting_scalability_enabled_flag | u(1) |
| if ( ! lifting_scalability_enabled_flag ) { | |
| lifting_num_detail_levels_minus1 | ue(v) |
| [Ed. The V7.0 code use the variable without minus1. It should be aligned] | |
| if ( lifting_num_detail_levels_minus1 > 0 ) { | |
| lifting_lod_regular_sampling_enabled_flag | u(1) |
| for( idx = 0; idx < num_detail_levels_minus1; idx++ ) { | |
| if ( lifting_lod_regular_sampling_enabled_flag ) | |
| lifting_sampling_period_minus2[ idx ] | ue(v) |
| else | |
| lifting_sampling_distance_squared_scale_minus1[ idx ] | ue(v) |

| | |
|---|---|
| if ( idx != 0 ) | |
| lifting_sampling_distance_squared_offset[ idx ] | ue(v) |
| } | |
| } | |
| } | |
| if( attr_coding_type == 0 ) { | |
| lifting_adaptive_prediction_threshold | ue(v) |
| lifting_intra_lod_prediction_num_layers | ue(v) |
| lifting_max_num_direct_predictors | ue(v) |
| inter_component_prediction_enabled_flag | u(1) |
| } | |
| } | |
| if( attribute_coding_type == 1 ) { //RAHT | |
| raht_prediction_enabled_flag | u(1) |
| if (raht_prediction_enabled_flag) { | |
| raht_prediction_threshold0 | ue(v) |
| raht_prediction_threshold1 | ue(v) |
| } | |
| } | |
| aps_extension_flag | u(1) |
| if( aps_extension_flag ) | |
| while( more_data_in_byte_stream( ) ) | |
| aps_extension_data_flag | u(1) |
| byte_alignment( ) | |
| } | |

EP 4 131 961 A1

# FIG. 23

| general_geometry_slice_bitstream( ) { | Descriptor |
|---|---|
| geometry_slice_header( ) | |
| geometry_slice_data( ) | |
| } | |

| geometry_slice_header( ) { | Descriptor |
|---|---|
| gsh_geometry_parameter_set_id | ue(v) |
| gsh_tile_id | ue(v) |
| gsh_slice_id | ue(v) |
| frame_idx | u(n) |
| gsh_num_points | u(24) |
| if( gps_box_present_flag ) { | |
| if( gps_gsh_box_log2_scale_present_flag ) | |
| gsh_box_log2_scale | ue(v) |
| gsh_box_origin_x | ue(v) |
| gsh_box_origin_y | ue(v) |
| gsh_box_origin_z | ue(v) |
| } | |
| if ( gps_implicit_geom_partition_flag ) { | |
| gsh_log2_max_nodesize_x | ue(v) |
| gsh_log2_max_nodesize_y_minus_x | se(v) |
| gsh_log2_max_nodesize_z_minus_y | se(v) |
| } else { | |
| gsh_log2_max_nodesize | ue(v) |
| } | |
| if( geom_scaling_enabled_flag ) { | |
| geom_slice_qp_offset | se(v) |
| geom_octree_qp_offsets_enabled_flag | u(1) |
| if( geom_octree_qp_offsets_enabled_flag ) | |
| geom_octree_qp_offsets_depth | ue(v) |
| } | |
| byte_alignment( ) | |
| } | |

# FIG. 24

| general_attribute_slice_bitstream( ) { | Descriptor |
|---|---|
| attribute_slice_header( ) | |
| attribute_slice_data( ) | |
| } | |

| attribute_slice_header( ) { | Descriptor |
|---|---|
| ash_attr_parameter_set_id | ue(v) |
| ash_attr_sps_attr_idx | ue(v) |
| ash_attr_geom_slice_id | ue(v) |
| if ( aps_slice_qp_delta_present_flag ) { | |
| ash_attr_qp_delta_luma | se(v) |
| if( attribute_dimension_minus1[ ash_attr_sps_attr_idx ] > 0 ) | |
| ash_attr_qp_delta_chroma | se(v) |
| } | |
| ash_attr_layer_qp_delta_present_flag | u(1) |
| if ( ash_attr_layer_qp_delta_present_flag ) { | |
| ash_attr_num_layer_qp_minus1 | ue(v) |
| for( i = 0; i < NumLayerQp; i++ ){ | |
| ash_attr_layer_qp_delta_luma[i] | se(v) |
| if( attribute_dimension_minus1[ ash_attr_sps_attr_idx ] > 0 ) | |
| ash_attr_layer_qp_delta_chroma[i] | se(v) |
| } | |
| } | |
| ash_attr_region_qp_delta_present_flag | u(1) |
| if ( ash_attr_region_qp_delta_present_flag ) { | |
| ash_attr_qp_region_box_origin_x | ue(v) |
| ash_attr_qp_region_box_origin_y | ue(v) |
| ash_attr_qp_region_box_origin_z | ue(v) |
| ash_attr_qp_region_box_width | ue(v) |
| ash_attr_qp_region_box_height | ue(v) |
| ash_attr_qp_region_box_depth | ue(v) |
| ash_attr_region_qp_delta | se(v) |
| } | |
| byte_alignment( ) | |
| } | |

FIG. 25

```
aligned(8) class GPCCParameterSetStruct {
        unsigned int(8)      numOfSetupUnitArrays;
        for (i=0; i< numOfSetupUnitArrays; i++) {
                unsigned int(7)      setupUnitType;
                bit(1)                      setupUnit_completeness;
                unsigned int(8)      numOfSetupUnits;
                for (i=0; i<numOfSetupUnits; i++) {
                              tlv_encapsulation   setupUnit;
                }
        }
        // additional fields
}
```

# FIG. 26

| Sample | | |
|---|---|---|
| Parameter Set TLV (if, present) | Geometry TLV | $AttriBute_0$ TLV (if, present) |

FIG. 27

| ftyp | | moov | | mdat | |
|------|--|------|--|------|--|

Track 1 (geometry)

Track 2 (geometry)

geometry bitstream

Attribute bitstream

## FIG. 28

| G-PCC Sample | |
|---|---|
| Parameter Set TLV (if, present) | Geometry TLV |

# FIG. 29

```
aligned(8) class
GPCCParameterSetSampleEntry extends
MetadataSampleEntry('dyps') {
        GPCCParameterSetBox ();
}
```

```
aligned(8) class GPCCParameterSetSample {
        unsigned int(14) num_active_parameters;
        unsigned int(1) addl_active_parameters;
        for (i = 0; i < num_active_parameters; i++){
        unsigned int(16) active_parameter_set_type;
        unsigned int(16) active_parameter_set_id;
   }
        if(addl_active_parameters)
                GPCCParameterSetStruct ();
}
```

# FIG. 30

| tile_inventory( ) { | Descriptor |
|---|---|
| tile_frame_idx | tbu |
| tile_seq_parameter_set_id | u(7) |
| tile_id_present_flag | u(1) |
| tile_cnt | u(16) |
| tile_bounding_box_bits | u(8) |
| for( tileIdx = 0; tileIdx < tile_cnt; tileIdx++ ) { | |
| if( tile_id_present_flag ) | |
| tile_id | ue(v) |
| for( k = 0; k < 3; k++ ) | |
| tile_bounding_box_offset_xyz[ tile_id ][ k ] | s(v) |
| for( k = 0; k < 3; k++ ) | |
| tile_bounding_box_size_xyz[ tile_id ][ k ] | u(v) |
| } | |
| for( k = 0; k < 3; k++ ) | |
| tile_origin_xyz[ k ] | se(v) |
| tile_origin_log2_scale | ue(v) |
| byte_alignment( ) | |
| } | |

# FIG. 31

```
aligned(8) class TileInfoStruct()
{
        unsinged int(16)        tile_id;
        unsinged int(16)        tile_frame_idx;
        unsigned int(16)        tile_bounding_box_offset_x;
        unsigned int(16)        tile_bounding_box_offset_y;
        unsigned int(16)        tile_bounding_box_offset_z;
        unsigned int(16)        tile_bounding_box_size_width;
        unsigned int(16)        tile_bounding_box_size_height;
        unsigned int(16)        tile_bounding_box_size_depth;

}
```

# FIG. 32

```
aligned(8) class TileInventoryBox extends FullBox('gpti', 0, 0)
{
        TileInventoryStruct ();
{
aligned(8) class TileInventoryStruct()
{
            unsinged int(16)    tile_frame_idx;
            unsigned int(16)    num_tiles_minus1;
            for(i=0; I < num_tiles_minus1 ; i++){
                    unsinged int(16)      tile_id;
                        unsigned int(16)    tile_bounding_box_offset_x[i];
                    unsigned int(16)      tile_bounding_box_offset_y[i];
                    unsigned int(16)      tile_bounding_box_offset_z[i];
                    unsigned int(16)      tile_bounding_box_size_width[i];
                    unsigned int(16)      tile_bounding_box_size_height[i];
                    unsigned int(16)      tile_bounding_box_size_depth[i];
            }
            unsigned int(16)    tile_origin_log2_scale;
            unsigned int(32)    tile_origin_x;
            unsigned int(32)    tile_origin_y;
            unsigned int(32)    tile_origin_z;

}
```

FIG. 33

```
                              gpbt          ┌─────────────────────┐
                              ┌────────────▶│   G-PCC tile track   │
                              │             └─────────────────────┘
  ┌─────────────────┐         │
  │  G-PCC base      │        │
  │  track           │────────┤
  └─────────────────┘         │
                              │             ┌─────────────────────┐
                              └────────────▶│   G-PCC tile track   │
                              gpbt          └─────────────────────┘
```

# FIG. 34

S3400 — | Encoding point cloud data |

S3410 — | Encapsuating point cloud data |

S3420 — | Transmitting point cloud data |

# FIG. 35

| | |
|---|---|
| S3500 | Receiving point cloud data |

↓

| | |
|---|---|
| S3510 | Decapsulating point cloud data |

↓

| | |
|---|---|
| S3520 | Decoding point cloud data |

<div align="center">**INTERNATIONAL SEARCH REPORT**</div>

| | International application No. |
|---|---|
| | **PCT/KR2021/004261** |

| A. | CLASSIFICATION OF SUBJECT MATTER |
|---|---|

**H04N 19/597**(2014.01)i; **H04N 19/70**(2014.01)i; **H04N 19/42**(2014.01)i; **H04N 19/137**(2014.01)i; **H04N 19/60**(2014.01)i; **G06T 9/40**(2006.01)i; **H04N 19/423**(2014.01)i; **H04N 19/184**(2014.01)i; **G06T 9/00**(2006.01)i

According to International Patent Classification (IPC) or to both national classification and IPC

| B. | FIELDS SEARCHED |
|---|---|

Minimum documentation searched (classification system followed by classification symbols)

H04N 19/597(2014.01); G06F 17/50(2006.01); G06F 3/06(2006.01); G06T 17/10(2006.01); G06T 9/00(2006.01); H04N 21/2343(2011.01); H04N 21/4402(2011.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 포인트 클라우드(point cloud), 파일(file), 파라미터 세트(parameter set), 타일 트랙(tile track), 베이스 트랙(base track)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2020-071703 A1 (LG ELECTRONICS INC.) 09 April 2020 (2020-04-09)<br>See paragraphs [0335], [0347], [0868] and [1103]; claim 1; and figures 22 and 57. | 1-2,6-7,11-12,16-17 |
| Y | | 3-5,8-10,13-15,18-20 |
| Y | WO 2020-008106 A1 (NOKIA TECHNOLOGIES OY) 09 January 2020 (2020-01-09)<br>See paragraph [0204]. | 3-5,8-10,13-15,18-20 |
| A | US 2019-0087979 A1 (APPLE INC.) 21 March 2019 (2019-03-21)<br>See paragraphs [0418]-[0468]; and figures 4A-4D and 8A-11B. | 1-20 |
| A | US 2018-0137224 A1 (GOOGLE INC.) 17 May 2018 (2018-05-17)<br>See paragraphs [0107]-[0139]; and figures 9-12. | 1-20 |

| ✓ Further documents are listed in the continuation of Box C. | ✓ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **26 July 2021** | **03 August 2021** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT

| International application No. |
|---|
| **PCT/KR2021/004261** |

**C.    DOCUMENTS CONSIDERED TO BE RELEVANT**

| Category* | Citation of document, with indication, where appropriate, of the relevant passages | Relevant to claim No. |
|---|---|---|
| A | US 2018-0053324 A1 (MITSUBISHI ELECTRIC RESEARCH LABORATORIES, INC.) 22 February 2018 (2018-02-22)<br>See paragraphs [0017]-[0109]; and figures 1-6. | 1-20 |

Form PCT/ISA/210 (second sheet) (July 2019)

<table>
<tr><td colspan="4" align="center">INTERNATIONAL SEARCH REPORT<br>Information on patent family members</td><td colspan="2">International application No.<br>**PCT/KR2021/004261**</td></tr>
<tr><td colspan="2" align="center">Patent document<br>cited in search report</td><td align="center">Publication date<br>(day/month/year)</td><td colspan="2" align="center">Patent family member(s)</td><td align="center">Publication date<br>(day/month/year)</td></tr>
<tr><td colspan="2">WO   2020-071703   A1</td><td>09 April 2020</td><td>US</td><td>2020-0153885   A1</td><td>14 May 2020</td></tr>
<tr><td colspan="2">WO   2020-008106   A1</td><td>09 January 2020</td><td>EP</td><td>3818716   A1</td><td>12 May 2021</td></tr>
<tr><td colspan="2">US   2019-0087979   A1</td><td>21 March 2019</td><td>CN</td><td>111133476   A</td><td>08 May 2020</td></tr>
<tr><td colspan="2"></td><td></td><td>KR</td><td>10-2020-0038534   A</td><td>13 April 2020</td></tr>
<tr><td colspan="2"></td><td></td><td>US</td><td>10607373   B2</td><td>31 March 2020</td></tr>
<tr><td colspan="2"></td><td></td><td>US</td><td>10699444   B2</td><td>30 June 2020</td></tr>
<tr><td colspan="2"></td><td></td><td>US</td><td>10789733   B2</td><td>29 September 2020</td></tr>
<tr><td colspan="2"></td><td></td><td>US</td><td>10867413   B2</td><td>15 December 2020</td></tr>
<tr><td colspan="2"></td><td></td><td>US</td><td>10909725   B2</td><td>02 February 2021</td></tr>
<tr><td colspan="2"></td><td></td><td>US</td><td>2019-0087978   A1</td><td>21 March 2019</td></tr>
<tr><td colspan="2"></td><td></td><td>US</td><td>2019-0156518   A1</td><td>23 May 2019</td></tr>
<tr><td colspan="2"></td><td></td><td>US</td><td>2019-0156519   A1</td><td>23 May 2019</td></tr>
<tr><td colspan="2"></td><td></td><td>US</td><td>2019-0156520   A1</td><td>23 May 2019</td></tr>
<tr><td colspan="2"></td><td></td><td>US</td><td>2019-0311500   A1</td><td>10 October 2019</td></tr>
<tr><td colspan="2"></td><td></td><td>US</td><td>2019-0313110   A1</td><td>10 October 2019</td></tr>
<tr><td colspan="2"></td><td></td><td>US</td><td>2020-0007867   A1</td><td>02 January 2020</td></tr>
<tr><td colspan="2"></td><td></td><td>US</td><td>2020-0014953   A1</td><td>09 January 2020</td></tr>
<tr><td colspan="2"></td><td></td><td>US</td><td>2020-0021847   A1</td><td>16 January 2020</td></tr>
<tr><td colspan="2"></td><td></td><td>US</td><td>2020-0193645   A1</td><td>18 June 2020</td></tr>
<tr><td colspan="2"></td><td></td><td>US</td><td>2020-0273208   A1</td><td>27 August 2020</td></tr>
<tr><td colspan="2"></td><td></td><td>US</td><td>2021-0150765   A1</td><td>20 May 2021</td></tr>
<tr><td colspan="2"></td><td></td><td>WO</td><td>2019-055963   A1</td><td>21 March 2019</td></tr>
<tr><td colspan="2">US   2018-0137224   A1</td><td>17 May 2018</td><td>CN</td><td>109716329   A</td><td>03 May 2019</td></tr>
<tr><td colspan="2"></td><td></td><td>EP</td><td>3324310   A1</td><td>23 May 2018</td></tr>
<tr><td colspan="2"></td><td></td><td>EP</td><td>3324310   B1</td><td>09 September 2020</td></tr>
<tr><td colspan="2"></td><td></td><td>US</td><td>10430975   B2</td><td>01 October 2019</td></tr>
<tr><td colspan="2"></td><td></td><td>US</td><td>10496336   B2</td><td>03 December 2019</td></tr>
<tr><td colspan="2"></td><td></td><td>US</td><td>2018-0137653   A1</td><td>17 May 2018</td></tr>
<tr><td colspan="2"></td><td></td><td>WO</td><td>2018-093886   A1</td><td>24 May 2018</td></tr>
<tr><td colspan="2">US   2018-0053324   A1</td><td>22 February 2018</td><td>EP</td><td>3501005   A1</td><td>26 June 2019</td></tr>
<tr><td colspan="2"></td><td></td><td>JP</td><td>2019-521417   A</td><td>25 July 2019</td></tr>
<tr><td colspan="2"></td><td></td><td>JP</td><td>6676193   B2</td><td>08 April 2020</td></tr>
<tr><td colspan="2"></td><td></td><td>WO</td><td>2018-034253   A1</td><td>22 February 2018</td></tr>
</table>

Form PCT/ISA/210 (patent family annex) (July 2019)